(19) Europäisches Patentamt
European Patent Office
Office européen des brevets

(11) EP 1 700 861 B1

(12) **EUROPÄISCHE PATENTSCHRIFT**

(45) Veröffentlichungstag und Bekanntmachung des Hinweises auf die Patenterteilung:
**15.08.2007 Patentblatt 2007/33**

(51) Int Cl.:
***C07F 7/18*** (2006.01)

(21) Anmeldenummer: **06110685.2**

(22) Anmeldetag: **06.03.2006**

(54) **Verfahren zur Herstellung von Organosilanen**

Process for preparing organosilanes

Procédé de preparation de composés organosiliciques

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.03.2005 DE 102005010294**
**12.07.2005 DE 102005032428**
**02.11.2005 DE 102005052233**

(43) Veröffentlichungstag der Anmeldung:
**13.09.2006 Patentblatt 2006/37**

(73) Patentinhaber: **Degussa GmbH**
**40474 Düsseldorf (DE)**

(72) Erfinder:
- **Korth, Karsten**
**79639, Grenzach-Wyhlen (DE)**
- **Albert, Philipp**
**79539, Lörrach (DE)**
- **Kiefer, Ingo**
**79650, Schopfheim (DE)**
- **Frings, Albert**
**50321, Brühl (DE)**
- **Janssens, Louis**
**2170, Merksem (BE)**
- **Mertsch, Horst**
**79618, Rheinfelden (DE)**

(56) Entgegenhaltungen:
**EP-A- 0 848 006** **EP-A- 1 130 023**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 700 861 B1

## Beschreibung

Die Erfindung betrifft ein Verfahren zur Herstellung von Organosilanen.

Aus GB 1 102 251 ist die Umsetzung von wasserfreien Alkalihydrogensulfiden mit (Halogenalkyl)alkoxysilanen in methanolischem Medium zu den entsprechenden (Mercaptoalkyl)alkoxysilanen bei Normaldruck bekannt. Nachteilig bei dieser Verfahrensweise ist die zur Erzielung hoher Umsatzraten außergewöhnlich lange Reaktionszeit (96 h) und die dabei erzielte unbefriedigende Ausbeute.

Es ist bekannt (Mercaptoalkyl)alkoxysilane durch die Umsetzung von wasserfreiem Alkalihydrogensulfid mit geeigneten (Halogenalkyl)alkoxysilanen unter Anwesenheit von 10-100 % molarem Überschuss an $H_2S$ herzustellen (US 5,840,952). Das Alkalihydrogensulfid wird vor der Zugabe des (Halogenalkyl)alkoxysilans bevorzugt durch die Reaktion von Alkalisulfid $Me_2S$ (Me = Li, Na, K) mit $H_2S$ oder durch die Reaktion von $H_2S$ mit Alkalialkoholat gebildet. Dieses Verfahren hat im industriellen Maßstab den Nachteil, daß hochgiftiges $H_2S$ bevorratet, dosiert und gehandhabt werden muß und das Verfahren in 2 Stufen durchgeführt wird, wodurch die Raum-Zeit-Ausbeute des Verfahrens grundsätzlich sinkt.

Ferner ist bekannt (Mercaptoalkyl)alkoxysilane durch die Umsetzung von (Halogenalkyl)alkoxysilanen mit wasserfreiem Alkalihydrogensulfid (NaSH) in polaren, aprotischen Lösungsmitteln herzustellen (EP 0 471 164). Der Nachteil des Verfahrens besteht darin, daß große Mengen, mindestens 50 Vol.-%, Lösungsmittel verwendet werden und dieses beispielsweise im Falle von Dimethylformamid giftig ist. Zudem erschwert der hohe Siedepunkt von Dimethylformamid die spätere destillative Aufarbeitung der Reaktionsprodukte.

Aus DE 103 517 35 ist ein Verfahren zur Herstellung von (Mercaptoorganyl)alkoxysilanen bekannt, wobei man wasserfreies, getrocknetes Alkalihydrogensulfid mit einem Gemisch aus (Halogenorganyl)alkoxysilan und (Halogenorganyl)halogensilan in einem Alkohol in einem geschlossenen Gefäß unter Luftabschluß und einem erhöhten Druck umsetzt. Nachteilig bei diesem Verfahren ist der Einsatz von wasserfreiem Alkalihydrogensulfid.

Aus EP 1130023 ist die Herstellung von Organosilylalkylpolysulfanen der allgemeinen Formel

$$(R^1R^2R^3Si\text{-}R^4\text{-})_2S_q$$

aus dem Organosilylalkylhalogenid der allgemeinen Formel

$$R^1R^2R^3Si\text{-}R^4\text{-}X$$

bekannt. Die Umsetzung wird durchgeführt, in dem in einem polaren organischen Lösungsmittel elementarer Schwefel und das Organylalkylhalogenid vorgelegt und zu dieser Suspension wasserfreies bzw. nahezu wasserfreies ionisches Sulfid gegeben wird. Wegen der Hydrolyseanfälligkeit der Si-Alkoxy-Bindungen des Organosilylalkylhalogenids müssen die ionischen Sulfide wasserfrei bzw. nahezu wasserfrei sein.

Aufgabe der vorliegenden Erfindung ist es, ein Verfahren zur Herstellung von Organosilanen zur Verfügung zu stellen, das kurze Reaktionszeiten bei guten Rohproduktausbeuten ermöglicht und bei dem wasserhaltige Schwefelungsreagenzien verwendet werden können.

Gegenstand der Erfindung ist ein Verfahren zur Herstellung von Organosilanen der allgemeinen Formel I,

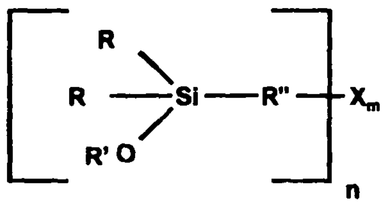

I

wobei

R gleich oder verschieden und eine $C_1$-$C_8$-Alkyl-, vorzugsweise $CH_3$ oder $CH_2CH_3$, $C_1$-$C_8$-Alkenyl-, $C_1$-$C_8$-Aryl-, $C_1$-$C_8$-Aralkylgruppe oder eine OR' Gruppe ist, R' gleich oder verschieden und eine $C_1$-$C_{24}$ -, vorzugsweise $C_1$-$C_4$ - oder $C_{12}$-$C_{18}$-, besonders bevorzugt $CH_2CH_3$, verzweigte oder unverzweigte einbindige Alkyl- oder Alkenyl-Gruppe, eine Arylgruppe, eine Aralkylgruppe, ein Wasserstoff, eine Alkylethergruppe O-$(CR^{III}_2)$-O-Alk oder O-$(CR^{III}_2)_y$-O-Alk oder eine Alkylpolyethergruppe O-$(CR^{III}_2O)_y$-Alk oder O-$(CR^{III}_2$-$CR^{III}_2$-$O)_y$-Alk, mit y = 2-20, bevorzugt 2-10, besonders bevorzugt 3-6, $R^{III}$ unabhängig voneinander H oder eine Alkylgruppe, vorzugsweise $CH_3$-Gruppe, ist und Alk eine verzweigte oder unverzweigte, gesättigte oder ungesättigte, aliphatische, aromatische oder gemischt aliphatische /aromatische einbindige $C_1$-$C_{30}$-, bevorzugt $C_2$-$C_{20}$-, besonders bevorzugt $C_6$-$C_{18}$-, ganz besonders bevorzugt $C_{10}$-$C_{18}$-, Koh-

lenwasserstoffgruppe ist, ist, R" eine verzweigte oder unverzweigte, gesättigte oder ungesättigte, aliphatische, aromatische oder gemischt aliphatische /aromatische zweibindige $C_1$-$C_{30}$-, bevorzugt $C_1$-$C_{20}$-, besonders bevorzugt $C_1$-$C_{10}$-, ganz besonders bevorzugt $C_1$-$C_7$-, Kohlenwasserstoffgruppe, die gegebenenfalls mit F-, Cl-, Br-, I-, HS-, $NH_2$-, oder NHR' substituiert ist, ist,
X = S wenn n=2 und m eine mittlere Schwefelkettenlänge von 1,5 bis 4,5 ist und
X = SH wenn n=1 und m=1 ist,
durch Umsetzung von (Halogenorganyl)alkoxysilan der Formel II,

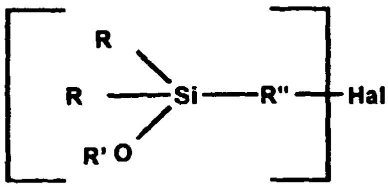

II

wobei R, R' und R" die oben angegebenen Bedeutungen haben und Hal Chlor, Brom, Fluor oder Iod ist, mit einem Schwefelungsreagenz, ausgewählt aus der Gruppe Alkalihydrogensulfid, Metallsulfid $Me_2S$, Metallpolysulfid $Me_2Sg$ und beliebige Kombinationen hiervon, mit Me= Alkalimetall, $NH_4$ oder $(\text{Erdalkalimetall})_{1/2}$, und g=1,5-8,0, und gegebenenfalls zusätzlich mit Schwefel und/oder mit $H_2S$ in Alkohol, welches dadurch gekennzeichnet ist, daß das $Me_2S$ oder $Me_2Sg$ mehr als 10 Gew.-%, vorzugsweise mehr als 15 Gew.-%, besonders bevorzugt mehr als 20 Gew.-%, ganz besonders bevorzugt mehr als 30 Gew.-%, Wasser und das Alkalihydrogensulfid mehr als 3 Gew.-%, vorzugsweise mehr als 5 Gew.-%, besonders bevorzugt mehr als 10 Gew.-%, ganz besonders bevorzugt mehr als 12 Gew.-%, außerordentlich bevorzugt mehr als 15 Gew.-%, Wasser enthält und man vor oder während der Reaktion Additive, ausgewählt aus der Gruppe nichtalkoholische Lösungsmittel, polare, protische, aprotische, basische oder saure Additive, zugibt.

Überraschenderweise wird gefunden, daß das in den Schwefelungsreagenzien enthaltene Wasser zu keiner vollständigen Hydrolyse und Kondensation der Alkoxysilane führt, obwohl basische Reaktionsbedingungen vorliegen und stöchiometrisch mehr Wasser vorliegt als benötigt wird, um alle vorhandenen SiOR-Bindungen in SiOH und in der Folge durch Kondensation in entsprechende Si-O-Si-Bindungen enthaltende Siloxane umzuwandeln.

R'' kann $-CH_2-$, $-CH_2CH_2-$, $-CH_2CH_2CH_2-$, $-CH_2CH_2CH_2CH_2-$, $-CH(CH_3)-$, $-CH_2CH(CH_3)-$, $-CH(CH_3)CH_2-$, $-C(CH_3)_2-$, $CH(C_2H_5)-$, $-CH_2CH_2CH(CH_3)-$, $-CH_2CH(CH_3)CH_2-$
oder

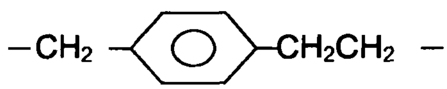

bedeuten.

Das Schwefelungsreagenz und gegebenenfalls Schwefel und/oder $H_2S$ kann Alkalihydrogensulfid, $Me_2S$, $Me_2Sg$, Alkalihydrogensulfid + Schwefel, $Me_2S$ + Schwefel, $Me_2Sg$ + Schwefel, Alkalihydrogensulfid + $Me_2Sg$ + $Me_2S$, $Me_2Sg$ + $Me_2S$, Alkalihydrogensulfid + $Me_2S$ + Schwefel, Alkalihydrogensulfid + $Me_2Sg$ + Schwefel, $Me_2S$ + $Me_2Sg$ + Schwefel, Alkalihydrogensulfid + $Me_2Sg$ + $Me_2S$ + Schwefel, $H_2S$ + $Me_2Sg$ + $Me_{2S}$ + Schwefel, $H_2S$ + Alkalihydrogensulfid + $Me_2Sg$ + $Me_2S$ + Schwefel, $H_2S$ + Alkalihydrogensulfid + $Me_2Sg$ + $Me_2S$, $H_2S$ + Alkalihydrogensulfid + $Me_2S$, $H_2S$ + Alkalihydrogensulfid + $Me_2S_g$, $H_2S$ + $Me_2S$ + Schwefel, $H_2S$ + $Me_2S_g$ + Schwefel, $H_2S$ + $Me_2Sg$ + $Me_2S$, $H_2S$ + $Me_2S_g$ und $H_2S$ + $Me_2S$ sein.

Als Alkalihydrogensulfid kann Lithiumhydrogensulfid (LiSH), Natriumhydrogensulfid (NaSH), Kaliumhydrogensulfid (KSH) und Cäsiumhydrogensulfid (CsSH) eingesetzt werden.

Als Alkalisulfid $Me_2S$ oder Alkalipolysulfid $Me_2S_g$ können $Li_2S$, $Na_2S$, $K_2S$, $Na_2S_2$, $Na_2S_3$, $Na_2S_4$, $K_2S_2$, $K_2S_3$, $K_2S_4$ oder Mischungen hiervon eingesetzt werden.

Die wasserhaltigen Schwefelungsreagenzien können weniger als 60 Gew.-%, bevorzugt weniger als 50 Gew.-%, besonders bevorzugt weniger als 40 Gew.-%, ganz besonders bevorzugt weniger als 35 Gew.-% Wasser enthalten.

Die wasserhaltigen Schwefelungsreagenzien können zwischen 10 und 60 Gew.-%, bevorzugt zwischen 10 und 50 Gew.-%, besonders bevorzugt zwischen 15 und 50 Gew.-%, Wasser enthalten.

Der Wassergehalt der Schwefelungsreagenzien wird folgendermaßen bestimmt: Für die Wassergehaltsbestimmung werden Glasperlen angehaucht, mit Phosphorpentoxid belegt und anschließend in ein U-Rohr gefüllt. Ca. 3g

der Probe werden in einen 50 ml Kolben eingewogen, unter mit Sicapent getrocknetem Stickstoffstrom (30ml/min) 2 Stunden lang bei 320°C ausgeheizt und anschließend noch 30 min unter Stickstoffstrom stehen gelassen. Das feuchte Trägergas wird über eine Schlauchverbindung vom Kolben in das U-Rohr geleitet. Mögliche Kondensationen zwischen Kolben und U-Rohr werden während der Ausheizphase mit Hilfe eines Föns ausgetrieben. Das U-Rohr wird zurückgewogen und die aus den Schwefelungsreagenzien freigesetzte Wassermenge gravimetrisch bestimmt.

Es können bei dem erfindungsgemäßen Verfahren zur Herstellung von Organosilanen Verbindungen der allgemeinen Formel I oder auch Mischungen aus Verbindungen der allgemeinen Formel I entstehen.

Die bei dem erfindungsgemäßen Verfahren entstehenden Verbindungen der allgemeinen Formel I oder die Mischungen aus Verbindungen der allgemeinen Formel I können Wassergehalte von kleiner 3 Gew.-%, bevorzugt kleiner 2 Gew.-%, besonders bevorzugt kleiner 1 Gew.-%, ganz besonders bevorzugt kleiner als 0,5 Gew.-%, enthalten, gemessen nach DIN ENISO 12937 inklusive einer iodometrischer Rücktitration, um $H_2O$- und HS-Spezies ($H_2S$ etc.) unterscheiden zu können.

Die Alkylpolyethergruppe in Formel I und II kann Ethylenoxid- ($CH_2$-$CH_2$-O) und Propylenoxid-Einheiten, beispielsweise ($CH(CH_3)$-$CH_2$-O) oder ($CH_2$-$CH(CH_3)$-O), enthalten.

Die Alkylpolyethergruppe O-($CR^{III}{}_2O)_y$-Alk oder O-($CR^{III}{}_2$-$CR^{III}{}_2O)_y$-Alk kann sein

O-($CH_2$-$CH_2O)_2$-$C_8H_{17}$, O-($CH_2$-$CH_2O)_3$-$C_8H_{17}$, O-($CH_2$-$CH_2O)_4$-$C_8H_{17}$, O-($CH_2$-$CH_2O)_5$-$C_8H_{17}$, O-($CH_2$-$CH_2O)_6$-$C_8H_{17}$, O-($CH_2$-$CH_2O)_7$-$C_8H_{17}$,

O-($CH(CH_3)$-$CH_2O)_2$-$C_8H_{17}$, O-($CH(CH_3)$-$CH_2O)_3$-$C_8H_{17}$, O-($CH(CH_3)$-$CH_2O)_4$-$C_8H_{17}$, O-($CH(CH_3)$-$CH_2O)_5$-$C_8H_{17}$, O-($CH(CH_3)$-$CH_2O)_6$-$C_8H_{17}$, O-($CH(CH_3)$-$CH_2O)_7$-$C_8H_{17}$,

O-($CH_2$-$CH_2O)_2$-$C_9H_{19}$, O-($CH_2$-$CH_2O)_3$-$C_9H_{19}$, O-($CH_2$-$CH_2O)_4$-$C_9H_{19}$, O-($CH_2$-$CH_2$O)5-$C_9H_{19}$, O-($CH_2$-$CH_2O)_6$-$C_9H_{19}$, O-($CH_2$-$CH_2O)_7$-$C_9H_{19}$,

O-($CH(CH_3)$-$CH_2O)_2$-$C_9H_{19}$, O-($CH(CH_3)$-$CH_2O)_3$-$C_9H_{19}$, O-($CH(CH_3)$-$CH_2O)_4$-$C_9H_{19}$, O-($CH(CH_3)$-$CH_2O)_5$-$C_9H_{19}$, O-($CH(CH_3)$-$CH_2O)_6$-$C_9H_{19}$, O-($CH(CH_3)$-$CH_2$O)7-$C_9H_{19}$,

O-($CH_2$-$CH_2$O)2-$C_{10}H_{21}$, O-($CH_2$-$CH_2$O)3-$C_{10}H_{21}$, O-($CH_2$-$CH_2$O)4-$C_{10}H_{21}$, O-($CH_2$-$CH_2O)_5$-$C_{10}H_{21}$, O-($CH_2$-$CH_2O)_6$-$C_{10}H_{21}$, O-($CH_2$-$CH_2O)_7$-$C_{10}H_{21}$,

O-($CH(CH_3)$-$CH_2O)_2$-$C_{10}H_{21}$, O-($CH(CH_3)$-$CH_2O)_3$-$C_{10}H_{21}$, O-($CH(CH_3)$-$CH_2O)_4$-$C_{10}H_{21}$, O-($CH(CH_3)$-$CH_2O)_5$-$C_{10}H_{21}$, O-($CH(CH_3)$-$CH_2O)_6$-$C_{10}H_{21}$, O-($CH(CH_3)$-$CH_2O)_7$-$C_{10}H_{21}$,

O-($CH_2$-$CH_2O)_2$-$C_{11}H_{23}$, O-($CH_2$-$CH_2O)_3$-$C_{11}H_{23}$, O-($CH_2$-$CH_2O)_4$-$C_{11}H_{23}$, O-($CH_2$-$CH_2O)_5$-$C_{11}H_{23}$, O-($CH_2$-$CH_2$-$O)_6$-$C_{11}H_{23}$, O-($CH_2$-$CH_2O)_7$-$C_{11}H_{23}$,

O-($CH(CH_3)$-$CH_2O)_2$-$C_{11}H_{23}$, O-($CH(CH_3)$-$CH_2O)_3$-$C_{11}H_{23}$, O-($CH(CH_3)$-$CH_2O)_4$-$C_{11}H_{23}$, O-($CH(CH_3)$-$CH_2O)_5$-$C_{11}H_{23}$, O-($CH(CH_3)$-$CH_2O)_6$-$C_{11}H_{23}$, O-($CH(CH_3)$-$CH_2O)_7$-$C_{11}H_{23}$,

O-($CH_2$-$CH_2O)_2$-$C_{12}H_{25}$, O-($CH_2$-$CH_2O)_3$-$C_{12}H_{25}$, O-($CH_2$-$CH_2O)_4$-$C_{12}H_{25}$, O-($CH_2$-$CH_2O)_5$-$C_{12}H_{25}$, O-($CH_2$-$CH_2$-$O)_6$-$C_{12}H_{25}$, O-($CH_2$-$CH_2O)_7$-$C_{12}H_{25}$,

O-($CH(CH_3)$-$CH_2O)_2$-$C_{12}H_{25}$, O-($CH(CH_3)$-$CH_2O)_3$-$C_{12}H_{25}$, O-($CH(CH_3)$-$CH_2O)_4$-$C_{12}H_{25}$, O-($CH(CH_3)$-$CH_2O)_5$-$C_{12}H_{25}$, O-($CH(CH_3)$-$CH_2O)_6$-$C_{12}H_{25}$, O-($CH(CH_3)$-$CH_2O)_7$-$C_{12}H_{25}$,

O-($CH_2$-$CH_2O)_2$-$C_{13}H_{27}$, O-($CH_2$-$CH_2O)_3$-$C_{13}H_{27}$, O-($CH_2$-$CH_2O)_4$-$C_{13}H_{27}$, O-($CH_2$-$CH_2O)_5$-$C_{13}H_{27}$, O-($CH_2$-$CH_2$-$O)_6$-$C_{13}H_{27}$, O-($CH_2$-$CH_2O)_7$-$C_{13}H_{27}$,

O-($CH(CH_3)$-$CH_2O)_2$-$C_{13}H_{27}$, O-($CH(CH_3)$-$CH_2O)_3$-$C_{13}H_{27}$, O-($CH(CH_3)$-$CH_2O)_4$-$C_{13}H_{27}$, O-($CH(CH_3)$-$CH_2O)_5$-$C_{13}H_{27}$, O-($CH(CH_3)$-$CH_2O)_6$-$C_{13}H_{27}$, O-($CH(CH_3)$-$CH_2O)_7$-$C_{13}H_{27}$,

O-($CH_2$-$CH_2O)_2$-$C_{14}H_{29}$, O-($CH_2$-$CH_2O)_3$-$C_{14}H_{29}$, O-($CH_2$-$CH_2O)_4$-$C_{14}H_{29}$, O-($CH_2$-$CH_2O)_5$-$C_{14}H_{29}$, O-($CH_2$-$CH_2$-$O)_6$-$C_{14}H_{29}$, O-($CH_2$-$CH_2O)_7$-$C_{14}H_{29}$,

O-($CH(CH_3)$-$CH_2O)_2$-$C_{14}H_{29}$, O-($CH(CH_3)$-$CH_2O)_3$-$C_{14}H_{29}$, O-($CH(CH_3)$-$CH_2O)_4$-$C_{14}H_{29}$, O-($CH(CH_3)$-$CH_2O)_5$-$C_{14}H_{29}$, O-($CH(CH_3)$-$CH_2O)_6$-$C_{14}H_{29}$, O-($CH(CH_3)$-$CH_2O)_7$-$C_{14}H_{29}$,

$O-(CH_2CH_2O)_2-C_{15}H_{31}$, $O-(CH_2-CH_2O)_3-C_{15}H_{31}$, $O-(CH_2-CH_2O)_4-C_{15}H_{31}$, $O-(CH_2-CH_2O)_5-C_{15}H_{31}$, $O-(CH_2-CH_2O)_6-C_{15}H_{31}$, $O-(CH_2-CH_2O)_7-C_{15}H_{31}$,

$O-(CH(CH_3)-CH_2O)_2-C_{15}H_{31}$, $O-(CH(CH_3)-CH_2O)_3-C_{15}H_{31}$, $O-(CH(CH_3)-CH_2O)_4-C_{15}H_{31}$, $O-(CH(CH_3)-CH_2O)5-C_{15}H_{31}$, $O-(C_H(CH_3)-CH_2O)_6-C_{15}H_{31}$, $O-(CH(CH_3)-CH_2O)7-C_{15}H_{31}$,

$O-(CH_2-CH_2O)_2-C_{16}H_{33}$, $O-(CH_2-CH_2O)_3-C_{16}H_{33}$, $O-(CH_2-CH_2O)_4-C_{16}H_{33}$, $O-(CH_2-CH_2O)_5-C_{16}H_{33}$, $O-(CH_2-CH_2-O)_6-C_{16}H_{33}$, $O-(CH_2-CH_2O)_7-C_{16}H_{33}$,

$O-(CH(CH_3)-CH_2O)_2-C_{16}H_{33}$, $O-(CH(CH_3)-CH_2O)_3-C_{16}H_{33}$, $O-(CH(CH_3)-CH_2O)_4-C_{16}H_{33}$, $O-(CH(CH_3)-CH_2O)_5-C_{16}H_{33}$, $O-(CH(CH_3)-CH_2O)_6-C_{16}H_{33}$ oder $O-(CH(CH_3)-CH_2O)_7-C_{16}H_{33}$.

Vorzugsweise können als (Halogenorganyl)alkoxysilane der Formel II

3-Chlorbutyl(triethoxysilan),
3-Chlorbutyl(trimethoxysilan),
3-Chlorbutyl(diethoxymethoxysilan),
3-Chlorpropyl(triethoxysilan),
3-Chlorpropyl(trimethoxysilan),
3-Chlorpropyl(diethoxymethoxysilan),
2-Chlorethyl(triethoxysilan),
2-Chlorethyl(trimethoxysilan),
2-Chlorethyl(diethoxymethoxysilan),
1-Chlormethyl(triethoxysilan),
1-Chlormethyl(trimethoxysilan),
1-Chlormethyldiethoxymethoxysilan),
3-Chlorpropyl(diethoxymethylsilan),
3-Chlorpropyl(dimethoxymethylsilan),
2-Chlorethyl(diethoxymethylsilan),
2-Chlorethyl(dimethoxymethylsilan),
1-Chlormethyl(diethoxymethylsilan),
1-Chlormethyl(dimethoxymethylsilan),
3-Chlorpropyl(ethoxydimethylsilan),
3-Chlorpropyl(methoxydimethylsilan),
2-Chlorethyl(ethoxydimethylsilan),
2-Chlorethyl(methoxydimethylsilan),
1-Chlormethyl(ethoxydimethylsilan),
1-Chlormethyl(methoxydimethylsilan),

$[(C_9H_{19}O-(CH_2CH_2O)_2](MeO)_2Si(CH_2)_3Cl$,
$[(C_9H_{19}O-(CH_2-CH_2O)_3](MeO)_2Si(CH_2)_3Cl$,
$[(C_9H_{19}O-(CH_2-CH_2O)_4](MeO)_2Si(CH_2)_3Cl$,
$[(C_9H_{19}O-(CH_2-CH_2O)_5](MeO)_2Si(CH_2)_3Cl$,
$[(C_9H_{19}O-(CH_2-CH_2O)_6](MeO)_2Si(CH_2)_3Cl$,

$[(C_{12}H_{25}O-(CH_2-CH_2O)_2](MeO)_2Si(CH_2)_3Cl$,
$[(C_{12}H_{25}O-(CH_2-CH_2O)_3](MeO)_2Si(CH_2)_3Cl$,
$[(C_{12}H_{25}O-(CH_2-CH_2O)_4](MeO)_2Si(CH_2)_3Cl$,
$[(C_{12}H_{25}O-(CH_2-CH_2O)_5](MeO)_2Si(CH_2)_3Cl$,
$[(C_{12}H_{25}O-(CH_2-CH_2O)_6](MeO)_2Si(CH_2)_3Cl$,

$[(C_{13}H_{27}O-(CH_2-CH_2O)_2](MeO)_2Si(CH_2)_3Cl$,
$[(C_{13}H_{27}O-(CH_2-CH_2O)_3](MeO)_2Si(CH_2)_3Cl$,
$[(C_{13}H_{27}O-(CH_2-CH_2O)_4](MeO)_2Si(CH_2)_3Cl$,
$[(C_{13}H_{27}O-(CH_2-CH_2O)_5](MeO)_2Si(CH_2)_3Cl$,
$[(C_{13}H_{27}O-(CH_2-CH_2O)_6](MeO)_2Si(CH_2)_3Cl$,

$[(C_{14}H_{29}O-(CH_2-CH_2O)_2](MeO)_2Si(CH_2)_3Cl$,

$[(C_{14}H_{29}O-(CH_2-CH_2O)_3](MeO)_2Si(CH_2)_3Cl$,
$[(C_{14}H_{29}O-(CH_2-CH_2O)_4](MeO)_2Si(CH_2)_3Cl$,
$[(C_{14}H_{29}O-(CH_2-CH_2O)_5](MeO)_2Si(CH_2)_3Cl$,
$[(C_{14}H_{29}O-(CH_2-CH_2O)_6](MeO)_2Si(CH_2)_3Cl$,

$[(C_9H_{19}-O(CH_2-CH_2O)_2]_2(MeO)Si(CH_2)_3Cl$,
$[(C_9H_{19}O-(CH_2-CH_2O)_3]_2(MeO)Si(CH_2)_3Cl$,
$[(C_9H_{19}O-(CH_2-CH_2O)_4]_2(MeO)Si(CH_2)_3Cl$,
$[(C_9H_{19}O-(CH_2-CH_2O)_5]_2(MeO)Si(CH_2)_3Cl$,
$[(C_9H_{19}O-(CH_2-CH_2O)_6]_2(MeO)Si(CH_2)_3Cl$,

$[(C_{12}H_{25}O-(CH_2-CH_2O)_2]_2(MeO)Si(CH_2)_3Cl$,
$[(C_{12}H_{25}O-(CH_2-CH_2O)_3]_2(MeO)Si(CH_2)_3Cl$,
$[(C_{12}H_{25}O-(CH_2-CH_2O)_4]_2(MeO)Si(CH_2)_3Cl$,
$[(C_{12}H_{25}O-(CH_2-CH_2O)_5]_2(MeO)Si(CH_2)_3Cl$,
$[(C_{12}H_{25}O-(CH_2-CH_2O)_6]_2(MeO)Si(CH_2)_3Cl$,

$[(C_{13}H_{27}O-(CH_2-CH_2O)_2]_2(MeO)Si(CH_2)_3Cl$,
$[(C_{13}H_{27}O-(CH_2-CH_2O)_3]_2(MeO)Si(CH_2)_3Cl$,
$[(C_{13}H_{27}O-(CH_2-CH_2O)_4]_2(MeO)Si(CH_2)_3Cl$,
$[(C_{13}H_{27}O-(CH_2-CH_2O)_5]_2(MeO)Si(CH_2)_3Cl$,
$[(C_{13}H_{27}O-(CH_2-CH_2O)_6]_2(MeO)Si(CH_2)_3Cl$,

$[(C_{14}H_{29}O-(CH_2-CH_2O)_2]_2(MeO)Si(CH_2)_3Cl$,
$[(C_{14}H_{29}O-(CH_2-CH_2O)_3]_2(MeO)Si(CH_2)_3Cl$,
$[(C_{14}H_{29}O-(CH_2-CH_2O)_4]_2(MeO)Si(CH_2)_3Cl$,
$[(C_{14}H_{29}O-(CH_2-CH_2O)_5]_2(MeO)Si(CH_2)_3Cl$,
$[(C_{14}H_{29}O-(CH_2-CH_2O)_6]_2(MeO)Si(CH_2)_3Cl$,

$[(C_9H_{19}O-(CH_2-CH_2O)_2](EtO)_2Si(CH_2)_3Cl$,
$[(C_9H_{19}O-(CH_2-CH_2O)_3](EtO)_2Si(CH_2)_3Cl$,
$[(C_9H_{19}O-(CH_2-CH_2O)_4](EtO)_2Si(CH_2)_3Cl$,
$[(C_9H_{19}O-(CH_2-CH_2O)_5](EtO)_2Si(CH_2)_3Cl$,
$[(C_9H_{19}O-(CH_2-CH_2O)_6](EtO)_2Si(CH_2)_3Cl$,

$[(C_{12}H_{25}O-(CH_2-CH_2O)_2](EtO)_2Si(CH_2)_3Cl$,
$[(C_{12}H_{25}O-(CH_2-CH_2O)_3](EtO)_2Si(CH_2)_3Cl$,
$[(C_{12}H_{25}O-(CH_2-CH_2O)_4](EtO)_2Si(CH_2)_3Cl$,
$[(C_{12}H_{25}O-(CH_2-CH_2O)_5](EtO)_2Si(CH_2)_3Cl$,
$[(C_{12}H_{25}O-(CH_2-CH_2O)_6](EtO)_2Si(CH_2)_3Cl$,

$[(C_{13}H_{27}O-(CH_2-CH_2O)_2](EtO)_2Si(CH_2)_3Cl$,
$[(C_{13}H_{27}O-(CH_2-CH_2O)_3](EtO)_2Si(CH_2)_3Cl$,
$[(C_{13}H_{27}O-(CH_2-CH_2O)_4](EtO)_2Si(CH_2)_3Cl$,
$[(C_{13}H_{27}O-(CH_2-CH_2O)_5](EtO)_2Si(CH_2)_3Cl$,
$[(C_{13}H_{27}O-(CH_2-CH_2O)_6](EtO)_2Si(CH_2)_3Cl$,

$[(C_{14}H_{29}O-(CH_2-CH_2O)_2](EtO)_2Si(CH_2)_3Cl$,
$[(C_{14}H_{29}O-(CH_2-CH_2O)_3](EtO)_2Si(CH_2)_3Cl$,
$[(C_{14}H_{29}O-(CH_2CH_2O)_4](EtO)_2Si(CH_2)_3Cl$,
$[(C_{14}H_{29}O-(CH_2-CH_2O)_5](EtO)_2Si(CH_2)_3Cl$,
$[(C_{14}H_{29}O-(CH_2-CH_2O)_6](EtO)_2Si(CH_2)_3Cl$,

$[(C_9H_{19}O-(CH_2-CH_2O)_2]_2(EtO)Si(CH_2)_3Cl$,
$[(C_9H_{19}O-(CH_2-CH_2O)_3]_2(EtO)Si(CH_2)_3Cl$,
$[(C_9H_{19}O-(CH_2-CH_2O)_4]_2(EtO)Si(CH_2)_3Cl$,
$[(C_9H_{19}O-(CH_2-CH_2O)_5]_2(EtO)Si(CH_2)_3Cl$,
$[(C_9H_{19}O-(CH_2-CH_2O)_6]_2(EtO)Si(CH_2)_3Cl$,

$[(C_{12}H_{25}O-(CH_2-CH_2O)_2]_2(EtO)Si(CH_2)_3Cl$,
$[(C_{12}H_{25}O-(CH_2-CH_2O)_3]_2(EtO)Si(CH_2)_3Cl$,
$[(C_{12}H_{25}O-(CH_2-CH_2O)_4]_2(EtO)Si(CH_2)_3Cl$,
$[(C_{12}H_{25}O-(CH_2-CH_2O)_5]_2(EtO)Si(CH_2)_3Cl$,
$[(C_{12}H_{25}O-(CH_2-CH_2O)_6]_2(EtO)Si(CH_2)_3Cl$,

$[(C_{13}H_{27}O-(CH_2-CH_2O)_2]_2(EtO)Si(CH_2)_3Cl$,
$[(C_{13}H_{27}O-(CH_2-CH_2O)_3]_2(EtO)Si(CH_2)_3Cl$,
$[(C_{13}H_{27}O-(CH_2-CH_2O)_4]_2(EtO)Si(CH_2)_3Cl$,
$[(C_{13}H_{27}O-(CH_2-CH_2O)_5]_2(EtO)Si(CH_2)_3Cl$,
$[(C_{13}H_{27}O-(CH_2-CH_2O)_6]_2(EtO)Si(CH_2)_3Cl$,

$[(C_{14}H_{29}O-(CH_2-CH_2O)_2]_2(EtO)Si(CH_2)_3Cl$,
$[(C_{14}H_{29}O-(CH_2-CH_2O)_3]_2(EtO)Si(CH_2)_3Cl$,
$[(C_{14}H_{29}O-(CH_2-CH_2O)_4]_2(EtO)Si(CH_2)_3Cl$,
$[(C_{14}H_{29}O-(CH_2-CH_2O)_5]_2(EtO)Si(CH_2)_3Cl$,
$[(C_{14}H_{29}O-(CH_2-CH_2O)_6]_2(EtO)Si(CH_2)_3Cl$,

$[(C_9H_{19}O-(CH_2-CH_2O)_2]_3Si(CH_2)_3Cl$,
$[(C_9H_{19}O-(CH_2-CH_2O)_3]_3Si(CH_2)_3Cl$,
$[(C_9H_{19}O-(CH_2CH_2O)_4]_3Si(CH_2)_3Cl$,
$[(C_9H_{19}O-(CH_2-CH_2O)_5]_3Si(CH_2)_3Cl$,
$[(C_9H_{19}O-(CH_2-CH_2O)_6]_3Si(CH_2)_3Cl$,

$[(C_{12}H_{25}O-(CH_2-CH_2O)_2]_3Si(CH_2)_3Cl$,
$[(C_{12}H_{25}O-(CH_2-CH_2O)_3]_3Si(CH_2)_3Cl$,
$[(C_{12}H_{25}O-(CH_2-CH_2O)_4]_3Si(CH_2)_3Cl$,
$[(C_{12}H_{25}O-(CH_2-CH_2O)_5]_3Si(CH_2)_3Cl$,
$[(C_{12}H_{25}O-(CH_2-CH_2O)_6]_3Si(CH_2)_3Cl$,

$[(C_{13}H_{27}O-(CH_2-CH_2O)_2]_3Si(CH_2)_3Cl$,
$[(C_{13}H_{27}O-(CH_2-CH_2O)_3]_3Si(CH_2)_3Cl$,
$[(C_{13}H_{27}O-(CH_2-CH_2O)_4]_3Si(CH_2)_3Cl$,
$[(C_{13}H_{27}O-(CH_2-CH_2O)_5]_3Si(CH_2)_3Cl$,
$[(C_{13}H_{27}O-(CH_2-CH_2O)_6]_3Si(CH_2)_3Cl$,

$[(C_{14}H_{29}O-(CH_2-CH_2O)_2]_3Si(CH_2)_3Cl$,
$[(C_{14}H_{29}O-(CH_2-CH_2O)_3]_3Si(CH_2)_3Cl$,
$[(C_{14}H_{29}O-(CH_2-CH_2O)_4]_3Si(CH_2)_3Cl$,
$[(C_{14}H_{29}O-(CH_2-CH_2O)_5]_3Si(CH_2)_3Cl$ oder
$[(C_{14}H_{29}O-(CH_2-CH_2O)_6]_3Si(CH_2)_3Cl$

eingesetzt werden.

Das (Halogenorganyl)alkoxysilan kann ein (Halogenorganyl)alkoxysilan der Formel II oder eine Mischung aus (Halogenorganyl)alkoxysilanen der Formel II sein.

Vor, während oder nach der Reaktion können Additive zugesetzt werden.

Additive können nichtalkoholische Lösungsmittel sein. Als Additive, die nichtalkoholische Lösungsmittel sind, können bevorzugt in reiner oder technischer Qualität Alkane, wie beispielsweise Pentan, Hexan, Cyclohexan, Heptan oder Oktan,
Ether, wie beispielsweise Diethylether, Tetrahydrofuran, 1,2-Dimethoxyethan, Dioxan, Dioxolan, Ethylenglykole oder Propylenglykole,
aromatische Lösungsmittel, wie beispielsweise Benzol, Toluol, o-Xylol, m-Xylol oder p-Xylol, oder carbonylhaltige Lösungsmittel, wie beispielsweise Dimethylformamid,
eingesetzt werden.

Zu Beginn der Umsetzung und/oder während der Umsetzung und/oder zum Ende der Umsetzung können polare, protische, aprotische, basische oder saure Additive zur Reaktionsmischung zugegeben werden.

Additive können beispielsweise $H_2S$, (Alkaliion)$H_2PO_4$, (Alkaliion)$_2HPO_4$, (Alkaliion)$_3PO_4$, (Alkaliion) $HCO_3$, (Alkaliion)$_2CO_3$, (Alkaliion)$_2SO_4$ oder (Alkaliion) $HSO_4$ sein. Bevorzugt können $KH_2PO_4$, $K_2HPO_4$, $KHCO_3$, $NaHCO_3$,

$K_2CO_3$ oder $Na_2CO_3$ eingesetzt werden.

Die Rohproduktausbeute des erfindungsgemäßen Verfahrens kann größer als 80%, bevorzugt größer als 85%, besonders bevorzugt größer als 90%, ganz besonders bevorzugt größer als 95%, bezogen auf die theoretische Ausbeute bezüglich der eingesetzten Menge an (Halogenorganyl)alkoxysilan sein.

Die Rohproduktausbeute kann die gravimetrisch bestimmte Summe aller isolierten flüssigen Verbindungen, nachdem Lösungsmittel und Feststoffe entfernt sind, sein.

Das (Halogenorganyl)alkoxysilan, Additive und Alkohol können miteinander in beliebiger Reihenfolge, Weise, Temperatur und Zeitdauer vermischt werden und erst dann das Schwefelungsreagenz zugegeben werden.

Das (Halogenorganyl)alkoxysilan, Additive und das Schwefelungsreagenz können miteinander in beliebiger Reihenfolge, Weise, Temperatur und Zeitdauer vermischt werden und erst dann der Alkohol zugegeben werden.

Das Schwefelungsreagenz, Additive und der Alkohol können miteinander in beliebiger Reihenfolge, Weise, Temperatur und Zeitdauer vermischt werden und erst dann das (Halogenorganyl)alkoxysilan zugegeben werden.

Das (Halogenorganyl)alkoxysilan, Alkohol und das Schwefelungsreagenz können miteinander in beliebiger Reihenfolge, Weise, Temperatur und Zeitdauer vermischt werden und erst dann Additive zugegeben werden.

Die eingesetzten, wasserhaltigen Schwefelungsreagenzien können als Feststoffe oder in Lösung der Reaktion zugesetzt werden.

Die für die Reaktion benötigten Schwefelungsreagenzien können vor oder während der Reaktion aus schwefelhaltigen Verbindungen gebildet werden.

Die für die Reaktion benötigten Schwefelungsreagenzien können vor oder während der Reaktion aus Metallhydroxiden + Schwefel, Metallhydroxiden + Alkalihydrogensulfiden, Metallhydroxiden + Schwefel + Alkalihydrogensulfiden, Metallhydroxiden + $H_2S$ + Schwefel + Alkalihydrogensulfiden oder Metallhydroxiden + $H_2S$ + Schwefel + Alkalisulfiden gebildet werden.

Die für die Reaktion benötigten Schwefelungsreagenzien können vor oder während der Reaktion aus Alkoholaten + Schwefel, Alkoholaten + $H_2S$ + Schwefel oder Alkoholaten + Alkalihydrogensulfiden + Schwefel gebildet werden.

Die schwefelhaltigen Verbindungen können unter den Reaktionsbedingungen durch Protonierung vollständig oder unvollständig, reversibel oder irreversibel zu Alkalihydrogensulfiden oder $H_2S$ reagieren.

Die schwefelhaltigen Verbindungen können unter den Reaktionsbedingungen durch Deprotonierung vollständig oder unvollständig, reversibel oder irreversibel zu Alkalisulfiden oder Alkalihydrogensulfiden reagieren.

Die Protonierung der Schwefelverbindungen aus denen vor oder während der Reaktion Alkalihydrogensulfide gebildet werden, kann durch $H_2S$ und / oder organische und / oder anorganische Säuren geschehen.

Die Deprotonierung der Schwefelverbindungen aus denen vor oder während der Reaktion Alkalisulfide gebildet werden, kann durch organische und / oder anorganische Basen geschehen.

Die Deprotonierung von $H_2S$, wodurch vor oder während der Reaktion Alkalihydrogensulfide gebildet werden, kann durch organische und / oder anorganische Basen geschehen.

Die wasserhaltigen Schwefelungsreagenzien können mehr als 30 Gew.-%, bevorzugt mehr als 40 Gew.-%, besonders bevorzugt mehr als 50 Gew.-%, ganz besonders bevorzugt mehr als 60 Gew.-%, Schwefelungsreagenzien enthalten.

Die wasserhaltigen Schwefelungsreagenzien können, neben Wasser, weitere Nebenbestandteile zu weniger als 50 Gew.-%, bevorzugt weniger als 30 Gew.-%, besonders bevorzugt weniger als 20 Gew.-%, ganz besonders bevorzugt weniger als 10 Gew.-%, enthalten.

Weitere Nebenbestandteile von wasserhaltigen Schwefelungsreagenzien können neben Wasser unabhängig voneinander Alkalicarbonate, Alkalihydrogencarbonate, Alkalihydroxide, Alkalisulfate, Alkalihydrogensulfate, Alkalithiosulfate und/oder Alkalihydrogenthiosulfate sein.

Die verwendete, molare Menge an Schwefelungsreagenzien kann die Summe der molaren Mengen des eingesetzten (Halogenorganyl)alkoxysilans um 1 Mol-% bis 50 Mol-%, bevorzugt um 5 bis 30 Mol-%, besonders bevorzugt um 5 bis 20 Mol-%, ganz besonders bevorzugt um 5 bis 10 Mol-%, übersteigen.

Geringere als die stöchiometrisch benötigten Mengen an Schwefelungsreagenzien können zu einer unvollständigen Umsetzung führen. Dadurch kann in der Folge das Produkt entweder mit Edukt verunreinigt, oder es kann eine aufwendige Aufreinigung notwendig sein, um Edukte und Produkte voneinander zu trennen.

Als Alkohol können sowohl primäre, sekundäre oder tertiäre Alkohole mit 1 bis 24, vorzugsweise 1 bis 6, besonders bevorzugt 1 bis 4, Kohlenstoffatomen eingesetzt werden.

Als Alkohol können Alkylether der Formel HO-$(CR^{IV}_2)$-O-Alk oder HO-$(CR^{IV}_2)_y$-O-Alk oder Alkylpolyether der Formel HO- $(CR^{IV}_2O)_y$-Alk oder HO- $(CR^{IV}_2$-$CR^{IV}_2$-$O)_y$-Alk verwendet werden, mit y = 2-20, bevorzugt 2-10, besonders bevorzugt 3-6, $R^{IV}$ unabhängig voneinander H oder eine Alkylgruppe, vorzugsweise $CH_3$-Gruppe, ist und Alk eine verzweigte oder unverzweigte, gesättigte oder ungesättigte, aliphatische, aromatische oder gemischt aliphatische /aromatische einbindige $C_1$-$C_{30}$-, bevorzugt $C_2$-$C_{20}$-, besonders bevorzugt $C_6$-$C_{18}$-, ganz besonders bevorzugt $C_{10}$ -$C_{18}$-, Kohlenwasserstoffgruppe ist.

Als primäre, sekundäre oder tertiäre Alkohole können Methanol, Ethanol, n-Propanol, i-Propanol, i-Butanol, n-Butanol, Dodecanol, Tetradecanol, Hexadecanol oder Octadecanol eingesetzt werden. Als Alkylpolyether können $HO-(CH_2-CH_2-O)_a-C_bH_{2b+1}$, mit a gleich 2 bis 20, bevorzugt 2-10, besonders bevorzugt 2-8, ganz besonders bevorzugt 3-6, und b = 1-30, bevorzugt 2-20, besonders bevorzugt 6-18, ganz besonders bevorzugt 10-18, eingesetzt werden.

Primäre Alkohole können sein

$HO-(CH_2-CH_2-O)_2-C_6H_{13}$, $HO-(CH_2-CH_2-O)_3-C_6H_{13}$, $HO-(CH_2-CH_2-O)_4-C_6H_{13}$,$HO-(CH_2-CH_2-O)_5-C_6H_{13}$, $HO-(CH_2-CH_2-O)_6-C_6H_{13}$$HO-(CH_2-CH_2-O)_7-C_6H_{13}$, $HO-(CH_2-CH_2-O)_8-C_6H_{13}$, $HO-(CH_2-CH_2-O)_9-C_6H_{13}$,

$HO-(CH_2-CH_2-O)_2-C_{10}H_{21}$, $HO-(CH_2-CH_2-O)_3-C_{10}H_{21}$, $HO-(CH_2-CH_2-O)_4-C_{10}H_{21}$, $HO-(CH_2-CH_2-O)_5-C_{10}H_{21}$, $HO-(CH_2-CH_2-O)_6-C_{10}H_{21}$, $HO-(CH_2-CH_2-O)_7-C_{10}$H21, $HO-(CH_2-CH_2-O)_8-C_{10}H_{21}$, $HO-(CH_2-CH_2-O)_9-C_{10}H_{21}$,

$HO-(CH_2-CH_2-O)_2-C_{13}H_{27}$, $HO-(CH_2-CH_2-O)_3-C_{13}H_{27}$, $HO-(CH_2-CH_2-O)_4-C_{13}H_{27}$, $HO-(CH_2-CH_2-O)_5-C_{13}H_{27}$, $HO-(CH_2-CH_2-O)_6-C_{13}H_{27}$, $HO-(CH_2-CH_2-O)_7-C_{13}H_{27}$, $HO-(CH_2-CH_2-O)_8-C_{13}H_{27}$, $HO-(CH_2-CH_2-O)_9-C_{13}H_{27}$,

$HO-(CH_2-CH_2-O)_2-C_{15}H_{31}$, $HO-(CH_2-CH_2-O)_3-C_{15}H_{31}$, $HO-(CH_2-CH_2-O)_4-C_{15}H_{31}$, $HO-(CH_2-CH_2-O)_5-C_{15}H_{31}$, $HO-(CH_2-CH_2-O)_6-C_{15}H_{31}$, $HO-(CH_2-CH_2-O)_7-C_{15}H_{31}$, $HO-(CH_2-CH_2-O)_8-C_{15}H_{31}$ oder $HO-(CH_2-CH_2-O)_9-C_{15}H_{31}$.

Die Menge an Alkohol kann mindestens 0,1 Vol.-%, bevorzugt 10 bis 800 Vol.-%, besonders bevorzugt 50 bis 700 Vol.-%, ganz besonders bevorzugt 100 bis 500 Vol.-%, der eingesetzten Silankomponenten betragen.

Der Alkohol kann weniger als 20 Gew.-%, bevorzugt weniger als 10 Gew.-%, besonders bevorzugt weniger als 5 Gew.-%, insbesondere bevorzugt weniger als 1 Gew.-%, ganz besonders bevorzugt weniger als 0,1 Gew.-%, Wasser enthalten.

Als Alkohol können Mischungen von Alkoholen eingesetzt werden.

Die Umsetzung kann bei Temperaturen zwischen 0 und 180°C, bevorzugt zwischen 70 und 150°C, besonders bevorzugt zwischen 70 und 125°C, erfolgen.

Während der Aufarbeitung der Rohprodukte können die alkoholischen Lösungsmittel im Vakuum und bei erhöhter Temperatur entfernt werden. Es können dem Fachmann bekannte wasserschleppende Substanzen (Azeotropbildner) zugesetzt und verwendet werden, um neben dem Lösungsmittel auch Wasser im Vakuum bei erhöhter Temperatur abzutrennen. Das im Rohprodukt enthaltende Wasser kann im Vakuum bei erhöhter Temperatur aus dem Rohprodukt oder dem Endprodukt entfernt werden. Für die Abtrennung von Lösungsmittel, Azeotropbildner und Wasser können dem Fachmann bekannte Hilfsmittel und Vorrichtungen verwendet werden.

Bevorzugt können Vertikalrohrverdampfer, Horizontalrohrverdampfer, Schrägrohrverdampfer, Fallfilmverdampfer, Plattenverdampfer, Blasrohrverdampfer, Rotorverdampfer, Zentrifugalverdampfer, Schneckenverdampfer, Dünnschichtverdampfer und Dünnfilmstripper verwendet werden.

Die Umsetzung kann in korrosionsbeständigen oder korrosionsanfälligen Reaktionsgefäßen oder Autoklaven erfolgen.

Die Umsetzung kann bevorzugt in korrosionsbeständigen Reaktionsgefäßen oder Autoklaven, beispielsweise aus Glas, Teflon, emailliertem bzw. beschichteten Stahl, Hastelloy oder Tantal, erfolgen.

Aus der Rohproduktsuspension kann das Lösungsmittel/Wasser-Gemisch entfernt werden, vorzugsweise bei Unterdruck, und die entstehende Suspension, enthaltend das gebildete Organosilan der allgemeinen Formel I, von dem Feststoff, vorzugsweise durch Zentrifugieren, Dekantieren oder Filtrieren, abgetrennt werden.

Das Lösungsmittel/Wasser-Gemisch kann bei einem Druck von 800 mbar bis 10 mbar, vorzugsweise durch Destillation, entfernt werden. Das Lösungsmittel/Wasser-Gemisch kann Ethanol enthalten.

Die entstehende Suspension kann Me(Hal), beispielsweise NaCl, Puffersalze und Organosilane der allgemeinen Formel I enthalten.

Aus der Rohproduktsuspension kann das Lösungsmittel entfernt, das Gemisch, enthaltend die Organosilane der allgemeinen Formel (I) und den Feststoff Me(Hal), mit Wasser, enthaltend mindestens einen Puffer, gemischt und die sich bildenden Phasen getrennt werden.

Die Aufarbeitung der Rohproduktsuspension kann eine Filtration und Abtrennung von festen Bestandteilen beinhalten. Die Aufarbeitung der Rohproduktsuspension kann eine Destillation und Abtrennung von flüchtigen Bestandteilen beinhalten. Die Aufarbeitung der Rohproduktsuspension kann zuerst eine Destillation und dann eine Filtration beinhalten. Die Aufarbeitung der Rohproduktsuspension kann zuerst eine Filtration und dann eine Destillation beinhalten. Die Aufarbeitung der Rohproduktsuspension kann zuerst eine Filtration, danach eine Destillation und anschließend eine weitere Filtration beinhalten.

Die nach der Reaktion vorliegende, salzhaltige Rohproduktsuspension kann bei Normaldruck oder reduziertem Druck, bevorzugt bei einem reduzierten Druck zwischen 1 und 700 mbar, besonders bevorzugt zwischen 5 und 500 mbar, ganz besonders bevorzugt zwischen 10 und 250 mbar, aufgearbeitet werden.

Die nach der Reaktion vorliegende, salzhaltige Produktsuspension kann bei Umgebungstemperatur oder erhöhter Temperatur, bevorzugt zwischen 20 und 200 °C, besonders bevorzugt zwischen 40 und 150°C, ganz besonders bevorzugt zwischen 50 und 100°C, aufgearbeitet werden.

Während der Aufarbeitung kann eine Mischung aus Produkt und Feststoff entstehen. Während der Aufarbeitung kann eine Mischung aus Produkt und Alkohol entstehen. Während der Aufarbeitung kann eine Mischung aus Produkt, Alkohol und Wasser entstehen. Während der Aufarbeitung kann eine Mischung aus Produkt und Wasser entstehen. Während der Aufarbeitung kann eine Mischung aus Produkt, Feststoff und Wasser entstehen. Während der Aufarbeitung kann eine Mischung aus Produkt, Me(Hal), beispielsweise Natriumchlorid, und Wasser entstehen. Während der Aufarbeitung kann eine Mischung aus Produkt, Me(Hal), beispielsweise Natriumchlorid, Alkohol und Wasser entstehen.

Zu einer Mischung aus Produkt und/oder Feststoff, und/oder Alkohol und/oder Wasser kann Wasser gegeben werden.

Das Wasser kann in einer Menge von 1 bis 200 Gew.-%, bevorzugt 1 bis 100 Gew.-%, besonders bevorzugt 5 bis 75 Gew.-%, ganz besonders bevorzugt 5 bis 50 Gew.-%, bezogen auf das Produkt, zugegeben werden.

Das Wasser kann deionisiertes Wasser sein. Das Wasser kann einen Puffer, beispielsweise Natriumhydrogencarbonat oder Natriumcarbonat, enthalten. Der Puffergehalt des Wassers kann 1 Gew.-% - 20 Gew.-%, vorzugsweise 2 Gew.-% - 5 Gew.-%, betragen.

Das zugegebene Wasser kann einen pH-Wert zwischen 3 und 11, bevorzugt zwischen 4 und 10, besonders bevorzugt zwischen 5 und 9, ganz besonders bevorzugt zwischen 7 und 9, aufweisen.

Der pH-Wert des zugegebenen Wassers kann durch den Puffer, beispielsweise $NaHCO_3$, eingestellt werden.

Der Feststoff kann sich bevorzugt in der wässrigen Phase befinden. Das Salz Me(Hal), beispielsweise Natriumchlorid, kann sich bevorzugt in der wässrigen Phase befinden.

Das Produkt kann sich von der salzhaltigen Wasserphase durch Phasenseparation abtrennen. Das Produkt kann, nach der Phasenseparation, von der salzhaltigen Wasserphase abgetrennt werden. Das Produkt kann, nach der Abtrennung von der salzhaltigen Phase, getrocknet werden.

In einer ersten bevorzugten Ausführungsform zur Herstellung von Organosilanen der allgemeinen Formel I mit X=SH, m=1 und n=1 kann man als wasserhaltiges Schwefelungsreagenz ein Alkalihydrogensulfid einsetzen.

In dieser ersten Ausführungsform können der Reaktion vor, während oder nach der Reaktion Additive, ausgewählt aus der Gruppe $H_2S$, $CO_2$, (Halogenoorganyl)halogensilan oder eine Verbindung, die in der Lage ist, im pH-Bereich zwischen 5 und 9 ein Proton reversibel oder irreversibel an Alkalialkoholate abzugeben, zu der Reaktionsmischung zugegeben werden.

Als Additive können bei der Herstellung von Organosilanen der allgemeinen Formel I mit X=SH Verbindungen vor, während und / oder am Ende der Reaktion zugesetzt werden, die in Verbindung mit Alkoholen anorganische oder organische Säuren freisetzen.

Die Menge an Alkohol kann bei der Herstellung von Organosilanen der allgemeinen Formel I mit X=SH mindestens 10 Vol.-%, bevorzugt 10 bis 800 Vol.-%, besonders bevorzugt 50 bis 500 Vol.-%, ganz besonders bevorzugt 100 bis 300 Vol.-%, der eingesetzten Silankomponenten betragen.

Verbindungen die in Anwesenheit von Alkoholen anorganische Säuren freisetzen, können Chlorsilane sein. Chlorsilane können 1 bis 4 Si-Cl Bindungen je Siliciumatom enthalten. Chlorsilane können $(CH_3)SiCl_3$, $(CH_3)_2SiCl_2$, $(CH_3)_3SiCl$, $SiCl_4$, $HSiCl_3$ oder $H_2SiCl_2$ sein.

Verbindungen, die in der Lage sind, im pH-Bereich zwischen 5 und 9 ein Proton reversibel oder irreversibel an Alkalialkoholate abzugeben, können beispielsweise organische oder anorganische Säuren sein.

Organische Säuren können Verbindungen der folgenden Grundstrukturen sein: Alkyl-COOH, Aryl-COOH, Aralkyl-COOH, Alkyl-$S(O)_2OH$, HOOC-Alkylen-COOH, HOOC-Aryl-COOH oder HOOC-Aralkyl-COOH.

Organische Säuren können zum Beispiel Ameisensäure, Essigsäure, Propansäure, Pivalinsäure, Isooctansäure, Isononansäure, Laurinsäure (C12), Myristinsäure (C14), Palmitinsäure (C16), Stearinsäure (C18), Ölsäure, Linolsäure, Linolensäure, Benzoesäure, Oxalsäure, 1,4-Cyclohexandicarbonsäure, Adipinsäure, 1,12-Dodecandisäure, Amino-undecansäure, Phthalsäure, Terephtalsäure, Maleinsäure, Fumarsäure, Malonsäure, Acrylsäure oder Methacrylsäure sein.

Anorganische Säuren können zum Beispiel Verbindungen der Zusammensetzung HCl, $H_2SO_4$, $H_3PO_4$, (Alkaliion) $H_2PO_4$, (Alkaliion) $_2HPO_4$, $H_2CO_3$, (Alkaliion) $HCO_3$, oder (Alkaliion)$HSO_4$ sein. Verbindungen der Struktur (Alkaliion) $H_2PO_4$ können bevorzugt sein $KH_2PO_4$ und $NaH_2PO_4$. Verbindungen der Struktur (Alkaliion)$_2HPO_4$ können bevorzugt $K_2HPO_4$ und $Na_2HPO_4$ sein. Verbindungen der Struktur (Alkaliion)$HCO_3$ können bevorzugt $KHCO_3$ und $NaHCO_3$ sein. Verbindungen der Struktur (Alkaliion)$HSO_4$ können bevorzugt $KHSO_4$ und $NaHSO_4$ sein. Die anorganische Säure $H_2CO_3$ kann durch Einleitung von $CO_2$ in die wasserhaltige Reaktionsmischung erhalten werden.

Saure oder basische Additive, die der Reaktionsmischung vor, während oder zum Ende des Verfahrens zugesetzt werden, können die Struktur (Alkaliion)$H_2PO_4$, (Alkaliion)(OH), (Alkaliion)$_2HPO_4$, (Alkaliion)$_3PO_4$, (Alkaliion) $HCO_3$, (Alkaliion)$_2CO_3$, (Alkaliion)$_2SO_4$ oder (Alkaliion)$HSO_4$ besitzen. Verbindungen der Struktur (Alkaliion)$H_2PO_4$ können bevorzugt sein $KH_2PO_4$ und $NaH_2PO_4$. Verbindungen der Struktur (Alkaliion) $_2HPO_4$ können bevorzugt $K_2HPO_4$ und $Na_2HPO_4$ sein. Verbindungen der Struktur (Alkaliion)$HCO_3$ können bevorzugt $KHCO_3$ und $NaHCO_3$ sein. Verbin-

dungen der Struktur (Alkaliion)$HSO_4$ können bevorzugt $KHSO_4$ und $NaHSO_4$ sein.

Die Reaktion zur Herstellung von Organosilanen der allgemeinen Formel I mit X=SH kann bevorzugt unter erhöhtem Druck (> 0,5 bar Überdruck) durchgeführt werden. Der erhöhte Druck kann zwischen 20 und 0,5 bar, bevorzugt 15 und 0,5 bar, besonders bevorzugt 10 bis 0,5 bar, ganz besonders bevorzugt 5 bis 0,5 bar, Überdruck betragen.

Die Reaktion zur Herstellung von Organosilanen der allgemeinen Formel I mit X=SH kann bevorzugt in einem geschlossenen Gefäß und gegebenenfalls unter Schutzgas durchgeführt werden.

Die Reaktion zur Herstellung von Organosilanen der allgemeinen Formel I mit X=SH kann bevorzugt unter Luftabschluß durchgeführt werden.

Die Reaktion zur Herstellung von Organosilanen der allgemeinen Formel I mit X=SH kann bevorzugt so durchgeführt werden, daß ein entstehendes Gas nicht aus dem Reaktionsraum entweichen kann.

Organosilane der allgemeinen Formel I können sein:

3-Mercaptopropyl(trimethoxysilan),
3-Mercaptopropyl(dimethoxyhydroxysilan),
3-Mercaptopropyl(triethoxysilan),
3-Mercaptopropyl(diethoxyhydroxysilan),
3-Mercaptopropyl(diethoxymethoxysilan),
3-Mercaptopropyl(tripropoxysilan),
3-Mercaptopropyl(dipropoxymethoxysilan),
3-Mercaptopropyl(dipropoxymhydroxysilan),
3-Mercaptopropyl(tridodecanoxysilan),
3-Mercaptopropyl(didodecanoxyhydroxysilan),
3-Mercaptopropyl(tritetradecanoxysilan),
3-Mercaptopropyl(trihexadecanoxysilan),
3-Mercaptopropyl(trioctadecanoxysilan),
3-Mercaptopropyl(didodecanoxy)tetradecanoxysilan,
3-Mercaptopropyl(dodecanoxy)tetradecanoxy(hexadecanoxy) silan,

3-Mercaptopropyl(dimethoxymethylsilan),
3-Mercaptopropyl(methoxymethylhydroxysilan),
3-Mercaptopropyl(methoxydimethylsilan),
3-Mercaptopropyl(hydroxydimethylsilan),
3-Mercaptopropyl(diethoxymethylsilan),
3-Mercaptopropyl(ethoxyhydroxymethylsilan),
3-Mercaptopropyl(ethoxydimethylsilan),

3-Mercaptopropyl(dipropoxymethylsilan),
3-Mercaptopropyl(propoxymethylhydroxysilan),
3-Mercaptopropyl(propoxydimethylsilan),
3-Mercaptopropyl(diisopropoxymethylsilan),
3-Mercaptopropyl(isopropoxydimethylsilan),
3-Mercaptopropyl(dibutoxymethylsilan),
3-Mercaptopropyl(butoxydimethylsilan),
3-Mercaptopropyl(disiobutoxymethylsilan),
3-Mercaptopropyl(isobutoxymethylhydroxysilan),
3-Mercaptopropyl(isobutoxydimethylsilan),
3-Mercaptopropyl(didodecanoxymethylsilan),
3-Mercaptopropyl(dodecanoxydimethylsilan),
3-Mercaptopropyl(ditetradecanoxymethylsilan),
3-Mercaptopropyl(tetradecanoxymethylhydroxysilan),
3-Mercaptopropyl(tetradecanoxydimethylsilan),

2-Mercaptoethyl(trimethoxysilan),
2-Mercaptoethyl(triethoxysilan),
2-Mercaptoethyl(diethoxymethoxysilan),
2-Mercaptoethyl(tripropoxysilan),
2-Mercaptoethyl(dipropoxymethoxysilan),
2-Mercaptoethyl(tridodecanoxysilan),

2-Mercaptoethyl(tritetradecanoxysilan),
2-Mercaptoethyl(trihexadecanoxysilan),
2-Mercaptoethyl(trioctadecanoxysilan),
2-Mercaptoethyl(didodecanoxy)tetradecanoxysilan,
2-Mercaptoethyl(dodecanoxy)tetradecanoxy(hexadecanoxy) silan,

2-Mercaptoethyl(dimethoxymethylsilan),
2-Mercaptoethyl(methoxymethylhydroxysilan),
2-Mercaptoethyl(methoxydimethylsilan),
2-Mercaptoethyl(diethoxymethylsilan),
2-Mercaptoethyl(ethoxydimethylsilan),
2-Mercaptoethyl(hydroxydimethylsilan),

1-Mercaptomethyl(trimethoxysilan),
1-Mercaptomethyl(triethoxysilan),
1-Mercaptomethyl(diethoxymethoxysilan),
1-Mercaptomethyl(diethoxyhydroxysilan),
1-Mercaptomethyl(dipropoxymethoxysilan),
1-Mercaptomethyl(tripropoxysilan),
1-Mercaptomethyl(trimethoxysilan),
1-Mercaptomethyl(dimethoxymethylsilan),
1-Mercaptomethyl(methoxydimethylsilan),
1-Mercaptomethyl(diethoxymethylsilan),
1-Mercaptomethyl(ethoxymethylhydroxysilan),
1-Mercaptomethyl(ethoxydimethylsilan),

1,3-Dimercaptopropyl(trimethoxysilan),
1,3-Dimercaptopropyl(triethoxysilan),
1,3-Dimercaptopropyl(tripropoxysilan),
1,3-Dimercaptopropyl(tridodecanoxysilan),
1,3-Dimercaptopropyl(tritetradecanoxysilan),
1,3-Dimercaptopropyl(trihexadecanoxysilan),

2,3-Dimercaptopropyl(trimethoxysilan),
2,3-Dimercaptopropyl(triethoxysilan),
2,3-Dimercaptopropyl(tripropoxysilan),
2,3-Dimercaptopropyl(tridodecanoxysilan),
2,3-Dimercaptopropyl(tritetradecanoxysilan),
2,3-Dimercaptopropyl(trihexadecanoxysilan), 3-Mercaptobutyl(trimethoxysilan),
3-Mercaptobutyl(triethoxysilan),
3-Mercaptobutyl(diethoxymethoxysilan),
3-Mercaptobutyl(tripropoxysilan),
3-Mercaptobutyl(dipropoxymethoxysilan),
3-Mercaptobutyl(dimethoxymethylsilan),
3-Mercaptobutyl(diethoxymethylsilan),
3-Mercaptobutyl(dimethylmethoxysilan),
3-Mercaptobutyl(dimethylethoxysilan),
3-Mercaptobutyl(dimethylhydroxysilan),
3-Mercaptobutyl(tridodecanoxysilan),
3-Mercaptobutyl(tritetradecanoxysilan),
3-Mercaptobutyl(trihexadecanoxysilan),
3-Mercaptobutyl(didodecanoxy)tetradecanoxysilan,
3-Mercaptobutyl(dodecanoxy)tetradecanoxy(hexadecanoxy) silan,

3-Mercapto-2-methyl-propyl(trimethoxysilan),
3-Mercapto-2-methyl-propyl(triethoxysilan),

3-Mercapto-2-methyl-propyl(diethoxymethoxysilan),

3-Mercapto-2-methyl-propyl(tripropoxysilan),
3-Mercapto-2-methyl-propyl(dipropoxymethoxysilan),
3-Mercapto-2-methyl-propyl(tridodecanoxysilan),
3-Mercapto-2-methyl-propyl(tritetradecanoxysilan),
3-Mercapto-2-methyl-propyl(trihexadecanoxysilan),
3-Mercapto-2-methyl-propyl(trioctadecanoxysilan),
3-Mercapto-2-methyl-propyl(didodecanoxy) tetradecanoxysilan,
3-Mercapto-2-methyl-propyl(dodecanoxy) tetradecanoxy(hexadecanoxy)silan,

3-Mercapto-2-methyl-propyl(dimethoxymethylsilan),
3-Mercapto-2-methyl-propyl(methoxydimethylsilan),
3-Mercapto-2-methyl-propyl(diethoxymethylsilan),
3-Mercapto-2-methyl-propyl(ethoxydimethylsilan),
3-Mercapto-2-methyl-propyl(hydroxydimethylsilan),
3-Mercapto-2-methyl-propyl(dipropoxymethylsilan),
3-Mercapto-2-methyl-propyl(propoxydimethylsilan),
3-Mercapto-2-methyl-propyl(diisopropoxymethylsilan),
3-Mercapto-2-methyl-propyl(isopropoxydimethylsilan),
3-Mercapto-2-methyl-propyl(dibutoxymethylsilan),
3-Mercapto-2-methyl-propyl(butoxydimethylsilan),
3-Mercapto-2-methyl-propyl(disiobutoxymethylsilan),
3-Mercapto-2-methyl-propyl(isobutoxydimethylsilan),
3-Mercapto-2-methyl-propyl(didodecanoxymethylsilan),
3-Mercapto-2-methyl-propyl(dodecanoxydimethylsilan),
3-Mercapto-2-methyl-propyl(ditetradecanoxymethylsilan),
3-Mercapto-2-methyl-propyl(tetradecanoxydimethylsilan),

$[(C_9H_{19}O\text{-}(CH_2\text{-}CH_2O)_2](MeO)_2Si(CH_2)_3SH$,
$[(C_9H_{19}O\text{-}(CH_2\text{-}CH_2O)_3](Me0)_2Si(CH_2)_3SH$,
$[(C_9H_{19}O\text{-}(CH_2\text{-}CH_2O)_4](MeO)_2Si(CH_2)_3SH$,
$[(C_9H_{19}O\text{-}(CH_2CH_2O)_5](MeO)_2Si(CH_2)_3SH$,
$[(C_9H_{19}O\text{-}(CH_2\text{-}CH_2O)_6](MeO)_2Si(CH_2)_3SH$,

$[(C_{12}H_{25}O\text{-}(CH_2\text{-}CH_2O)_2](MeO)_2Si(CH_2)_3SH$,
$[(C_{12}H_{25}O\text{-}(CH_2\text{-}CH_2O)_3](MeO)_2Si(CH_2)_3SH$,
$[(C_{12}H_{25}O\text{-}(CH_2\text{-}CH_2O)_4](MeO)_2Si(CH_2)_3SH$,
$[(C_{12}H_{25}O\text{-}(CH_2\text{-}CH_2O)_5](MeO)_2Si(CH_2)_3SH$,
$[(C_{12}H_{25}O\text{-}(CH_2\text{-}CH_2O)_6](MeO)_2Si(CH_2)_3SH$,

$[(C_{13}H_{27}O\text{-}(CH_2\text{-}CH_2O)_2](MeO)_2Si(CH_2)_3SH$,
$[(C_{13}H_{27}O\text{-}(CH_2\text{-}CH_2O)_3](MeO)_2Si(CH_2)_3SH$,
$[(C_{13}H_{27}O\text{-}(CH_2\text{-}CH_2O)_4](MeO)_2Si(CH_2)_3SH$,
$[(C_{13}H_{27}O\text{-}(CH_2\text{-}CH_2O)_5](MeO)_2Si(CH_2)_3SH$,
$[(C_{13}H_{27}O\text{-}(CH_2\text{-}CH_2O)_6](MeO)_2Si(CH_2)_3SH$,

$[(C_{14}H_{29}O\text{-}(CH_2\text{-}CH_2O)_2](MeO)_2Si(CH_2)_3SH$,
$[(C_{14}H_{29}O\text{-}(CH_2\text{-}CH_2O)_3](MeO)_2Si(CH_2)_3SH$,
$[(C_{14}H_{29}O\text{-}(CH_2\text{-}CH_2O)_4](MeO)_2Si(CH_2)_3SH$,
$[(C_{14}H_{29}O\text{-}(CH_2\text{-}CH_2O)_5](MeO)_2Si(CH_2)_3SH$,
$[(C_{14}H_{29}O\text{-}(CH_2\text{-}CH_2O)_6](MeO)_2Si(CH_2)_3SH$,

$[(C_9H_{19}O\text{-}(CH_2\text{-}CH_2O)_2]_2(MeO)Si(CH_2)_3SH$,
$[(C_9H_{19}O\text{-}(CH_2\text{-}CH_2O)_3]_2(MeO)Si(CH_2)_3SH$,
$[(C_9H_{19}O\text{-}(CH_2\text{-}CH_2O)_4]_2(MeO)Si(CH_2)_3SH$,
$[(C_9H_{19}O\text{-}(CH_2\text{-}CH_2O)_5]_2(MeO)Si(CH_2)_3SH$,
$[(C_9H_{19}O\text{-}(CH_2\text{-}CH_2O)_6]_2(MeO)Si(CH_2)_3SH$,

$[(C_{12}H_{25}O\text{-}(CH_2\text{-}CH_2O)_2]_2(MeO)Si(CH_2)_3SH$,

$[(C_{12}H_{25}O-(CH_2-CH_2O)_3]_2(MeO)Si(CH_2)_3SH$,
$[(C_{12}H_{25}O-(CH_2-CH_2O)_4]_2(MeO)Si(CH_2)_3SH$,
$[(C_{12}H_{25}O-(CH_2-CH_2O)_5]_2(MeO)Si(CH_2)_3SH$,
$[(C_{12}H_{25}O-(CH_2-CH_2O)_6]_2(MeO)Si(CH_2)_3SH$,

$[(C_{13}H_{27}O-(CH_2-CH_2O)_2 2(MeO)Si(CH_2)_3SH$,
$[(C_{13}H_{27}O-(CH_2-CH_2O)_3]_2(MeO)Si(CH_2)_3SH$,
$[(C_{13}H_{27}O-(CH_2-CH_2O)_4](MeO)Si(CH_2)_3SH$,
$[(C_{13}H_{27}O-(CH_2-CH_2O)_5]_2(MeO)Si(CH_2)_3SH$,
$[(C_{13}H_{27}O-(CH_2-CH_2O)6]_2(MeO)Si(CH_2)_3SH$,

$[(C_{14}H_{29}O-(CH_2-CH_2O)_2]_2(MeO)Si(CH_2)_3SH$,
$[(C_{14}H_{29}O-(CH_2-CH_2O)_3]_2(MeO)Si(CH_2)_3SH$,
$[(C_{14}H_{29}O-(CH_2-CH_2O)_4]_2(MeO)Si(CH_2)_3SH$,
$[(C_{14}H_{29}O-(CH_2-CH_2O)5]_2(MeO)Si(CH_2)_3SH$,
$[(C_{14}H_{29}O-(CH_2-CH_2O)_{6]2}(MeO)Si(CH_2)_3SH$,

$[(C_9H_{19}O-(CH_2-CH_2O)_2](EtO)_2Si(CH_2)_3SH$,
$[(C_9H_{19}O-(CH_2-CH_2O)_3](EtO)_2Si(CH_2)_3SH$,
$[(C_9H_{19}O-(CH_2-CH_2O)_4](EtO)_2Si(CH_2)_3SH$,
$[(C_9H_{19}O-(CH_2-CH_2O)_5](EtO)_2Si(CH_2)_3SH$,
$[(C_9H_{19}O-(CH_2-CH_2O)_6](EtO)_2Si(CH_2)_3SH$,

$[(C_{12}H_{25}O-(CH_2-CH_2O)_2](EtO)_2Si(CH_2)_3SH$,
$[(C_{12}H_{25}O-(CH_2-CH_2O)_3](EtO)_2Si(CH_2)_3SH$,
$[(C_{12}H_{25}O-(CH_2-CH_2O)_4](EtO)_2Si(CH_2)_3SH$,
$[(C_{12}H_{25}O-(CH_2-CH_2O)_5](EtO)_2Si(CH_2)_3SH$,
$[(C_{12}H_{25}O-(CH_2-CH_2O)_6](EtO)_2Si(CH_2)_3SH$,

$[(C_{13}H_{27}O-(CH_2-CH_2O)_2](EtO)_2Si(CH_2)_3SH$,
$[(C_{13}H_{27}O-(CH_2-CH_2O)_3](EtO)_2Si(CH_2)_3SH$,
$[(C_{13}H_{27}O-(CH_2-CH_2O)_4](EtO)_2Si(CH_2)_3SH$,
$[(C_{13}H_{27}O-(CH_2-CH_2O)_5](EtO)_2Si(CH_2)_3SH$,
$[(C_{13}H_{27}O-(CH_2CH_2O)_6](EtO)_2Si(CH_2)_3SH$,

$[(C_{14}H_{29}O-(CH_2-CH_2O)_2](EtO)_2Si(CH_2)_3SH$,
$[(C_{14}H_{29}O-(CH_2-CH_2O)_3](EtO)_2Si(CH_2)_3SH$,
$[(C_{14}H_{29}O-(CH_2-CH_2O)_4](EtO)_2Si(CH_2)_3SH$,
$[(C_{14}H_{29}O-(CH_2-CH_2O)_5](EtO)_2Si(CH_2)_3SH$,
$[(C_{14}H_{29}O-(CH_2-CH_2O)_6](EtO)_2Si(CH_2)_3SH$,

$[(C_9H_{19}O-(CH_2-CH_2O)_2]_2(EtO)Si(CH_2)_3SH$,
$[(C_9H_{19}O-(CH_2-CH_2O)_3]_2(EtO)Si(CH_2)_3SH$,
$[(C_9H_{19}O-(CH_2-CH_2O)_4]_2(EtO)Si(CH_2)_3SH$,
$[(C_9H_{19}O-(CH_2-CH_2O)_5]_2(EtO)Si(CH_2)_3SH$,
$[(C_9H_{19}O-(CH_2-CH_2O)_6]_2(EtO)Si(CH_2)_3SH$,

$[(C_{12}H_{25}O-(CH_2-CH_2O)_2]_2(EtO)Si(CH_2)_3SH$,
$[(C_{12}H_{25}O-(CH_2-CH_2O)_3]_2(EtO)Si(CH_2)_3SH$,
$[(C_{12}H_{25}O-(CH_2-CH_2O)_4]_2(EtO)Si(CH_2)_3SH$,
$[(C_{12}H_{25}O-(CH_2-CH_20)_5]_2(EtO)Si(CH_2)_3SH$,
$[(C_{12}H_{25}O-(CH_2-CH_2O)_6]_2(EtO)Si(CH_2)_3SH$,

$[(C_{13}H_{27}O-(CH_2-CH_2O)_2]_2(EtO)Si(CH_2)_3SH$,
$[(C_{13}H_{27}O-(CH_2-CH_2O)_3]_2(EtO)Si(CH_2)_3SH$,
$[(C_{13}H_{27}O-(CH_2-CH_2O)_4]_2(EtO)Si(CH_2)_3SH$,
$[(C_{13}H_{27}O-(CH_2-CH_2O)_5]_2(EtO)Si(CH_2)_3SH$,
$[(C_{13}H_{27}O-(CH_2-CH_2O)_6]_2(EtO)Si(CH_2)_3SH$,

$[(C_{14}H_{29}O-(CH_2-CH_2O)_2]_2(EtO)Si(CH_2)_3SH$,
$[(C_{14}H_{29}O-(CH_2-CH_2O)_3]_2(EtO)Si(CH_2)_3SH$,
$[(C_{14}H_{29}O-(CH_2-CH_2O)_4]_2(EtO)Si(CH_2)_3SH$,
$[(C_{14}H_{29}O-(CH_2-CH_2O)_5]_2(EtO)Si(CH_2)_3SH$,
$[(C_{14}H_{29}O-(CH_2-CH_2O)_6]_2(EtO)Si(CH_2)_3SH$,

$[(C_9H_{19}O-(CH_2-CH_2O)_2]_3Si(CH_2)_3SH$,
$[(C_9H_{19}O-(CH_2-CH_2O)_3]_3Si(CH_2)_3SH$,
$[(C_9H_{19}O-(CH_2-CH_2O)_4]_3Si(CH_2)_3SH$,
$[(C_9H_{19}O-(CH_2-CH_2O)_5]_3Si(CH_2)_3SH$,
$[(C_9H_{19}O-(CH_2-CH_2O)_6]_3Si(CH_2)_3SH$,

$[(C_{12}H_{25}O-(CH_2-CH_2O)_2]_3Si(CH_2)_3SH$,
$[(C_{12}H_{25}O-(CH_2-CH_2O)_3]_3Si(CH_2)_3SH$,
$[(C_{12}H_{25}O-(CH_2-CH_2O)_4]_3Si(CH_2)_3SH$,
$[(C_{12}H_{25}O-(CH_2-CH_2O)_5]_3Si(CH_2)_3SH$,
$[(C_{12}H_{25}O-(CH_2-CH_2O)_6]_3Si(CH_2)_3SH$,

$[(C_{13}H_{27}O-(CH_2-CH_2O)_2]_3Si(CH_2)_3SH$,
$[(C_{13}H_{27}O-(CH_2-CH_2O)_3]_3Si(CH_2)_3SH$,
$[(C_{13}H_{27}O-(CH_2-CH_2O)_4]_3Si(CH_2)_3SH$,
$[(C_{13}H_{27}O-(CH_2-CH_2O)_5]_3Si(CH_2)_3SH$,
$[(C_{13}H_{27}O-(CH_2-CH_2O)_6]_3Si(CH_2)_3SH$,

$[(C_{14}H_{29}O-(CH_2-CH_2O)_2]_3Si(CH_2)_3SH$,
$[(C_{14}H_{29}O-(CH_2-CH_2O)_3]_3Si(CH_2)_3SH$,
$[(C_{14}H_{29}O-(CH_2-CH_2O)_4]_3Si(CH_2)_3SH$,
$[(C_{14}H_{29}O-(CH_2-CH_2O)_5]_3Si(CH_2)_3SH$ oder $[(C_{14}H_{29}O-(CH_2-CH_2O)_6]_3Si(CH_2)_3SH$.

Als (Halogenorganyl)halogensilane können zur Herstellung von Organosilanen der allgemeinen Formel I mit X=SH Verbindungen der allgemeinen Formel III

$$((R''')_2HalSi-R''-Hal \qquad III,$$

eingesetzt werden, wobei Hal, R und R" die oben angegebene Bedeutung haben und R''' unabhängig voneinander R oder Hal ist.

Vorzugsweise können als (Halogenorganyl)halogensilane (Chloroorganyl)chlorsilane verwendet werden. Beispielsweise können als (Halogenorganyl)halogensilane

3-Chlorbutyl(trichlorsilan),
3-Chlorpropyl(trichlorsilan),
2-Chlorethyl(trichlorsilan),
1-Chlormethyl(trichlorsilan),
3-Chlorbutyl(dichlormethoxysilan),
3-Chlorpropyl(dichlormethoxysilan),
2-Chlorethyl(dichlormethoxysilan),
1-Chlormethyl(dichlormethoxysilan),
3-Chlorbutyl(dichlorethoxysilan),
3-Chlorpropyl(dichlorethoxysilan),
2-Chlorethyl(dichlorethoxysilan),
1-Chlormethyl(dichlorethoxysilan),
3-Chlorbutyl(chlordiethoxysilan),
3-Chlorpropyl(chlordiethoxysilan),
2-Chlorethyl(chlordiethoxysilan),
1-Chlormethyl(chlordiethoxysilan),
3-Chlorbutyl(chlordimethoxysilan),
3-Chlorpropyl(chlordimethoxysilan),
2-Chlorethyl(chlordimethoxysilan),

1-Chlormethyl(chlordimethoxysilan),
3-Chlorbutyl(dichlormethylsilan),
3-Chlorpropyl(dichlormethylsilan),
2-Chlorethyl(dichlormethylsilan),
1-Chlormethyl(dichlormethylsilan),
3-Chlorbutyl(chlor-)(methyl-)methoxysilan),
3-Chlorpropyl(chlor-)(methyl-)methoxysilan),
2-Chlorethyl(chlor-)(methyl-)methoxysilan),
1-Chlormethyl(chlor-)(methyl-)methoxysilan),
3-Chlorbutyl(chlor-)(methyl-)ethoxysilan),
3-Chlorpropyl(chlor-)(methyl-)ethoxysilan),
2-Chlorethyl(chlor-)(methyl-)ethoxysilan),
1-Chlormethyl(chlor-)(methyl-)ethoxysilan),
3-Chlorbutyl(chlordimethylsilan),
3-Chlorpropyl(chlordimethylsilan),
2-Chlorethyl(chlordimethylsilan) oder
1-Chlormethyl(chlordimethylsilan) eingesetzt werden.

Das (Halogenorganyl)halogensilan kann ein (Halogenorganyl)halogensilan der allgemeinen Formel III oder eine Mischung aus (Halogenorganyl)chlorsilanen der allgemeinen Formel III sein. (Halogenorganyl)alkoxysilan und (Halogenorganyl)-chlorsilan können im molaren Verhältnis 1:0,00001 bis 1:0,8, bevorzugt 1:0,00001 bis 1:0,5, besonders bevorzugt 1:0,00001 bis 1:0,15, ganz besonders bevorzugt 1:0,00001 bis 1:0,09, eingesetzt werden.

Die Mischung aus (Halogenorganyl)alkyloxysilan und (Halogenorganyl)chlorsilan kann bevorzugt in Abhängigkeit von der verwendeten Apparatur und den gewünschten Effekten, beispielsweise Selektivität der Reaktion, Dauer der Umsetzung, Reaktordurchsatz, Reaktion von (Halogenorganyl)alkyoxysilan und (Halogenorganyl)chlorsilan miteinander, Reaktormaterial oder Prozeßabfolge, bereits vor der Zugabe des Alkalihydrogensulfides hergestellt werden.

Die Qualität und Art der Zusammensetzung der Mischung aus (Halogenorganyl)alkoxysilan und (Halogenorganyl)-chlorsilan kann auf Grundlage der Menge und Art der in der Mischung enthaltenen, hydrolisierbaren Si-Halogenid Bindungen beurteilt werden.

Die Menge an hydrolisierbaren Si-Halogenid in den o.g. Mischungen aus (Halogenorganyl)alkyloxysilan und (Halogenorganyl)chlorsilan, die mit dem genannten Analyseverfahren bestimmt werden kann, kann zwischen 2 und 800.000 mg/kg, bevorzugt 10 und 80.000 mg/kg, besonders bevorzugt 10 und 40.000 mg/kg, betragen.

Die Menge an hydrolisierbaren Si-Halogenid in den o.g. Mischungen aus (Halogenorganyl)alkoxysilan und (Halogenorganyl)chlorsilan, die mit dem genannten Analyseverfahren bestimmt werden kann, kann zwischen 2 und 800.000 mg/kg, bevorzugt 500 und 800.000 mg/kg, besonders bevorzugt 5.000 und 800.000 mg/kg, ganz besonders bevorzugt 50.000 und 800.000 mg/kg, betragen.

Die Menge an hydrolisierbaren Halogenid wird durch das folgende Verfahren bestimmt: Maximal 20 g der Probe werden in einem 150 ml Becherglas mit 80 ml Ethanol und 10 ml Essigsäure versetzt. Der Halogenidgehalt wird potentiographisch mit Silbernitratlösung ($c(AgNO_3)$ = 0,01 mol/l) titriert.

Die vorteilhaften molaren Verhältnisse der Mischungen aus (Halogenorganyl)alkoxysilanen und (Halogenorganyl)-halogensilanen können unter anderem von der Anzahl der Si-Halogen-Funktionen der gewählten (Halogenorganyl)-halogensilane abhängig sein.

Beispielsweise kann bei der Umsetzung von 3-Chlorpropyl(trimethoxysilan) oder 3-Chlorpropyl-(triethoxysilan) und 3-Chlorpropyl(trichlorsilan) bevorzugt ein molares Verhältnis von 1:0,00001 bis 1:0,03 verwendet werden.

Beispielsweise kann bei der Umsetzung von 3-Chlorpropyl(methyldimethoxysilan) oder 3-Chlorpropyl(methyldiethoxysilan) und 3-Chlorpropyl-(methyldichlorsilan) bevorzugt ein molares Verhältnis von 1:0,00001 bis 1:0,045 verwendet werden.

Beispielsweise kann bei der Umsetzung von 3-Chlorpropyl(dimethylmethoxysilan) oder von 3-Chlorpropyl(dimethylethoxysilan) und 3-Chlorpropyl-(dimethylchlorsilan) bevorzugt ein molares Verhältnis von 1:0,00001 bis 1:0,09 verwendet werden.

Das (Halogenorganyl)alkoxysilan und (Halogenorganyl)-halogensilan können miteinander in beliebiger Reihenfolge, Weise, Temperatur und Zeitdauer vermischt werden und erst dann der Alkohol und Alkalihydrogensulfid gemeinsam oder nacheinander zugegeben werden.

Das (Halogenorganyl)halogensilan, Alkalihydrogensulfid und Alkohol können miteinander in beliebiger Reihenfolge, Weise, Temperatur und Zeitdauer vermischt werden und erst dann das (Halogenorganyl)alkoxysilan zugegeben werden.

Das (Halogenorganyl)alkoxysilan, Alkalihydrogensulfid und Alkohol können miteinander in beliebiger Reihenfolge, Weise, Temperatur und Zeitdauer vermischt werden und erst dann das (Halogenorganyl)halogensilan zugegeben

werden.

Das (Halogenorganyl)alkoxysilan, Alkohol und Additive können miteinander in beliebiger Reihenfolge, Weise, Temperatur und Zeitdauer vermischt werden und erst dann Alkalihydrogensulfid zugegeben werden.

Additve, Alkalihydrogensulfid und Alkohol können miteinander in beliebiger Reihenfolge, Weise, Temperatur und Zeitdauer vermischt werden und erst dann das (Halogenorganyl)alkoxysilan zugegeben werden.

Das (Halogenorganyl)alkoxysilan, Alkalihydrogensulfid und Alkohol können miteinander in beliebiger Reihenfolge, Weise, Temperatur und Zeitdauer vermischt werden und erst dann Additive zugegeben werden.

Das (Halogenorganyl)alkoxysilan, Alkalihydrogensulfid und Additve können miteinander in beliebiger Reihenfolge, Weise, Temperatur und Zeitdauer vermischt werden und erst dann Alkohol zugegeben werden.

Verbindungen der allgemeinen Formel I mit X = SH

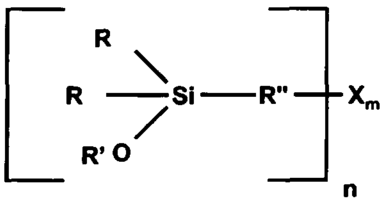

I

können bevorzugt durch Umsetzung von wasserhaltigem Alkalihydrogensulfid mit (Halogenorganyl)alkoxysilanen der allgemeinen Formel II

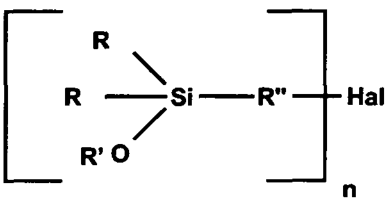

II

in einem Alkohol in einem geschlossenen Gefäß unter Luftabschluß und einem erhöhten Druck in Gegenwart von Additiven hergestellt werden.

Vorzugsweise kann die Reaktion in Gegenwart von $H_2S$ durchgeführt werden.

Die Menge an zugesetztem und/oder freigesetzem $H_2S$ bei der Herstellung von Verbindungen der allgemeinen Formel I mit X=SH kann bezüglich der Menge an eingesetztem Halogenorganyl(alkoxysilan) weniger als 500 mol-%, bevorzugt weniger als 100 mol-%, besonders bevorzugt weniger als 50 mol-%, ganz besonders bevorzugt weniger als 15 mol-%, betragen.

Die Rohproduktausbeute des erfindungsgemäßen Verfahrens kann bei der Herstellung von Verbindungen der allgemeinen Formel I mit X=SH größer als 80%, bevorzugt größer als 85%, besonders bevorzugt größer als 90%, ganz besonders bevorzugt größer als 95%, bezogen auf die theoretische Ausbeute bezüglich der Summe aus (Halogenorganyl)alkoxysilan und (Halogenorganyl)-halogensilan, sein.

Die Rohproduktausbeute kann die gravimetrisch bestimmte Summe aller isolierten flüssigen Verbindungen, nachdem Lösungsmittel und Feststoffe entfernt sind, sein.

Bei der Herstellung von Verbindungen der allgemeinen Formel I mit X=SH kann die Menge des als Nebenprodukt gebildeten $R_2(R'O)Si-(R'')-S-(R'')-Si(OR')R_2$ kleiner als 15 Gew.-%, bevorzugt kleiner als 10 Gew.-%, besonders bevorzugt kleiner als 8 Gew.-%, ganz besonders bevorzugt kleiner als 5 Gew.-%, bezogen auf die Rohproduktmenge sein.

Als wasserhaltige Schwefelungsreagenzien können bei der Herstellung von Verbindungen der allgemeinen Formel I mit X=SH unabhängig voneinander Lithiumhydrogensulfid (LiSH), Natriumhydrogensulfid (NaSH), Kaliumhydrogensulfid (KSH) und Cäsiumhydrogensulfid (CsSH) eingesetzt werden.

Die bei der Herstellung von Verbindungen der allgemeinen Formel I mit X=SH eingesetzten, wasserhaltigen Alkalihydrogensulfide können als Feststoffe oder in Lösung der Reaktion zugesetzt werden.

Die bei der Herstellung von Verbindungen der allgemeinen Formel I mit X=SH für die Reaktion benötigten Alkalihydrogensulfide können vor oder während der Reaktion aus schwefelhaltigen Verbindungen, wie oben beschrieben, gebildet werden.

Die schwefelhaltigen Verbindungen aus denen vor oder während der Reaktion Alkalihydrogensulfide gebildet werden, können $H_2S$, Alkalisulfide $Me_2S$ oder Alkalipolysulfide $Me_2Sg$, bevorzugt $Li_2S$, $Na_2S$, $K_2S$, $Na_2S_2$, $Na_2S_3$, $Na_2S_4$,

$K_2S_2$, $K_2S_3$ oder $K_2S_4$, sein.

Die schwefelhaltigen Verbindungen aus denen vor oder während der Reaktion Alkalihydrogensulfide gebildet werden, können bei der Herstellung von Verbindungen der allgemeinen Formel I mit X=SH durch Protonierung vollständig oder unvollständig, reversibel oder irreversibel zu Alkalihydrogensulfiden reagieren.

Die Protonierung der Schwefelverbindungen aus denen vor oder während der Reaktion Alkalihydrogensulfide gebildet werden, kann bei der Herstellung von Verbindungen der allgemeinen Formel I mit X=SH durch $H_2S$ und / oder organische und / oder anorganische Säuren geschehen.

Die wasserhaltigen Alkalihydrogensulfide können bei der Herstellung von Verbindungen der allgemeinen Formel I mit X=SH mehr als 3 Gew.-%, bevorzugt mehr als 5 Gew.-%, besonders bevorzugt mehr als 10 Gew.-%, ganz besonders bevorzugt mehr als 12 Gew.-%, außerordentlich bevorzugt mehr als 15 Gew.-%, Wasser enthalten.

Die wasserhaltigen Alkalihydrogensulfide können bei der Herstellung von Verbindungen der allgemeinen Formel I mit X=SH mehr als 50 Gew.-%, bevorzugt mehr als 60 Gew.-%, besonders bevorzugt mehr als 65 Gew.-%, ganz besonders bevorzugt mehr als 70 Gew.-%, Alkalihydrogensulfid enthalten.

Die wasserhaltigen Alkalihydrogensulfide können bei der Herstellung von Verbindungen der allgemeinen Formel I mit X=SH, neben Wasser, weitere Nebenbestandteile zu weniger als 50 Gew.-%, bevorzugt weniger als 30 Gew.-%, besonders bevorzugt weniger als 20 Gew.-%, ganz besonders bevorzugt weniger als 10 Gew.-%, enthalten.

Weitere Nebenbestandteile von wasserhaltigen Alkalihydrogensulfiden können neben Wasser unabhängig voneinander Alkalicarbonate, Alkalihydrogencarbonate, Alkalihydroxide, Alkalisulfide, Alkalisulfate, Alkalihydrogensulfate, Alkalithiosulfate und/oder Alkalihydrogenthiosulfate sein.

Die weiteren Nebenbestandteile von wasserhaltigen Alkalihydrogensulfiden können gegenüber den verwendeten Ausgangsstoffen und/oder den entstandenen Produkten bei der Herstellung von Verbindungen der allgemeinen Formel I mit X=SH inert oder reaktiv sein.

Die verwendete, molare Menge an Alkalihydrogensulfid kann bei der Herstellung von Verbindungen der allgemeinen Formel I mit X=SH die Summe der molaren Mengen des eingesetzten (Halogenorganyl)alkoxysilans und des eingesetzten (Halogenorganyl)halogensilans um 1% bis 50%, bevorzugt um 5 bis 30%, besonders bevorzugt um 5 bis 20%, übersteigen.

Geringere als die stöchiometrisch benötigten Mengen an Alkalihydrogensulfid können bei der Herstellung von Verbindungen der allgemeinen Formel I mit X=SH zu einer unvollständigen Umsetzung führen. Dadurch kann in der Folge das Produkt entweder mit Edukt verunreinigt, oder es wird eine aufwendige Aufreinigung notwendig, um Edukte und Produkte voneinander zu trennen.

Die jeweils bezüglich der Ausbeute an Zielprodukt und Ausnutzung des Reaktionsvolumens optimale Reaktionstemperatur kann bei der Herstellung von Verbindungen der allgemeinen Formel I mit X=SH in Abhängigkeit von der Struktur der eingesetzten (Halogenorganyl)alkoxysilans und des als Lösungsmittel verwendeten Alkohols variieren.

Beispielsweise kann bei der Herstellung von Verbindungen der allgemeinen Formel I mit X=SH bei Reaktionen in Methanol eine Reaktionstemperatur zwischen 40 und 95°C, vorzugsweise zwischen 60 und 95°C, im Bezug auf Reaktionszeiten, Nebenproduktmenge und Druckaufbau vorteilhaft sein.

Beispielsweise kann bei der Herstellung von Verbindungen der allgemeinen Formel I mit X=SH bei Reaktionen in Ethanol eine Reaktionstemperatur zwischen 50 und 130°C, vorzugsweise zwischen 75 und 130°C, im Bezug auf Reaktionszeiten, Nebenproduktmenge und Druckaufbau vorteilhaft sein.

Der geschlossenen Behälter kann bei der Herstellung von Verbindungen der allgemeinen Formel I mit X=SH bevorzugt ein aus der Technik bekanntes Reaktionsgefäß sein, das es erlaubt, bei Drücken bis 20 bar und Temperaturen bis 200°C zu arbeiten. Der geschlossene Behälter kann einen Heiz-/Kühlkreislauf besitzen.

Die Nebenproduktmenge kann bei der Herstellung von Verbindungen der allgemeinen Formel I mit X=SH durch Wahl der Reaktionsbedingungen weniger als 20 mol-%, bevorzugt weniger als 15 mol-%, besonders bevorzugt weniger als 10 mol-%, betragen.

Neben den für X = SH gewünschten Mercaptoorganylsilanverbindungen können als Nebenprodukte die entsprechenden Monosulfane oder Disulfane, sowie in Abhängigkeit von der Struktur der monomeren Mercaptoorganylsilanverbindung verschiedene Kombinationen von dimeren oder oligomeren Siloxanen aus Produkten oder auch Produkten mit Edukten entstehen.

In einer zweiten bevorzugten Ausführungsform zur Herstellung von Organosilanen der allgemeinen Formel I mit X=S und m = 3,5-4,5 kann man als wasserhaltiges Schwefelungsreagenz $Me_2S$ und Schwefel einsetzen.

Die Umsetzung kann in Gegenwart eines Lösungsmittels oder Lösungsmittelgemisches und von Additiven erfolgen.

Als wasserhaltige Schwefelungsreagenzien können Ammonium-, Alkali- und Erdalkalisulfide und deren Polysulfide oder Gemische davon verwendet werden. Bevorzugt können als wasserhaltige Schwefelungsreagenzien ammonium-, lithium-, natrium-, kalium- und cäsiumhaltige Schwefelungsreagenzien eingesetzt werden. Besonders bevorzugt können als wasserhaltige Schwefelungsreagenzien $Na_2S$-Hydrat oder $K_2S$-Hydrat eingesetzt werden.

In der zweiten Ausführungsform kann das $Me_2S$ mehr als 10 Gew.-%, bevorzugt mehr als 15 Gew.-%, besonders

bevorzugt mehr als 20 Gew.-%, ganz besonders bevorzugt mehr als 30 Gew.-%, Wasser enthalten.

Die wasserhaltigen Schwefelungsreagenzien können bei der Herstellung von Organosilanen der allgemeinen Formel I mit X=S und m = 3,5-4,5 neben Wasser, weitere Nebenbestandteile zu weniger als 50 Gew.-%, bevorzugt weniger als 30 Gew.-%, besonders bevorzugt weniger als 20 Gew.-%, ganz besonders bevorzugt weniger als 10 Gew.-%, enthalten.

Weitere Nebenbestandteile von wasserhaltigen Schwefelungsreagenzien können bei der Herstellung von Organosilanen der allgemeinen Formel I mit X=S und m = 3,5-4,5 neben Wasser unabhängig voneinander Alkalicarbonate, Alkalihydrogencarbonate, Alkalihydroxide, Alkalisulfate, Alkalihydrogensulfate, Alkaliphosphate, Alkalihydrogenphosphate, Alkalidihydrogenphosphate, Alkalithiosulfate und/oder Alkalihydrogenthiosulfate sein.

Die verwendete, molare Menge an Schwefelungsreagenz kann bei der Herstellung von Organosilanen der allgemeinen Formel I mit X=S und m = 3,5-4,5 die molaren Menge des eingesetzten (Halogenorganyl)alkoxysilans um 0,1 Mol-% bis 50 Mol-%, bevorzugt um 0,1 bis 30 Mol-%, besonders bevorzugt um 0,1 bis 5 Mol-%, übersteigen.

Geringere als die stöchiometrisch benötigten Mengen an Schwefelungsreagenz können bei der Herstellung von Organosilanen der allgemeinen Formel I mit X=S und m = 3,5-4,5 zu einer unvollständigen Umsetzung führen. Dadurch ist in der Folge das Produkt entweder mit Edukt verunreinigt, oder es wird eine aufwendige Aufarbeitung notwendig, um Edukte und Produkte voneinander zu trennen.

Der Schwefel kann in Form von Schwefelpulver, Schwefelgranulat oder in flüssiger Form zugegeben werden.

In der zweiten Ausführungsform kann das Lösungsmittel oder Lösungsmittelgemisch bevorzugt ein organisches Lösungsmittel oder Lösungsmittelgemisch aus organischen Lösungsmitteln sein. Lösungsmittel oder Lösungsmittelgemische können beispielsweise Alkohole oder wasserhaltige Alkohole sein. Der Wassergehalt des Lösungsmittels oder Lösungsmittelgemisches kann 0,1 bis 50 Gew.-%, bevorzugt 0,1 bis 25 Gew.-%, besonders bevorzugt 0,1 bis 10 Gew.-%, ganz besonders bevorzugt 0,1 bis 5 Gew.-%, betragen.

Die Menge an Alkohol kann bei der Herstellung von Organosilanen der allgemeinen Formel I mit X=S und m = 3,5-4,5 mindestens 5 Vol.-%, bevorzugt 10 bis 300 Vol.-%, besonders bevorzugt 10 bis 100 Vol.-%, ganz besonders bevorzugt 10 bis 25 Vol.-%, der eingesetzten Silankomponente oder Silankomponenten betragen.

Der Reaktionsmischung können bei der Herstellung von Organosilanen der allgemeinen Formel I mit X=S und m = 3,5-4,5 unabhängig voneinander vor, während und am Ende der Reaktion Additive zugesetzt werden. Bevorzugt werden die Additive vor der Reaktion zugegeben.

Additive können (Alkaliion) $H_2PO_4$, (Alkaliion) $_2HPO_4$, (Alkaliion)$_3PO_4$, (Alkaliion) $HCO_3$, (Alkaliion)$_2CO_3$, (Alkaliion)$_2SO_4$ oder (Alkaliion)$HSO_4$ sein. Auch die entsprechenden Erdalkalisalze können als Additive eingesetzt werden.

Die Reaktion zur Herstellung von Organosilanen der allgemeinen Formel I mit X=S und m = 3,5-4,5 kann bevorzugt unter Luftabschluß durchgeführt werden.

In der zweiten Ausführungsform können die Organosilane der allgemeinen Formel I Gemische aus Organosilanen der allgemeinen Formel I mit einer mittleren Schwefelkettenlänge von m=3,5-4,5 sein, wobei die Organosilane Schwefelketten von S1 bis S12 haben können, beispielsweise

bei $[(MeO)_3Si(CH_2)_3]_2Sm$:

$[(MeO)_3Si(CH_2)_3]_2S$, $[(MeO)_3Si(CH_2)_3]_2S_2$,
$[(MeO)_3Si(CH_2)_3]_2S_3$, $[(MeO)_3Si(CH_2)_3]_2S_4$,
$[(MeO)_3Si(CH_2)_3]_2S_5$, $[(MeO)_3Si(CH_2)_3]_2S_6$,
$[(MeO)_3Si(CH_2)_3]_2S_7$, $[(MeO)_3Si(CH_2)_3]_2S_8$,
$[(MeO)_3Si(CH_2)_3]_2S_9$, $[(MeO)_3Si(CH_2)_3]_2S_{10}$,
$[(MeO)_3Si(CH_2)_3]_2S_{11}$, $[(MeO)_3Si(CH_2)_3]_2S_{12}$,
$[(MeO)_3Si(CH_2)_3]_2S$,

bei $[(EtO)_3Si(CH_2)_3]_2Sm$:

$[(EtO)_3Si(CH_2)_3]_2S_2$, $[(EtO)_3Si(CH_2)_{3]2}S_3$,
$[(EtO)_3Si(CH_2)_3]_2S_4$, $[(EtO)_3Si(CH_2)_3]_2S_5$,
$[(EtO)_3Si(CH_2)_3]_2S_6$, $[(EtO)_3Si(CH_2)_3]_2S_7$,
$[(EtO)_3Si(CH_2)_3]_2S_8$, $[(EtO)_3Si(CH_2)_3]_2S_9$,
$[(EtO)_3Si(CH_2)_3]_2S_{10}$, $[(EtO)_3Si(CH_2)_3]_2S_{11}$,
$[(EtO)_3Si(CH_2)_3]_2S_{12}$,

bei $[(C_3H_7O)_3Si(CH_2)_3]_2S_m$:

$[(C_3H_7O)_3Si(CH_2)_3]_2S$, $[(C_3H_7O)_3Si(CH_2)_3]_2S_2$,

$[(C_3H_7O)_3Si(CH_2)_3]_2S_3$, $[(C_3H_7O)_3Si(CH_2)_3]_2S_4$,
$[(C_3H_7O)_3Si(CH_2)_3]_2S_5$, $[(C_3H_7O)_3Si(CH_2)_3]_2S_6$,
$[(C_3H_7O)_3Si(CH_2)_3]_2S_7$, $[(C_3H_7O)_3Si(CH_2)_3]_2S_8$,
$[(C_3H_7O)_3Si(CH_2)_3]_2S_9$, $[(C_3H_7O)_3Si(CH_2)_3]_2S_{10}$,
$[(C_3H_7O)_3Si(CH_2)_3]_2S_{11}$, $[(C_3H_7O)_3Si(CH_2)_3]_2S_{12}$.

Organosilane der allgemeinen Formel I können sein:

$[(MeO)_3Si(CH_2)_3]_2S_m$, $[(EtO)_3Si(CH_2)_3]_2S_m$, $[(C_3H_7O)_3Si(CH_2)_3]_2S_m$,
$[(C_{12}H_{25}O)_3Si(CH_2)_3]S_m[(CH_2)_3Si(C_{12}H_{25}O)_3]$,
$[(C_{14}H_{29}O)_3Si(CH_2)_3]S_m[(CH_2)_3Si(C_{14}H_{29}O)_3]$,
$[(C_{16}H_{33}O)_3Si(CH_2)_3]S_m[(CH_2)_3Si(C_{16}H_{33}O)_3]$,
$[(C_{18}H_{37}O)_3Si(CH_2)_3]S_m[(CH2)_3Si(C_{18}H_{37}O)_3]$,
$[(C_{12}H_{25}O)_3Si(CH_2)_3]S_m[(CH_2)_3Si(C_{12}H_{25}O)_3]$,
$[(C_{14}H_{29}O)_3Si(CH_2)_3]S_m[(CH_2)_3Si(C_{14}H_{29}O)_3]$,
$[(C_{16}H_{33}O)_3Si(CH_2)_3]S_m[(CH_2)_3Si(C_{16}H_{33}O)_3]$,
$[(C_{18}H_{37}O)_3Si(CH_2)_3]S_m[(CH2)_3Si(C_{18}H_{37}O)_3]$,
$[(C_{12}H_{25}O)_2(CH_3)Si(CH_2)_3]S_m[(CH_2)_3Si(CH_3)(C_{12}H_{25}O)_2]$,
$[(C_{12}H_{25}O)(C_{14}H_{29}O)(CH_3)Si(CH_2)_3]S_m[(CH_2)_3Si(CH_3)(C_{12}H_{25}O)(C_{14}\ H_{29}O)]$,
$[(C_{12}H_{25}O)(C_{14}H_{21}O)(CH_3)Si(CH_2)_3]S_m[(CH_2)_3Si(CH_3)(C_{12}H_{25}O)(C_{12}\ H_{25}O)]$,
$[(C_{12}H_{25}O)(C_{16}H_{33}O)(CH_3)Si(CH_2)_3]S_m[(CH_2)_3Si(CH_3)(C_{12}H_{25}O)(C_{16}\ H_{33}O)]$,
$[(C_{12}H_{25}O)(C_{18}H_{37}O)(CH_3)Si(CH_2)_3]S_m[(CH_2)_3Si(CH_3)\ (C_{12}H_{25}O)(C_{18}H_{37}O)]$,
$[(C_{12}H_{25}O)(C_{18}H_{37}O)(CH_3)Si(CH_2)3]S_m[(CH_2)_3Si(CH_3)(C_{12}H_{25}O)(C_{18}\ H_{37}O)]$,
$[(C_{14}H_{29}O)_2(CH_3)Si(CH_2)_3]S_m[(CH_2)_3Si(CH_3)(C_{14}H_{29}O)_2]$
$[(C_{19}H_{29}O)(C_{16}H_{33}O)(CH_3)Si(CH_2)_3]S_m[(CH_2)_3Si(CH_3)(C_{14}H_{29}O)(C_{16}\ H_{33}O)]$,
$[(C_{14}H_{29}O)(C_{18}H_{37}O)(CH_3)Si(CH_2)_3]S_m[(CH_2)_3Si(CH_3)(C_{14}H_{29}O)(C_{18}\ H_{37}O)]$,
$[(C_{16}H_{33}O)_2(CH_3)Si(CH_2)_3]S_m(CH_2)_3Si(CH_3)(C_{16}H_{33}O)_2]$,
$[(C_{16}H_{33}O)(C_{18}H_{37}O)(CH_3)Si(CH_2)_3]S_m[(CH_2)_3Si(CH_3)(C_{16}H_{33}O)(C_{18}\ H_{37}O)]$,
$[(C_{18}H_{37}O)_2(CH_3)Si(CH_2)_3]S_m[(CH_2)_3Si(CH_3)(C_{18}H_{37}O)_2]$,
$[(C_{12}H_{25}O)(CH_3)_2Si(CH_2)_3]S_m[(CH_2)_3Si(CH_3)_2(C_{12}H_{25}O)]$,
$[(C_{12}H_{25}O)(CH_3)_2Si(CH_2)_3]S_m[(CH_2)_3Si(CH_3)_2(C_{14}H_{29}O)]$,
$[(C_{12}H_{25}O)(CH_3)_2Si(CH_2)_3]S_m[(CH_2)_3Si(CH_3)_2(C_{16}H_{33}O)]$,
$[(C_{12}H_{25}O)(CH_3)_2Si(CH_2)_3]S_m[(CH_2)_3Si(CH_3)_2(C_{18}H_{37}O)]$,
$[(C_{14}H_{29}O)(CH_3)_2Si(CH_2)_3]S_m[(CH_2)_3Si(CH_3)_2(C_{14}H_{29}O)]$,
$[(C_{14}H_{29}O)(CH_3)_2Si(CH_2)_3]S_m[(CH_2)_3Si(CH_3)_2(C_{16}H_{33}O)]$,
$[(C_{14}H_{29}O)(CH_3)_2Si(CH_2)_3]S_m(CH_2)_3Si(CH_3)_2(C_{18}H_{37}O)]$,
$[(C_{16}H_{33}O)(CH_3)_2Si(CH_2)_3]S_m[(CH_2)_3Si(CH_3)_2(C_{16}H_{33}O)]$,
$[(C_{16}H_{33}O)(CH_3)_2Si(CH_2)_3]S_m[(CH_2)_3Si(CH_3)_2(C_{18}H_{37}O)]$ und
$[(C_{18}H_{37}O)(CH_3)_2Si(CH_2)_3]S_m[(CH_2)_3Si(CH_3)_2(C_{18}H_{37}O)]$ mit

m=3,5-4,5.

Verbindungen der allgemeinen Formel I mit X=S und m = 3,5-4,5

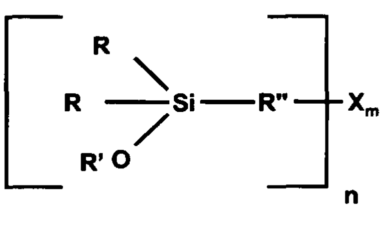

I

können bevorzugt durch Umsetzung von wasserhaltigen Schwefelungsreagenzien mit (Halogenorganyl)alkoxysilanen der allgemeinen Formel II

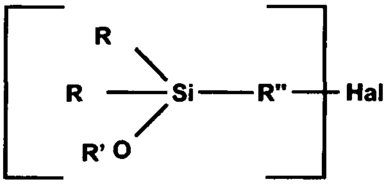

II

in einem organischen Lösungsmittel oder Lösungsmittelgemisch, das wasserhaltig sein kann, beispielsweise Alkohol, in einem offenen oder geschlossenen Gefäß gegebenenfalls unter Druck und unter Luftabschluß hergestellt werden. Ganz besonders bevorzugt kann die Umsetzung von wasserhaltigen Schwefelungsreagenzien mit (Halogenorganyl) alkoxysilanen der allgemeinen Formel II

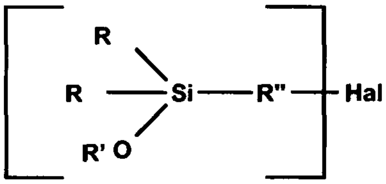

II

in einem offenen Gefäß unter Luftausschluß bei dem sich unter diesen Bedingungen einstellenden Druck durchgeführt werden.

Die jeweils bezüglich der Ausbeute an Zielprodukt optimale Reaktionstemperatur kann in Abhängigkeit von der Struktur der eingesetzten (Halogenorganyl)alkoxysilans und des als Lösungsmittel verwendeten Alkohols hinsichtlich Art und Menge variieren.

Die Reaktionstemperatur kann zwischen der Umgebungstemperatur und dem Siedepunkt des eingesetzten Lösungsmittels oder Lösungsmittelgemisches liegen. Bevorzugt liegt die Reaktionstemperatur zwischen 20°C und dem Siedepunkt des eingesetzten Lösungsmittels oder Lösungsmittelgemisches, besonders bevorzugt liegt die Reaktionstemperatur zwischen 40°C und 80°C, ganz besonders bevorzugt zwischen 60°C und 70°C.

Die Produktausbeute des erfindungsgemäßen Verfahrens kann bei der Herstellung von Organosilanen der allgemeinen Formel I mit X=S und m = 3,5-4,5 größer als 80%, bevorzugt größer als 85%, besonders bevorzugt größer als 90%, ganz besonders bevorzugt größer als 98%, bezogen auf die theoretische Ausbeute bezüglich des (Halogenorganyl)alkoxysilan sein.

Die Rohproduktausbeute kann bei der Herstellung von Organosilanen der allgemeinen Formel I mit X=S und m = 3,5-4,5 die gravimetrisch bestimmte Summe aller isolierten flüssigen Verbindungen, nachdem Lösungsmittel bzw. Lösungsmittelgemische und Feststoffe entfernt sind, sein.

Es kann bei der Herstellung von Organosilanen der allgemeinen Formel I mit X=S und m = 3,5-4,5 durch die Wahl der Zusammensetzung der eingesetzten Mischungen von (Halogenorganyl)alkoxysilanen, Schwefelungsreagenzien, Alkohol, Alkoholmenge und Additiven aktiv und gezielt Einfluß auf die Zusammensetzung von Verbindungen oder Mischungen aus Verbindungen der allgemeinen Formel I mit X=S und m = 3,5-4,5 genommen werden.

Die bei der Herstellung von Organosilanen der allgemeinen Formel I mit X=S und m = 3,5-4,5 verwendete Mischung aus entsprechendem (Halogenorganyl)alkyloxysilan und Additiven kann in Abhängigkeit von der verwendeten Apparatur und den gewünschten und zum Teil unabhängig voneinander beeinflußbaren Effekten, beispielsweise Selektivität der Reaktion, Dauer der Umsetzung, Reaktordurchsatz, Reaktion von (Halogenorganyl)alkyoxysilan und Schwefelungsreagenz miteinander, Wert von m in X = $S_m$, Reaktion von Alkalisulfid und Schwefel, dem Reaktormaterial oder der Prozeßabfolge, bereits vor der Zugabe der Schwefelungsreagenzien hergestellt werden.

Die bei der Herstellung von Organosilanen der allgemeinen Formel I mit X=S und m = 3,5-4,5 verwendete Mischung aus entsprechenden Schwefelungsreagenzien, Schwefel und Additiven kann in Abhängigkeit von der verwendeten Apparatur und den gewünschten und zum Teil unabhängig voneinander beeinflußbaren Effekten, dem Reaktormaterial oder der Prozeßabfolge, bereits vor der Zugabe des (Halogenorganyl) alkoxysilans hergestellt werden.

Die Qualität der bei der Herstellung von Organosilanen der allgemeinen Formel I mit X=S und m = 3,5-4,5 verwendeten (Halogenorganyl)alkoxysilane kann auf der Grundlage der Menge an hydrolisierbaren Si-Halogenid Bindungen beurteilt werden.

Die Menge an hydrolisierbaren Si-Halogenid bei der Herstellung von Organosilanen der allgemeinen Formel I mit X=S und m = 3,5-4,5 in den (Halogenorganyl)alkyloxysilan der Formel II, die mit dem genannten Analyseverfahren

bestimmt werden kann, kann zwischen 2 und 10.000 mg/kg, bevorzugt zwischen 10 und 1.000 mg/kg, besonders bevorzugt zwischen 10 und 100 mg/kg, ganz besonders bevorzugt zwischen 10 und 50 mg/kg, betragen.

Die Menge an hydrolisierbaren Halogenid in den bei der Herstellung von Organosilanen der allgemeinen Formel I mit X=S und m = 1,5-4,5 verwendeten Mischungen aus Halogenorganyl(alkoxysilan) und Additven wird durch das folgende Verfahren bestimmt: Maximal 20 g der Probe werden in einem 150 ml Becherglas mit 80 ml Ethanol und 10 ml Essigsäure versetzt. Der Halogenidgehalt wird potentiographisch mit Silbernitratlösung ($c(AgNO_3)$=0,01 mol/l) titriert.

Das (Halogenorganyl)alkoxysilan und die Additive können bei der Herstellung von Organosilanen der allgemeinen Formel I mit X=S und m = 3,5-4,5 miteinander in beliebiger Reihenfolge, Weise, Temperatur und Zeitdauer vermischt werden und erst dann der Alkohol und Schwefelungsreagenzien gemeinsam oder nacheinander zugegeben werden.

Additive, Schwefelungsreagenzien und Alkohol können bei der Herstellung von Organosilanen der allgemeinen Formel I mit X=S und m = 3,5-4,5 miteinander in beliebiger Reihenfolge, Weise, Temperatur und Zeitdauer vermischt werden und erst dann das (Halogenorganyl)-alkoxysilan zugegeben werden.

Das (Halogenorganyl)alkoxysilan, Schwefelungsreagenzien und Alkohol können bei der Herstellung von Organosilanen der allgemeinen Formel I mit X=S und m = 3,5-4,5 miteinander in beliebiger Reihenfolge, Weise, Temperatur und Zeitdauer vermischt werden und erst dann Additive zugegeben werden.

Das (Halogenorganyl)alkoxysilan, Schwefelungsreagenzien und Additive können bei der Herstellung von Organosilanen der allgemeinen Formel I mit X=S und m = 3,5-4,5 miteinander in beliebiger Reihenfolge, Weise, Temperatur und Zeitdauer vermischt werden und erst dann Alkohol zugegeben werden.

Schwefelungsreagenzien und Additve können bei der Herstellung von Organosilanen der allgemeinen Formel I mit X=S und m = 3,5-4,5 miteinander in beliebiger Reihenfolge, Weise, Temperatur und Zeitdauer vermischt werden und erst dann der Alkohol und (Halogenorganyl)-alkoxysilan gemeinsam oder nacheinander zugegeben werden.

Die wasserhaltigen Schwefelungsreagenzien, von denen $Na_2S$-Hydrat und $K_2S$-Hydrat besonders bevorzugt eingesetzt werden, können dem Reaktionsgemisch vor und/oder während der Reaktion zudosiert werden.

Die bei der Herstellung von Organosilanen der allgemeinen Formel I mit X=S und m = 3,5-4,5 eingesetzten, wasserhaltigen Schwefelungsreagenzien können als Feststoffe oder in Lösung der Reaktion zugesetzt werden.

Die bei der Herstellung von Organosilanen der allgemeinen Formel I mit X=S und m = 3,5-4,5 für die Reaktion benötigten wasserhaltigen Schwefelungsreagenzien können vor oder während der Reaktion aus schwefelhaltigen Verbindungen gebildet werden.

Die schwefelhaltigen Verbindungen aus denen bei der Herstellung von Organosilanen der allgemeinen Formel I mit X=S und m = 3,5-4,5 vor oder während der Reaktion Schwefelungsreagenzien gebildet werden, können Schwefel, Alkalisulfide $Me_2S$ oder Alkalipolysulfide $Me_2Sg$, bevorzugt $Na_2S$, $K_2S$, $Na_2S_2$, $Na_2S_3$, $Na_2S_4$, $K_2S_2$, $K_2S_3$ oder $K_2S_4$, sein.

Für die Herstellung der Reaktionsprodukte aus $Me_2S$, oder $Me_2Sg$ und Schwefel können bei der Herstellung von Organosilanen der allgemeinen Formel I mit X=S und m = 3,5-4,5 unabhängig voneinander Rohstoffe verwendet werden, die mehr als 30 Gew.-%, bevorzugt mehr als 40 Gew.-%, besonders bevorzugt mehr als 50 Gew.-%, ganz besonders bevorzugt mehr als 59 Gew.-% $Me_2S$, beziehungsweise die mehr als 20 Gew.-%, bevorzugt mehr als 30 Gew.-%, besonders bevorzugt mehr als 40 Gew.-%, ganz besonders bevorzugt mehr als 50 Gew.-%, $Me_2S_g$ enthalten.

Der Reaktionsbehälter kann für die Herstellung von Organosilanen der allgemeinen Formel I mit X=S und m = 3,5-4,5 bevorzugt ein aus der Technik bekanntes Reaktionsgefäß sein, das es erlaubt, bei Drücken von 0 bis 10 bar und Temperaturen bis 200°C zu arbeiten. Der Reaktionsbehälter kann einen Heiz-/Kühlkreislauf besitzen.

Die Nebenproduktmenge kann bei der Herstellung von Organosilanen der allgemeinen Formel I mit X=S und m = 3,5-4,5 durch Wahl der Reaktionsbedingungen weniger als 10 mol-%, bevorzugt weniger als 5 mol-%, besonders bevorzugt weniger als 2 mol-%, betragen.

Die Resteduktmenge an Halogenorganyl(alkoxysilan) kann bei der Herstellung von Organosilanen der allgemeinen Formel I mit X=S und m = 3,5-4,5 durch Wahl der Reaktionsbedingungen weniger als 10 Gew.-%, bevorzugt weniger als 5 Gew.-%, besonders bevorzugt weniger als 2 Gew.-%, ganz besonders bevorzugt weniger als 1,5 Gew.-%, betragen.

In der zweiten Ausführungsform kann aus der Rohproduktsuspension das Lösungsmittel/Wasser-Gemisch entfernt werden, vorzugsweise bei Unterdruck, und die entstehende Suspension, enthaltend das gebildete Organosilan der allgemeinen Formel I, von dem Feststoff, vorzugsweise durch Zentrifugieren, Dekantieren oder Filtrieren, abgetrennt werden.

Das Lösungsmittel/Wasser-Gemisch kann bei einem Druck von 800 mbar bis 10 mbar, vorzugsweise durch Destillation, entfernt werden. Das Lösungsmittel/Wasser-Gemisch kann Ethanol enthalten.

Die entstehende Suspension kann Me(Hal), beispielsweise NaCl, Puffersalze und Organosilane der allgemeinen Formel I enthalten.

Aus der Rohproduktsuspension kann das Lösungsmittel entfernt, das Gemisch, enthaltend die Organosilane der allgemeinen Formel (I) und den Feststoff Me(Hal), mit Wasser, enthaltend mindestens einen Puffer, gemischt und die sich bildenden Phasen getrennt werden.

Die Aufarbeitung der Rohproduktsuspension kann eine Filtration und Abtrennung von festen Bestandteilen beinhalten. Die Aufarbeitung der Rohproduktsuspension kann eine Destillation und Abtrennung von flüchtigen Bestandteilen beinhalten. Die Aufarbeitung der Rohproduktsuspension kann zuerst eine Destillation und dann eine Filtration beinhalten. Die Aufarbeitung der Rohproduktsuspension kann zuerst eine Filtration und dann eine Destillation beinhalten. Die Aufarbeitung der Rohproduktsuspension kann zuerst eine Filtration, danach eine Destillation und anschließend eine weitere Filtration beinhalten.

Die nach der Reaktion vorliegende, salzhaltige Rohproduktsuspension kann bei Normaldruck oder reduziertem Druck, bevorzugt bei einem reduzierten Druck zwischen 1 und 700 mbar, besonders bevorzugt zwischen 5 und 500 mbar, ganz besonders bevorzugt zwischen 10 und 250 mbar, aufgearbeitet werden.

Die nach der Reaktion vorliegende, salzhaltige Produktsuspension kann bei Umgebungstemperatur oder erhöhter Temperatur, bevorzugt zwischen 20 und 200 °C, besonders bevorzugt zwischen 40 und 150°C, ganz besonders bevorzugt zwischen 50 und 100°C, aufgearbeitet werden.

Während der Aufarbeitung kann eine Mischung aus Produkt und Feststoff entstehen. Während der Aufarbeitung kann eine Mischung aus Produkt und Alkohol entstehen. Während der Aufarbeitung kann eine Mischung aus Produkt, Alkohol und Wasser entstehen. Während der Aufarbeitung kann eine Mischung aus Produkt und Wasser entstehen. Während der Aufarbeitung kann eine Mischung aus Produkt, Feststoff und Wasser entstehen. Während der Aufarbeitung kann eine Mischung aus Produkt, Me(Hal), beispielsweise Natriumchlorid, und Wasser entstehen. Während der Aufarbeitung kann eine Mischung aus Produkt, Me(Hal), beispielsweise Natriumchlorid, Alkohol und Wasser entstehen.

Zu einer Mischung aus Produkt und/oder Feststoff, und/oder Alkohol und/oder Wasser kann Wasser gegeben werden.

Das Wasser kann in einer Menge von 1 bis 200 Gew.-%, bevorzugt 1 bis 100 Gew.-%, besonders bevorzugt 5 bis 75 Gew.-% ganz besonders bevorzugt 5 bis 50 Gew.-%, bezogen auf das Produkt, zugegeben werden.

Das Wasser kann deionisiertes Wasser sein. Das Wasser kann einen Puffer, beispielsweise Natriumhydrogencarbonat oder Natriumcarbonat, enthalten. Der Puffergehalt des Wassers kann 1 Gew.-% - 20 Gew.-%, vorzugsweise 2 Gew.-% - 5 Gew.-%, betragen.

Das zugegebene Wasser kann einen pH-Wert zwischen 3 und 11, bevorzugt zwischen 4 und 10, besonders bevorzugt zwischen 5 und 9, ganz besonders bevorzugt zwischen 7 und 9, aufweisen.

Der pH-Wert des zugegebenen Wassers kann durch den Puffer, beispielsweise $NaHCO_3$, eingestellt werden.

Der Feststoff kann sich bevorzugt in der wässrigen Phase befinden. Das Salz Me(Hal), beispielsweise Natriumchlorid, kann sich bevorzugt in der wässrigen Phase befinden.

Das Produkt kann sich von der salzhaltigen Wasserphase durch Phasenseparation abtrennen. Das Produkt kann, nach der Phasenseparation, von der salzhaltigen Wasserphase abgetrennt werden. Das Produkt kann, nach der Abtrennung von der salzhaltigen Phase, getrocknet werden.

In einer dritten bevorzugten Ausführungsform zur Herstellung von Organosilanen der allgemeinen Formel I mit X=S und m = 1,5-4,5, bevorzugt m = 1,8-2,5 oder m = 3,4-4,0, besonders bevorzugt m = 2,0-2,3 oder m = 3,6-3,85, ganz besonders bevorzugt m = 2,05-2,2 oder m = 3,65-3,8, kann man als wasserhaltige Schwefelungsreagenzien Alkalihydrogensulfide, $Me_2S$, $Me_2S_g$ und beliebige Kombinationen hiervon, und gegebenenfalls zusätzlich Schwefel und/oder $H_2S$ einsetzen und die Reaktion in einem geschlossenen Gefäß unter Luftabschluß durchführen.

Der Reaktionsmischung können bei der Herstellung von Organosilanen der allgemeinen Formel I mit X=S und m = 1,5-4,5 unabhängig voneinander vor, während und am Ende der Reaktion Additive zugesetzt werden.

Additive können $H_2S$, (Alkaliion) $H_2PO_4$, (Alkaliion)$_2HPO_4$, (Alkaliion)$_3PO_4$, (Alkaliion)$HCO_3$, (Alkaliion)$_2CO_3$, (Alkaliion)$_2SO_4$ oder (Alkaliion)$HSO_4$ sein.

Die Reaktion kann bei der Herstellung von Organosilanen der allgemeinen Formel I mit X=S und m = 1,5-4,5 bevorzugt in einem geschlossen Gefäß durchgeführt werden.

Die Reaktion kann bei der Herstellung von Organosilanen der allgemeinen Formel I mit X=S und m = 1,5-4,5 unter erhöhtem Druck von >0,1 bar bis <20 bar, bevorzugt von >0,1 bar bis <15 bar, besonders bevorzugt von >0,5 bar bis <10 bar, ganz besonders bevorzugt von >0,5 bar bis <6 bar, durchgeführt werden.

Die Reaktion kann bei der Herstellung von Organosilanen der allgemeinen Formel I mit X=S und m = 1,5-4,5 bevorzugt unter Luftabschluß durchgeführt werden.

Die Reaktion kann bei der Herstellung von Organosilanen der allgemeinen Formel I mit X=S und m = 1,5-4,5 bevorzugt so durchgeführt werden, daß ein entstehendes Gas nicht aus dem Reaktionsraum entweichen kann.

Die Menge an Alkohol kann bei der Herstellung von Organosilanen der allgemeinen Formel I mit X=S und m = 1,5-4,5 mindestens 5 Vol.-%, bevorzugt 10 bis 300 Vol.-%, besonders bevorzugt 10 bis 200 Vol.-%, ganz besonders bevorzugt 10 bis 150 Vol.-%, der eingesetzten Silankomponenten betragen. Das eingesetzte Ethanol kann Wasser enthalten.

In der dritten Ausführungsform können die Organosilane der allgemeinen Formel I Gemische aus Organosilanen der allgemeinen Formel I mit einer mittleren Schwefelkettenlänge von m=1,5-4,5 sein, wobei die Organosilane Schwefelketten von S1 bis S12 haben können, beispielsweise

bei $[(MeO)_3Si(CH_2)_3]_2S$:

$[(MeO)_3Si(CH_2)3]_2S$, $[(MeO)_3Si(CH_2)_3]_2S_2$,
$[(MeO)_3Si(CH_2)_3]_2S_3$, $[(MeO)_3Si(CH_2)_3]_2S_4$,
$[(MeO)_3Si(CH_2)_3]_2S_5$, $[(MeO)_3Si(CH_2)_3]_2S_6$,
$[(MeO)_3Si(CH_2)_3]_2S_7$, $[(MeO)_3Si(CH_2)_3]_2S_8$,
$[(MeO)_3Si(CH_2)_3]_2S_9$, $[(MeO)_3Si(CH_2)_3]_2S_{10}$,
$[(MeO)_3Si(CH_2)_3]_2S_{11}$, $[(MeO)_3Si(CH_2)_3]_2S_{12}$,

bei $[(EtO)_3Si(CH_2)_3]_2S_m$:

$[(EtO)_3Si(CH_2)_3]_2S$, $[(EtO)_3Si(CH_2)_3]_2S_2$,
$[(EtO)_3Si(CH_2)_3]_2S_3$, $[(EtO)_3Si(CH_2)_3]_2S_4$,
$[(EtO)_3Si(CH_2)_3]_2S_5$, $[(EtO)_3Si(CH_2)_3]_2S_6$,
$[(EtO)_3Si(CH_2)_3]_2S_7$, $[(EtO)_3Si(CH_2)_3]_2S_8$,
$[(EtO)_3Si(CH_2)_3]_2S_9$, $[(EtO)_3Si(CH_2)_3]_2S_{10}$,
$[(EtO)_3Si(CH_2)_3]_2S_{11}$,$[(EtO)_3Si(CH_2)_3]_2S_{12}$,

bei $[(C_3H_7O)_3Si(CH_2)_3]_2Sm$:

$[(C_3H_7O)_3Si(CH_2)_3]_2S$, $[(C_3H_7O)_3Si(CH_2)_3]_2S_2$,
$[(C_3H_7O)_3Si(CH_2)_3]_2S_3$, $[(C_3H_7O)_3Si(CH_2)_3]_2S_4$,
$[(C_3H_7O)_3Si(CH_2)_3]_2S_5$, $[(C_3H_7O)_3Si(CH_2)_3]_2S_6$,
$[(C_3H_7O)_3Si(CH_2)_3]_2S_7$, $[(C_3H_7O)_3Si(CH_2)_3]_2S_8$,
$[(C_3H_7O)_3Si(CH_2)_3]_2S_9$, $[(C_3H_7O)_3Si(CH_2)_3]_2S_{10}$,
$[(C_3H_7O)_3Si(CH_2)_3]_2S_{11}$, $[(C_3H_7O)_3Si(CH_2)_3]_2S_{12}$.

Organosilane der allgemeinen Formel I können sein:

$[(MeO)_3Si(CH_2)_3]_2S_m$, $[(EtO)_3Si(CH_2)_3]_2S_m$,
$[(C_3H_7O)_3Si(CH_2)_3]_2S_m$,
$[(C_{12}H_{25}O)_3Si(CH_2)_3]S_m[(CH_2)_3Si(C_{12}H_{25}O)_3]$,

$[(C_{14}H_{29}O)_3Si(CH_2)_3]S_m[(CH_2)_3Si(C_{14}H_{29}O)_3]$,
$[(C_{16}H_{33}O)_3Si(CH_2)3]S_m[(CH_2)_3Si\text{-}(C_{16}H_{33}O)_3]$,
$[(C_{18}H_{37}O)_3Si(CH_2)_3]S_m[(CH_2)_3Si(C_{18}H_{37}O)_3]$,
$[(C_{12}H_{25}O)_3Si(CH_2)_3]S_m[(CH2)_3Si(C_{14}H_{29}O)_3]$,
$[(C_{14}H_{29}O)_3Si(CH_2)_3]S_m[(CH_2)_3Si(C_{16}H_{33}O)_3]$,
$[(C_{16}H_{33}O)_3Si(CH_2)_3]S_m[(CH2)_3Si(C_{18}H_{37}O)_3]$,

$[(C_{18}H_{37}O)_3Si(CH_2)_3]S_m[(CH2)_3Si(C_{14}H_{29}O)_3]$,
$[(C_{12}H_{25}O)_2(CH_3)Si(CH_2)_3]S_m[(CH_2)_3Si(CH_3)(C_{12}H_{25}O)_2]$,
$[(C_{12}H_{25}O)(C_{14}H_{29}O)(CH_3)Si(CH_2)_3]S_m[(CH2)_3Si(CH_3)(C_{12}H_{25}O)(C_{14}\ H_{29}O)]$,
$[(C_{12}H_{25}O)(C_{14}H_{29}O)(CH_3)Si(CH_2)_3]S_m[(CH2)_3Si(CH_3)(C_{12}H_{25}O)(C_{12}\ H_{25}O)]$,
$[(C_{12}H_{25}O)(C_{16}H_{33}O)(CH_3)Si(CH_2)_3]S_m[(CH2)_3Si(CH_3)(C_{12}H_{25}O)(C_{16}\ H_{33}O)]$,
$[(C_{12}H_{25}O)(C_{18}H_{37}O)(CH_3)Si(CH_2)_3]Sm[(CH_2)_3Si(CH_3)\ (C_{12}H_{25}O)(C_{18}H_{37}O)]$,
$[(C_{12}H_{25}O)(C_{18}H_{37}O)(CH_3)Si(CH_2)_3]S_m[(CH_2)_3Si(CH_3)(C_{18}H_{37}O)_2]$,
$[(C_{14}H_{29}O)_2(CH_3)Si(CH_2)_3]S_m[(CH_2)_3Si(CH_3)(C_{14}H_{29}O)_2]$,
$[(C_{14}H_{29}O)(C_{16}H_{33}O)(CH_3)Si(CH_2)_3]S_m[(CH_2)_3Si(CH_3)(C_{14}H_{29}O)(C_{16}\ H_{33}O)]$,
$[(C_{14}H_{29}O)(C_{18}H_{37}O)(CH_3)Si(CH_2)_3]S_m[(CH_2)_3Si(CH_3)(C_{14}H_{29}O)(C_{18}\ H_{37}O)]$,
$[(C_{16}H_{33}O)_2(CH_3)Si(CH_2)_3]S_m[(CH_2)_3Si(CH_3)(C_{16}H_{33}O)_2]$,
$[(C_{16}H_{33}O)(C_{18}H_{37}O)(CH_3)Si(CH_2)_3]S_m[(CH_2)_3Si(CH_3)(C_{16}H_{33}O)(C_{18}\ H_{37}O)]$,
$[(C_{18}H_{37}O)_2(CH_3)Si(CH_2)_3]S_m[(CH_2)_3Si(CH_3)(C_{18}H_{37}O)_2]$,
$[(C_{12}H_{25}O)(CH_3)_2Si(CH_2)_3]S_m(CH_2)_3Si(CH_3)_2(C_{12}H_{25}O)]$,
$[(C_{12}H_{25}O)(CH_3)_2Si(CH_2)_3]S_m[(CH_2)_3Si(CH_3)_2(C_{14}H_{29}O)]$,
$[(C_{12}H_{25}O)(CH_3)_2Si(CH_2)_3]S_m[(CH_2)_3Si(CH_3)_2(C_{16}H_{33}O)]$,
$[(C_{12}H_{25}O)(CH_3)_2Si(CH_2)_3]S_m[(CH_2)_3Si(CH_3)_2(C_{18}H_{37}O)]$,
$[(C_{14}H_{29}O)(CH_3)_2Si(CH_2)_3]S_m[(CH_2)_3Si(CH_3)_2(C_{14}H_{29}O)]$,

$[(C_{14}H_{29}O)(CH_3)_2Si(CH_2)_3]S_m[(CH_2)_3Si(CH_3)_2(C_{16}H_{33}O)]$,
$[(C_{14}H_{29}O)(CH_3)_2Si(CH_2)_3]S_m[(CH_2)_3Si(CH_3)_2(C_{18}H_{37}O)]$,
$[(C_{16}H_{33}O)(CH_3)_2Si(CH_2)_3]S_m[(CH_2)_3Si(CH_3)_2(C_{16}H_{33}O)]$,
$[(C_{16}H_{33}O)(CH_3)_2Si(CH_2)_3]S_m[(CH_2)_3Si(CH_3)_2(C_{18}H_{37}O)]$,
$[(C_{18}H_{37}O)(CH_3)_2Si(CH_2)_3]S_m[(CH_2)_3Si(CH_3)_2(C_{18}H_{37}O)]$,

mit m=1,5-4,5.

Verbindungen der allgemeinen Formel I mit X=S und m = 1,5-4,5

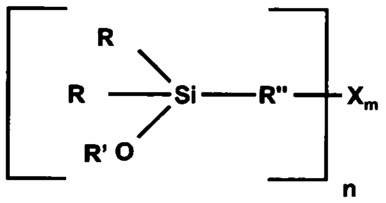

I

können bevorzugt durch Umsetzung von wasserhaltigem Schwefelungsreagenzien mit (Halogenorganyl)alkoxysilanen der allgemeinen Formel II

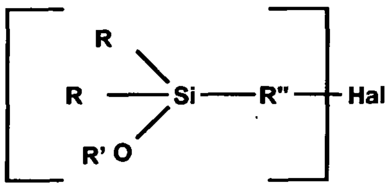

II

in einem Alkohol in einem geschlossenen Gefäß unter Luftabschluß und einem erhöhten Druck in Gegenwart von Additiven hergestellt werden.

Additive bei der Herstellung von Organosilanen der allgemeinen Formel I mit X=S und m = 1,5-4,5 können beispielsweise organische oder anorganische Säuren oder organische oder anorganische Basen sein.

Organische Säuren können Verbindungen der folgenden Grundstrukturen sein: Alkyl-COOH, Aryl-COOH, Aralkyl-COOH, Alkyl-$S(O)_2OH$, HOOC-Alkylen-COOH, HOOC-Aryl-COOH oder HOOC-Aralkyl-COOH.

Organische Säuren können zum Beispiel Ameisensäure, Essigsäure, Propansäure, Pivalinsäure, Isooctansäure, Isononansäure, Laurinsäure (C12), Myristinsäure (C14), Palmitinsäure (C16), Stearinsäure (C18), Ölsäure, Linolsäure, Linolensäure, Benzoesäure, Oxalsäure, 1,4-Cyclohexandicarbonsäure, Adipinsäure, 1,12-Dodecandisäure, Amino-undecansäure, Phthalsäure, Terephtalsäure, Maleinsäure, Fumarsäure, Malonsäure, Acrylsäure oder Methacrylsäure sein.

Anorganische Säuren können zum Beispiel Verbindungen der Zusammensetzung HCl, $H_2SO_4$, $H_3PO_4$, (Alkaliion) $H_2PO_4$, (Alkaliion) $_2HPO_4$, $H_3CO_3$, (Alkaliion) $HCO_3$ oder (Alkaliion) $HSO_4$ sein.

Saure oder basische Additive, die der Reaktionsmischung vor, während oder zum Ende des Verfahrens zugesetzt werden, können bei der Herstellung von Organosilanen der allgemeinen Formel I mit X=S und m = 1,5-4,5 die Struktur (Alkaliion) $H_2PO_4$, (Alkaliion)$_2HPO_4$, (Alkaliion)$_3PO_4$ (Alkaliion)$HCO_3$, (Alkaliion)$_2CO_3$, (Alkaliion)$_2SO_4$ oder (Alkaliion)$HSO_4$ besitzen.

Als Additive bei der Herstellung von Organosilanen der allgemeinen Formel I mit X=S und m = 1,5-4,5 können Halogenorganyl(halogensilane) verwendet werden.

Als (Halogenorganyl)halogensilane können bei der Herstellung von Organosilanen der allgemeinen Formel I mit X=S und m = 1,5-4,5 Verbindungen der allgemeinen Formel III

$((R''')_2$Halsi-R''-Hal        III,

eingesetzt werden, wobei Hal, R und R'' die oben angegebene Bedeutung haben und R''' unabhängig voneinander R oder Hal ist.

Vorzugsweise können bei der Herstellung von Organosilanen der allgemeinen Formel I mit X=S und m = 1,5-4,5 als (Halogenorganyl)halogensilane (Chloroorganyl)chlorsilane verwendet werden.

Vorzugsweise können bei der Herstellung von Organosilanen der allgemeinen Formel I mit X=S und m = 1,5-4,5 als (Halogenorganyl)halogensilane die o.g. Verbindungen eingesetzt werden.

Das (Halogenorganyl)halogensilan kann bei der Herstellung von Organosilanen der allgemeinen Formel I mit X=S und m = 1,5-4,5 ein (Halogenorganyl)halogensilan der allgemeinen Formel III oder eine Mischung aus (Halogenorganyl)chlorsilanen der allgemeinen Formel III sein.

Als Additive können bei der Herstellung von Organosilanen der allgemeinen Formel I mit X=S und m = 1,5-4,5 vor oder/und während oder/und am Ende der Reaktion Verbindungen zugesetzt werden, die in Verbindung mit Alkoholen anorganische oder organische Säuren freisetzen.

Verbindungen die in Anwesenheit von Alkoholen anorganische Säuren freisetzen, können Chlorsilane sein. Chlorsilane können 1 bis 4 Si-Cl Bindungen je Siliciumatom enthalten. Chlorsilane können $(CH_3)SiCl_3$, $(CH_3)_2SiCl_2$, $(CH_3)_3SiCl$, $SiCl_4$, $HSiCl_3$, $H_2SiCl_2$ sein.

Als Additive können bei der Herstellung von Organosilanen der allgemeinen Formel I mit X=S und m = 1,5-4,5 vor oder/und während oder/und am Ende der Reaktion Verbindungen zugesetzt werden, die in Verbindung mit Alkoholen anorganische oder organische Basen freisetzen.

Verbindungen der allgemeinen Formel I mit X=S und m = 1,5-4,5

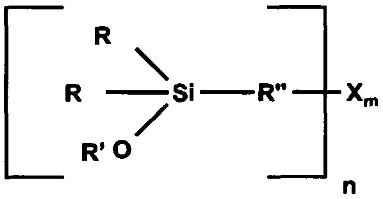

I

können bevorzugt durch Umsetzung von wasserhaltigem Schwefelungsreagenzien mit (Halogenorganyl)alkoxysilanen der allgemeinen Formel II

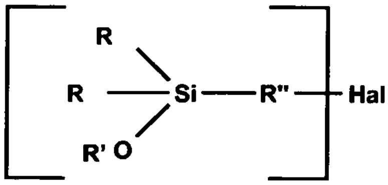

II

in einem Alkohol in einem geschlossenen Gefäß unter Luftabschluß und einem erhöhten Druck in Gegenwart von $H_2S$ hergestellt werden.

Die Menge an $H_2S$ bei der Herstellung von Organosilanen der allgemeinen Formel I mit X=S und m = 1,5-4,5 kann bezüglich der Menge an eingesetztem Halogenorganyl(alkoxysilan) weniger als 500 mol-%, bevorzugt weniger als 100 mol-%, besonders bevorzugt weniger als 50 mol-%, ganz besonders bevorzugt weniger als 15 mol-%, betragen.

Die Rohproduktausbeute des erfindungsgemäßen Verfahrens kann bei der Herstellung von Organosilanen der allgemeinen Formel I mit X=S und m = 1,5-4,5 größer als 80%, bevorzugt größer als 85%, besonders bevorzugt größer als 90%, ganz besonders bevorzugt größer als 95%, bezogen auf die theoretische Ausbeute bezüglich der Summe aus (Halogenorganyl)alkoxysilan und (Halogenorganyl)halogensilan, sein.

Die Rohproduktausbeute kann bei der Herstellung von Organosilanen der allgemeinen Formel I mit X=S und m = 1,5-4,5 die gravimetrisch bestimmte Summe aller isolierten flüssigen Verbindungen, nachdem Lösungsmittel und Feststoffe entfernt sind, sein.

Es kann bei der Herstellung von Organosilanen der allgemeinen Formel I mit X=S und m = 1,5-4,5 durch die Wahl der Zusammensetzung der eingesetzten Mischungen von (Halogenorganyl)alkoxysilanen, Schwefelungsreagenzien, Alkohol, Alkoholmenge und Additiven aktiv und gezielt Einfluß auf die Zusammensetzung von Verbindungen oder Mischungen aus Verbindungen der allgemeinen Formel I mit X=S und m = 1,5-4,5 genommen werden.

Die bei der Herstellung von Organosilanen der allgemeinen Formel I mit X=S und m = 1,5-4,5 verwendete Mischung aus entsprechendem (Halogenorganyl)alkyloxysilan und Additiven kann in Abhängigkeit von der verwendeten Apparatur und den gewünschten und zum Teil unabhängig voneinander beeinflußbaren Effekten, beispielsweise Selektivität der Reaktion, Dauer der Umsetzung, Reaktordurchsatz, Reaktion von (Halogenorganyl)alkyloxysilan und Schwefelungsreagenz miteinander, Wert von m in X = $S_m$, Reaktion von Alkalisulfid und Schwefel, Reaktion von Alkalihydrogensulfid und Schwefel, Reaktion von Alkalihydrogensulfid, Alkalisulfid und Schwefel, dem Reaktormaterial oder

der Prozeßabfolge, bereits vor der Zugabe der Schwefelungsreagenzien hergestellt werden.

Die bei der Herstellung von Organosilanen der allgemeinen Formel I mit X=S und m = 1,5-4,5 verwendete Mischung aus entsprechenden Schwefelungsreagenzien, Schwefel und Additiven kann in Abhängigkeit von der verwendeten Apparatur und den gewünschten und zum Teil unabhängig voneinander beeinflußbaren Effekten, dem Reaktormaterial oder der Prozeßabfolge, bereits vor der Zugabe des Halogenorganyl(alkoxysilans) hergestellt werden.

Die Qualität und Art der Zusammensetzung der bei der Herstellung von Organosilanen der allgemeinen Formel I mit X=S und m = 1,5-4,5 verwendeten Mischung aus (Halogenorganyl)alkoxysilan und Additiven kann auf Grundlage der Menge und Art der in der Mischung enthaltenen, hydrolisierbaren Si-Halogenid Bindungen beurteilt werden.

Die Menge an hydrolisierbaren Si-Halogenid bei der Herstellung von Organosilanen der allgemeinen Formel I mit X=S und m = 1,5-4,5 in den o.g. Mischungen aus (Halogenorganyl)alkyloxysilan und Additiven, die mit dem genannten Analyseverfahren bestimmt werden kann, kann zwischen 2 und 800.000 mg/kg, bevorzugt zwischen 10 und 80.000 mg/kg, besonders bevorzugt zwischen 10 und 40.000 mg/kg, ganz besonders bevorzugt zwischen 100 und 10.000 mg/kg, betragen.

Die Menge an hydrolisierbaren Halogenid in den bei der Herstellung von Organosilanen der allgemeinen Formel I mit X=S und m = 1,5-4,5 verwendeten Mischungen aus Halogenorganyl(alkoxysilan) und Additven wird durch das folgende Verfahren bestimmt: Maximal 20 g der Probe werden in einem 150 ml Becherglas mit 80 ml Ethanol und 10 ml Essigsäure versetzt. Der Halogenidgehalt wird potentiographisch mit Silbernitratlösung (c($AgNO_3$)=0,01 mol/l) titriert.

Die vorteilhaften molaren Verhältnisse der Mischungen aus (Halogenorganyl)alkoxysilanen und (Halogenorganyl)-halogensilane (Additiv = (Halogenorganyl)halogensilan) können bei der Herstellung von Organosilanen der allgemeinen Formel I mit X=S und m = 1,5-4,5 unter anderem von der Anzahl der Si-Halogen-Funktionen der gewählten (Halogenorganyl)halogensilane abhängig sein.

Beispielsweise kann bei der Umsetzung von 3-Chlorpropyl(trimethoxysilan) oder 3-Chlorpropyl-(triethoxysilan) und 3-Chlorpropyl(trichlorsilan) bevorzugt ein molares Verhältnis von 1:0,00001 bis 1:0,03 verwendet werden.

Beispielsweise kann bei der Umsetzung von 3-Chlorpropyl(methyldimethoxysilan) oder 3-Chlorpropyl(methyldiethoxysilan) und 3-Chlorpropyl-(methyldichlorsilan) bevorzugt ein molares Verhältnis von 1:0,00001 bis 1:0,045 verwendet werden.

Beispielsweise kann bei der Umsetzung von 3-Chlorpropyl(dimethylmethoxysilan) oder von 3-Chlorpropyl(dimethylethoxysilan) und 3-Chlorpropyl-(dimethylchlorsilan) bevorzugt ein molares Verhältnis von 1:0,00001 bis 1:0,09 verwendet werden.

Das (Halogenorganyl)alkoxysilan und die Additive können bei der Herstellung von Organosilanen der allgemeinen Formel I mit X=S und m = 1,5-4,5 miteinander in beliebiger Reihenfolge, Weise, Temperatur und Zeitdauer vermischt werden und erst dann der Alkohol und Schwefelungsreagenzien gemeinsam oder nacheinander zugegeben werden.

Additive, Schwefelungsreagenzien und Alkohol können bei der Herstellung von Organosilanen der allgemeinen Formel I mit X=S und m = 1,5-4,5 miteinander in beliebiger Reihenfolge, Weise, Temperatur und Zeitdauer vermischt werden und erst dann das (Halogenorganyl)-alkoxysilan zugegeben werden.

Das (Halogenorganyl)alkoxysilan, Schwefelungsreagenzien und Alkohol können bei der Herstellung von Organosilanen der allgemeinen Formel I mit X=S und m = 1,5-4,5 miteinander in beliebiger Reihenfolge, Weise, Temperatur und Zeitdauer vermischt werden und erst dann Additive zugegeben werden.

Das (Halogenorganyl)alkoxysilan, Schwefelungsreagenzien und Additive können bei der Herstellung von Organosilanen der allgemeinen Formel I mit X=S und m = 1,5-4,5 miteinander in beliebiger Reihenfolge, Weise, Temperatur und Zeitdauer vermischt werden und erst dann Alkohol zugegeben werden.

Schwefelungsreagenzien und Additve können bei der Herstellung von Organosilanen der allgemeinen Formel I mit X=S und m = 1,5-4,5 miteinander in beliebiger Reihenfolge, Weise, Temperatur und Zeitdauer vermischt werden und erst dann der Alkohol und (Halogenorganyl)-alkoxysilan gemeinsam oder nacheinander zugegeben werden.

Als wasserhaltige Schwefelungsreagenzien können bei der Herstellung von Organosilanen der allgemeinen Formel I mit X=S und m = 1,5-4,5 Lithiumhydrogensulfid (LiSH), Natriumhydrogensulfid (NaSH), Kaliumhydrogensulfid (KSH) oder Cäsiumhydrogensulfid (CsSH) eingesetzt werden.

Bevorzugt können als Schwefelungsreagenzien natrium- und kaliumhaltige Schwefelungsreagenzien eingesetzt werden. Besonders bevorzugt können $Na_2S$, $Na_2S_2$, $Na_2S_3$, $Na_2S_4$, $Na_2S_5$, $K_2S$, $K_2S_2$, $K_2S_3$, $K_2S_4$ oder $K_2S_5$ eingesetzt werden.

Die wasserhaltigen Schwefelungsreagenzien können unabhängig voneinander dem Reaktionsgemisch vor und/oder während der Reaktion zugesetzt werden.

Die wasserhaltigen Schwefelungsreagenzien können unabhängig voneinander mit Schwefel oder $H_2S$ vermischt werden und dem Reaktionsgemisch vor, während oder am Ende der Reaktion zugesetzt werden.

In der dritten Ausführungsform kann das Alkalihydrogensulfid mehr als 3 Gew.-%, bevorzugt mehr als 5 Gew.-%, besonders bevorzugt mehr als 10 Gew.-%, ganz besonders bevorzugt mehr als 12 Gew.%, außerordentlich bevorzugt mehr als 15 Gew.-%, Wasser enthalten.

In der dritten Ausführungsform kann das $Me_2S$ mehr als 10 Gew.%, bevorzugt mehr als 15 Gew.-%, besonders bevorzugt mehr als 20 Gew.-%, ganz besonders bevorzugt mehr als 30 Gew.-%, Wasser enthalten.

In der dritten Ausführungsform kann das $Me_2Sg$ mehr als 10 Gew.%, bevorzugt mehr als 15 Gew.-%, besonders bevorzugt mehr als 20 Gew.-%, ganz besonders bevorzugt mehr als 30 Gew.-%, Wasser enthalten.

Die bei der Herstellung von Organosilanen der allgemeinen Formel I mit X=S und m = 1,5-4,5 eingesetzten, wasserhaltigen Schwefelungsreagenzien können als Feststoffe oder in Lösung der Reaktion zugesetzt werden.

Die bei der Herstellung von Organosilanen der allgemeinen Formel I mit X=S und m = 1,5-4,5 für die Reaktion benötigten wasserhaltigen Schwefelungsreagenzien können vor oder während der Reaktion aus schwefelhaltigen Verbindungen gebildet werden.

Die schwefelhaltigen Verbindungen aus denen bei der Herstellung von Organosilanen der allgemeinen Formel I mit X=S und m = 1,5-4,5 vor oder während der Reaktion Schwefelungsreagenzien gebildet werden, können $H_2S$, Alkalisulfide $Me_2S$ oder Alkalipolysulfide $Me_2S_g$, bevorzugt $Li_2S$, $Na_2S$, $K_2S$, $Na_2S_2$, $Na_2S_3$, $Na_2S_4$, $K_2S_2$, $K_2S_3$ oder $K_2S_4$, sein.

Die schwefelhaltigen Verbindungen aus denen vor oder während der Reaktion Schwefelungsreagenzien gebildet werden, können bei der Herstellung von Organosilanen der allgemeinen Formel I mit X=S und m = 1,5-4,5 durch Protonierung oder Deprotonierung vollständig oder unvollständig, reversibel oder irreversibel zu Schwefelungsreagenzien reagieren.

Die Protonierung oder Deprotonierung der Schwefelverbindungen aus denen vor oder während der Reaktion Alkalihydrogensulfide gebildet werden, kann bei der Herstellung von Organosilanen der allgemeinen Formel I mit X=S und m = 1,5-4,5 durch Additive geschehen.

Für die Herstellung der Reaktionsprodukte aus Alkalihydrogensulfid, $Me_2S$, $Me_2S_x$ und Schwefel können bei der Herstellung von Organosilanen der allgemeinen Formel I mit X=S und m = 1,5-4,5 unabhängig voneinander Rohstoffe verwendet werden, die mehr als 40 Gew.-%, bevorzugt mehr als 50 Gew.-%, besonders bevorzugt mehr als 60 Gew.-%, und ganz besonders bevorzugt mehr als 70 Gew.-%, Alkalihydrogensulfid, beziehungsweise die mehr als 30 Gew.-%, bevorzugt mehr als 40 Gew.-%, besonders bevorzugt mehr als 50 Gew.-% und ganz besonders bevorzugt mehr als 59 Gew.-%, $Me_2S$, beziehungsweise die mehr als 20 Gew.-%, bevorzugt mehr als 30 Gew.-%, besonders bevorzugt mehr als 40 Gew.-%, ganz beosnders bevorzugt mehr als 50 Gew.-%, $Me_2Sg$ enthalten.

Die wasserhaltigen Schwefelungsreangentien können bei der Herstellung von Organosilanen der allgemeinen Formel I mit X=S und m = 1,5-4,5 neben Wasser, weitere Nebenbestandteile zu weniger als 50 Gew.-%, bevorzugt weniger als 30 Gew.-%, besonders bevorzugt weniger als 20 Gew.-%, ganz besonders bevorzugt weniger als 10 Gew.-%, enthalten.

Weitere Nebenbestandteile von wasserhaltigen Schwefelungsreagenzien können, bei der Herstellung von Organosilanen der allgemeinen Formel I mit X=S und m = 1,5-4,5, neben Wasser unabhängig voneinander Alkalicarbonate, Alkalihydrogencarbonate, Alkalihydroxide, Alkalisulfate, Alkalihydrogensulfate, Alkalithiosulfate und/oder Alkalihydrogenthiosulfate sein.

Die verwendete, molare Menge an Schwefelungsreagenz kann bei der Herstellung von Organosilanen der allgemeinen Formel I mit X=S und m = 1,5-4,5 die Summe der molaren Menge des eingesetzten (Halogenorganyl) alkoxysilans um 1 Mol-% bis 50 Mol-%, bevozugt um 1 bis 30 Mol-%, besonders bevorzugt um 5 bis 15 Mol-%, übersteigen.

Geringere als die stöchiometrisch benötigten Mengen an Schwefelungsreagenz können bei der Herstellung von Organosilanen der allgemeinen Formel I mit X=S und m = 1,5-4,5 zu einer unvollständigen Umsetzung führen. Dadurch ist in der Folge das Produkt entweder mit Edukt verunreinigt, oder es wird eine aufwendige Aufarbeitung notwendig, um Edukte und Produkte voneinander zu trennen.

Die jeweils bezüglich der Ausbeute an Zielprodukt und Ausnutzung des Reaktionsvolumens optimale Reaktionstemperatur kann in Abhängigkeit von der Struktur der eingesetzten (Halogenorganyl)alkoxysilans und des als Lösungsmittel verwendeten Alkohols hinsichtlich Art und Menge variieren.

Beispielsweise kann bei der Herstellung von Organosilanen der allgemeinen Formel I mit X=S und m = 1,5-4,5 bei Reaktionen in Methanol eine Reaktionstemperatur zwischen 40° und 95°C, vorzugsweise zwischen 60° und 95°C, im Bezug auf Reaktionszeiten, Nebenproduktmenge und Druckaufbau vorteilhaft sein.

Beispielsweise kann bei der Herstellung von Organosilanen der allgemeinen Formel I mit X=S und m = 1,5-4,5 bei Reaktionen in Ethanol eine Reaktionstemperatur zwischen 50° und 130°C, vorzugsweise zwischen 75° und 130°C, im Bezug auf Reaktionszeiten, Nebenproduktmenge und Druckaufbau vorteilhaft sein.

Der geschlossenen Behälter kann bei der Herstellung von Organosilanen der allgemeinen Formel I mit X=S und m = 1,5-4,5 bevorzugt ein aus der Technik bekanntes Reaktionsgefäß sein, das es erlaubt, bei Drücken bis 20 bar und Temperaturen bis 200°C zu arbeiten. Der geschlossenen Behälter kann einen Heiz-/Kühlkreislauf besitzen.

Die Nebenproduktmenge kann bei der Herstellung von Organosilanen der allgemeinen Formel I mit X=S und m = 1,5-4,5 durch Wahl der Reaktionsbedingungen weniger als 20 mol-%, bevorzugt weniger als 15 mol-%, besonders bevorzugt weniger als 10 mol-%, betragen.

Die Nebenproduktmenge kann bei der Herstellung von Organosilanen der allgemeinen Formel I mit X=S und

m = 1,5-4,5 durch Wahl der Reaktionsbedingungen weniger als 20 Gew.-%, bevorzugt weniger als 15 Gew.-%, besonders bevorzugt weniger als 10 Gew.-%, betragen.

Die Resteduktmenge an Halogenorganyl(alkoxysilan) kann bei der Herstellung von Organosilanen der allgemeinen Formel I mit X=S und m = 1,5-4,5 durch Wahl der Reaktionsbedingungen weniger als 20 Gew.-%, bevorzugt weniger als 15 Gew.-%, besonders bevorzugt weniger als 10 Gew.-%, ganz besonders bevorzugt weniger als 5 Gew.-%, betragen.

In der dritten Ausführungsform kann aus der Rohproduktsuspension das Lösungsmittel/Wasser-Gemisch entfernt werden, vorzugsweise bei Unterdruck, und die entstehende Suspension, enthaltend das gebildete Organosilan der allgemeinen Formel I, von dem Feststoff, vorzugsweise durch Zentrifugieren, Dekantieren oder Filtrieren, abgetrennt werden.

Das Lösungsmittel/Wasser-Gemisch kann bei einem Druck von 800 mbar bis 10 mbar, vorzugsweise durch Destillation, entfernt werden. Das Lösungsmittel/Wasser-Gemisch kann Ethanol enthalten.

Die entstehende Suspension kann Me(Hal), beispielsweise NaCl, Puffersalze und Organosilane der allgemeinen Formel I enthalten.

Aus der Rohproduktsuspension kann das Lösungsmittel entfernt, das Gemisch, enthaltend die Organosilane der allgemeinen Formel (I) und den Feststoff Me(Hal), mit Wasser, enthaltend mindestens einen Puffer, gemischt und die sich bildenden Phasen getrennt werden.

Die Aufarbeitung der Rohproduktsuspension kann eine Filtration und Abtrennung von festen Bestandteilen beinhalten. Die Aufarbeitung der Rohproduktsuspension kann eine Destillation und Abtrennung von flüchtigen Bestandteilen beinhalten. Die Aufarbeitung der Rohproduktsuspension kann zuerst eine Destillation und dann eine Filtration beinhalten. Die Aufarbeitung der Rohproduktsuspension kann zuerst eine Filtration und dann eine Destillation beinhalten. Die Aufarbeitung der Rohproduktsuspension kann zuerst eine Filtration, danach eine Destillation und anschließend eine weitere Filtration beinhalten.

Die nach der Reaktion vorliegende, salzhaltige Rohproduktsuspension kann bei Normaldruck oder reduziertem Druck, bevorzugt bei einem reduzierten Druck zwischen 1 und 700 mbar, besonders bevorzugt zwischen 5 und 500 mbar, ganz besonders bevorzugt zwischen 10 und 250 mbar, aufgearbeitet werden.

Die nach der Reaktion vorliegende, salzhaltige Produktsuspension kann bei Umgebungstemperatur oder erhöhter Temperatur, bevorzugt zwischen 20 und 200 °C, besonders bevorzugt zwischen 40 und 150°C, ganz besonders bevorzugt zwischen 50 und 100°C, aufgearbeitet werden.

Während der Aufarbeitung kann eine Mischung aus Produkt und Feststoff entstehen. Während der Aufarbeitung kann eine Mischung aus Produkt und Alkohol entstehen. Während der Aufarbeitung kann eine Mischung aus Produkt, Alkohol und Wasser entstehen. Während der Aufarbeitung kann eine Mischung aus Produkt und Wasser entstehen. Während der Aufarbeitung kann eine Mischung aus Produkt, Feststoff und Wasser entstehen. Während der Aufarbeitung kann eine Mischung aus Produkt, Me(Hal), beispielsweise Natriumchlorid, und Wasser entstehen. Während der Aufarbeitung kann eine Mischung aus Produkt, Me(Hal), beispielsweise Natriumchlorid, Alkohol und Wasser entstehen.

Zu einer Mischung aus Produkt und/oder Feststoff, und/oder Alkohol und/oder Wasser kann Wasser gegeben werden.

Das Wasser kann in einer Menge von 1 bis 200 Gew.-%, bevorzugt 1 bis 100 Gew.-%, besonders bevorzugt 5 bis 75 Gew.-%, ganz besonders bevorzugt 5 bis 50 Gew.-%, bezogen auf das Produkt, zugegeben werden.

Das Wasser kann deionisiertes Wasser sein. Das Wasser kann einen Puffer, beispielsweise Natriumhydrogencarbonat oder Natriumcarbonat, enthalten. Der Puffergehalt des Wassers kann 1 Gew.-% - 20 Gew.-%, vorzugsweise 2 Gew.-% - 5 Gew.-%, betragen.

Das zugegebene Wasser kann einen pH-Wert zwischen 3 und 11, bevorzugt zwischen 4 und 10, besonders bevorzugt zwischen 5 und 9, ganz besonders bevorzugt zwischen 7 und 9, aufweisen.

Der pH-Wert des zugegebenen Wassers kann durch den Puffer, beispielsweise $NaHCO_3$, eingestellt werden.

Der Feststoff kann sich bevorzugt in der wässrigen Phase befinden. Das Salz Me(Hal), beispielsweise Natriumchlorid, kann sich bevorzugt in der wässrigen Phase befinden.

Das Produkt kann sich von der salzhaltigen Wasserphase durch Phasenseparation abtrennen. Das Produkt kann, nach der Phasenseparation, von der salzhaltigen Wasserphase abgetrennt werden. Das Produkt kann, nach der Abtrennung von der salzhaltigen Phase, getrocknet werden.

Das erfindungsgemäße Verfahren hat den Vorteil, daß leicht dosierbare, handelsübliche Feststoffe, beispielsweise wasserhaltiges Natriumhydrogensulfid oder Natriumsulfid, als Schwefelreagenzien verwendet werden.

Das erfindungsgemäße Verfahren hat desweiteren den Vorteil, dass handelsübliche, gebräuchliche, wasserhaltige Schwefelungsrohstoffe eingesetzt werden können. Diese wasserhaltigen, nicht speziell aufbereiteten Rohstoffe sind, gegenüber den aufwändig getrockneten (z.B. auf <3 Gew.-% getrockneten) Alkalihydrogensulfiden, vorteilhaft.

Ein Vorteil besteht in der, durch den vorhandenen Wassergehalt, verringerten oder sogar ausgeschlossenen Selbstentzündlichkeit der Schwefelungsrohstoffe. Dadurch können diese vergleichsweise gefahrlos unter Luft, portioniert, umgefüllt und gehandhabt werden. Das erspart einen zusätzlichen Aufwand und technische Installationen in

Anlagen und Schutzvorrichtungen. Die Gefahr für das technische Bedienpersonal infolge von Schwelbränden durch verschüttetes Alkalihydrogensulfid oder Alkalisulfid $Me_2S$ und Rauchentwicklung bei dessen Oxidation an der Luft wird vermindert.

Ein weiterer Vorteil besteht in der Vereinfachung des Verfahrens und der verbesserten Energiebilanz des Gesamtverfahrens, wenn die Schwefelungsrohstoffe nicht unter Vakuum bei erhöhten Temperaturen getrocknet oder aus Alkalimetall und Schwefel unter drastischen Reaktionsbedingungen hergestellt werden müssen.

Ein Vorteil gegenüber einer azeotropen Trocknung der Schwefelungsrohstoffe besteht in der Vereinfachung des Verfahrens durch Einsparung eines Verfahrensschrittes und den Verzicht auf die zusätzliche Verwendung, den Verbrauch oder die Aufarbeitung eines als Wasserschlepper (Azeotropbildner) fungierenden Lösungsmittels.

Ein weiterer Vorteil des erfindungsgemäßen Verfahrens besteht darin, daß allein durch die Verwendung eines geschlossenen Reaktionsgefäßes (Autoklav oder ähnlichem) und die Zugabe von geringen Mengen von Additiven die Selektivität, der Umsatz und die Rohproduktausbeute erhöht werden kann.

Ein weiterer Vorteil des erfindungsgemäßen Verfahrens gegenüber bekannten Verfahren sind die hohen Umsätze bei kurzen Batchzeiten und bei technisch einfach realisierbaren Temperaturen.

Ein weiterer Vorteil des erfindungsgemäßen Verfahrens sind die hohen Rohproduktausbeuten an flüssigen, nicht zu Polysiloxanen kondensierten Produkten. Das erfindungsgemäße Verfahren zeigt hohe Rohausbeuten an flüssigen Produkten bei gleichzeitig hoher Selektivität der Schwefelungsreaktion z.B. zu Mercaptoverbindungen der allgemeinen Formel I mit X = SH oder Polysulfidverbindungen der allgemeinen Formel I mit X = S und m gleich 1,5 bis 4,5.

Ein weiterer Vorteil des erfindungsgemäßen Verfahrens sind die hohen durch 29Si-NMR-Analyse nachweisbaren Monomergehalte der Produkte. Zu erwarten wäre ein hoher Dimeren- und Trimerengehalt bei geringer Rohproduktausbeute, durch die Hydrolyse der Si-O(Alkyl)-Gruppen mit anschliessender Kondensation der entstandenen Silanolgruppen.

<u>Beispiele:</u>

Bei der Herstellung der Organosilane kann NaSH der Firma ICS Wolfen GmbH mit 25 bis 35 Gew.-% Wasser, NaSH der Firma Lanxi Daming Chem. mit 15 bis 25 Gew.-% Wasser oder NaSH der Firma Goldschmidt TIB GmbH mit 20 bis 30 Gew.-% Wasser verwendet werden.

Bei der Herstellung von Organosilanen kann $Na_2S$ der Firma Tessenderlo mit 35 bis 45 Gew.-% Wasser, $Na_2S$ x X $H_2O$ wie es z.B. über die Firmen Aldrich oder Merck-Schuchard erhältlich ist, mit 20 bis 40 Gew.-% $Na_2S$-Gehalt oder $Na_2S$ x 3 $H_2O$ wie es z.B. über die Firmen Aldrich oder Merck-Schuchard erhältlich ist verwendet werden.

Für die Beurteilung der Reaktionsmischungen wird der Umsatz als der Quotient aus der

- Summe der Flächenprozente von
  3-Mercaptopropyl (triethoxysilan), $(EtO)_3Si-(CH_2)_3-S-(CH_2)_3-Si(OEt)_3$ und $(EtO)_3Si-(CH_2)_3-S_2-(CH_2)_3-Si(OEt)_3$

und der

- Summe der Flächenprozente von
  3-Chlorpropyl(triethoxysilan),
  3-Mercaptopropyl(triethoxysilan), Siloxandimeren aus 3-Mercaptopropyl(triethoxysilan) und 3-Chlorpropyl (triethoxysilan), $(EtO)_3Si-(CH_2)_3-S-(CH_2)_3-S_1(OEt)_3$ und $(EtO)_3Si-(CH_2)_3S_2(CH_2)_3-Si(OEt)_3$ definiert.

Für die Beurteilung der Reaktionsmischungen wird die Selektivität als der Quotient aus
den Flächenprozenten von
3-Mercaptopropyl(triethoxysilan)
und der
Summe der Flächenprozente von 3-Mercaptopropyl(triethoxysilan), Siloxandimeren aus 3-Mercaptopropyl(triethoxysilan) und 3-Chlorpropyl-(triethoxysilan), $(EtO)_3Si-(CH_2)_3-S-(CH_2)_3-Si(OEt)_3$ und $(EtO)_3Si-(CH_2)_3-S_2-(CH_2)_3-Si(OEt)_3$ definiert.

Für die Beurteilung der Reaktionsmischungen wird die GC-Rohproduktkonzentration als der Quotient aus

- den Flächenprozenten von
  3-Mercaptopropyl(triethoxysilan)

und den
Flächenprozenten für Ethanol (dem Lösungsmittel) definiert.

Analytik:

GC-Analytik:

Die GC-Analytik der Reaktionsmischungen wird auf einem Gaschromatographen HP 6890 (WLD) mit einer 30m langen DB5 Säule mit 0,53 mm Innendurchmesser und 1,5 µm Filmdicke durchgeführt. Als Detektor wird ein Wärmeleitfähigkeitsdetektor eingesetzt. Das verwendete Temperaturprogramm beinhaltet folgende Abläufe:

- Starttemperatur 100°C
- Initialzeit 1 Min.
- 20°C/Min auf 280°C
- 280°C 10 Min. halten

Die Retentionszeiten für die folgenden Komponenten betragen:

bei 3,3 min = $Cl\text{-}(CH_2)_3\text{-}Si(OEt)_3$

bei 5,7 min Si263 = $HS\text{-}(CH_2)_3\text{-}Si(OEt)_3$

bei 9,0-10,5 min verschiedene Siloxandimere aus Edukt- und Produktsilan

bei 11,0 min = $(EtO)_3Si\text{-}(CH_2)_3\text{-}S\text{-}(CH_2)_3\text{-}Si(OEt)_3$

bei 12,4 min = $(EtO)_3Si\text{-}(CH_2)_3\text{-}S_2\text{-}(CH_2)_3\text{-}Si(OEt)_3$

Die GC-Analytik der isolierten Rohprodukte wird auf einem Gaschromatographen (FID) mit Dodekan oder Toluol als internem Standard durchgeführt.

Die gaschromatografischen Untersuchungen der Beispiele 5 - 11 werden durchgeführt, wie in "Standard test Method for Silanes Used in Rubber Formulations (Bis-(triethoxysilylpropyl)sulfanes): Characterization by Gas Chromatography (GC), D 6843 - 02" beschrieben.

HPLC-Analytik:

Die Methode zur HPLC-Messung ist beschrieben in "Luginsland, H-D., Reactivity of the Sulfur Functions of the Disulfane Silane TESPD and Tetrasulfane Silane TESPT, paper presented at the ACS Meeting, April 1999, Chicago".

Die mittlere Schwefelkettenlänge wird folgendermaßen berechnet:

$$\overline{S} = \frac{\sum_{i=2}^{10} i \cdot A_i \cdot R_i / M_i}{\sum_{i=2}^{10} A_i \cdot R_i / M_i}$$

$\overline{S}$ = mittlere Schwefelkettenlänge
i = Anzahl der Schwefelatome in der Silankomponente
$M_i$ = Molare Masse der Silankomponente mit i Schwefelatomen
$A_i$ = Fläche des Signals der Silankomponente mit i Schwefelatomen
$R_i$ = Responsefaktor der Schwefelsilankomponente mit i Schwefelatomen

Falls Organosilane der Formel I mit X=S Verbindungen mit $S_1$ enthalten, dann wird die mittlere Schwefelkettenlänge unter Berücksichtigung der Molekulargewichte korrigiert.

$^{29}$Si-NMR:

Die Si-Spektren werden an einem Bruker Avance 500-NMR-Spektrometer mit einer Messfrequenz für Si von 99,35 MHz (H-NMR 500,13 MHz) aufgenommen. Die Spektren werden intern gegen Tetramethylsilan (TMS = 0 ppm) referenziert. Die Proben werden als ca. 30% Lösung in $CDCl_3$ unter Zugabe von Chromacetylacetonat (ca. 0,05 bis 0,1 molare Lösung) als Relaxationsbeschleuniger vermessen. Als Pulssequenz wird eine invers gated Sequenz mit Protonenentkopplung nur während der Aquisitionszeit sowie einem Relaxationsdelay von 5s eingesetzt.

| Si-29-NMR-Daten: | |
|---|---|
| ppm | Zuordnung |
| -46 | R-Si(OR')3 |
| -53 | R-Si(OR')2-O-Si |
| -62 | Si-O-Si(R)(OR')-O-Si |

Korrektur der Integrale:

Trimer = Integral(-62ppm)

Dimer = (Integral(-53ppm) - 2*Integral(-63ppm))/2

Monomer = (Integral(-46ppm) - 3*Integral(-62ppm) - 2*(Integral(-53ppm) - 2*Integral(-62ppm))/2)/2

Die korrigierten Integrale sind direkt proportional zu den Molanteilen der Monomeren, Dimeren und Trimeren in der Probe.

Beispiel 1 (X = SH):

In einem durch ein Ölbad beheizbaren Vierhalskolben werden bei Raumtemperatur 50 g NaSH (70%ig mit 25 Gew.-% Wasser) und 750 ml Ethanol vorgelegt und für 15 min bei 50°C gerührt. Es werden 150 g 3-Chlorpropyl(triethoxysilan) und weitere 150 ml Ethanol zu der Suspension gegeben. Die Mischung wird unter Rühren erwärmt und für 180 min unter Rückfluß gekocht. Die Mischung wird anschließend auf ungefähr 55°C abgekühlt und 1 g Ameisensäure zudosiert. Nach 15 min wird eine Probe entnommen und durch Gaschromatographie analysiert.

Die GC-Analyse der Reaktionsmischung ergibt folgende Zusammensetzung in Flächenprozent:

| | |
|---|---|
| Ethanol | 96,424 |
| 3-Chlorpropyl(triethoxysilan) | 0,086 |
| 3-Mercaptopropyl(triethoxysilan) | 1,828 |
| Siloxandimere aus Edukt- und Produktsilan | 0,322 |
| $(EtO)_3Si-(CH_2)_3-S-(CH_2)_3-Si(OEt)_3$ | 0,322 |
| $(EtO)_3Si-(CH_2)_3-S_2-(CH_2)_3-Si(OEt)_3$ | 0 |

Basierend auf den oben genannten Werten beträgt der Umsatz >96% und die Selektivität der Reaktion 74%. Basierend auf den oben genannten Werten beträgt die GC-Rohproduktkonzentration 1,9%.

Die erhaltene Suspension wird filtriert. Das erhaltene Filtrat wird am Rotationsverdampfer von den flüchtigen

Bestandteilen bei 20-600 mbar und 60-80°C befreit. Es werden 47,4 g eines farblosen, unlöslichen Feststoffes erhalten.

Beispiel 2 (X = SH):

In einem durch ein Ölbad beheizbaren Vierhalskolben werden bei Raumtemperatur 60,9 g NaSH (70%ig mit 25 Gew.-% Wasser) und 750 ml Ethanol vorgelegt und für 15 min bei 50°C gerührt. Es wird eine Mischung von 7,5 g 3-Chlorpropyl(trichlorsilan) und 150 g 3-Chlorpropyl(triethoxysilan) mit einer Druckbürette zugegeben. Es werden weitere 150 ml Ethanol zu der Suspension gegeben. Die Mischung wird unter Rühren erwärmt und für 180 min unter Rückfluß gekocht. Die Mischung wird anschließend auf ungefähr 55°C abgekühlt und 1 g Ameisensäure zudosiert. Nach 15 min wird eine Probe entnommen und durch Gaschromatographie analysiert. Die GC-Analyse der Reaktionsmischung ergibt folgende Zusammensetzung in Flächenprozent:

| | |
|---|---|
| Ethanol | 97,973 |
| 3-Chlorpropyl(triethoxysilan) | 0,021 |
| 3-Mercaptopropyl(triethoxysilan) | 1,042 |
| Siloxandimere aus Edukt- und Produktsilan | 0,133 |
| $(EtO)_3Si-(CH_2)_3-S-(CH_2)_3-Si(OEt)_3$ | 0,142 |
| $(EtO)_3Si-(CH_2)_3-S_2-(CH_2)_3-Si(OEt)_3$ | 0,009 |

Basierend auf den oben genannten Werten beträgt der Umsatz >98% und die Selektivität der Reaktion 79%. Basierend auf den oben genannten Werten beträgt die GC-Rohproduktkonzentration 1,1%.

Die erhaltene Suspension wird filtriert. Das erhaltene Filtrat wird am Rotationsverdampfer von den flüchtigen Bestandteilen bei 20-600 mbar und 60-80°C befreit. Es werden 40 g eines farblosen, unlöslichen, hochviskosen Produktes erhalten.

Beispiel 3 (X = SH):

In einem Autoklaven mit Glasdoppelmantel und Hastelloy C22 Deckel + Armaturen (Buechi AG) werden bei Raumtemperatur 50 g NaSH (70%ig mit 25 Gew.-% Wasser) und 750 ml Ethanol vorgelegt und für 15 min bei 50°C gerührt. Es werden 150 g 3-Chlorpropyl(triethoxysilan) mit einer Druckbürette zugegeben. Es werden weitere 150 ml Ethanol zu der Suspension gegeben. Die Mischung wird unter Rühren auf 105-110°C erwärmt und die Temperatur für 180 min gehalten. Die Mischung wird anschließend auf ungefähr 55°C abgekühlt und 1 g Ameisensäure zudosiert. Nach 15 min wird eine Probe entnommen und durch Gaschromatographie analysiert. Die GC-Analyse der Reaktionsmischung ergibt folgende Zusammensetzung in Flächenprozent:

| | |
|---|---|
| Ethanol | 91,611 |
| 3-Chlorpropyl(triethoxysilan) | 0,195 |
| 3-Mercaptopropyl(triethoxysilan) | 5,659 |
| Siloxandimere aus Edukt- und Produktsilan | 0,829 |
| $(EtO)_3Si-(CH_2)_3-S-(CH_2)_3-Si(OEt)_3$ | 0,253 |
| $(EtO)_3Si-(CH_2)_3-S_2-(CH_2)_3-Si(OEt)_3$ | 0, 033 |

Basierend auf den oben genannten Werten beträgt der Umsatz >97% und die Selektivität der Reaktion 84%. Basierend auf den oben genannten Werten beträgt die GC-Rohproduktkonzentration 6,2%.

Die erhaltene Suspension wird filtriert. Das erhaltene Filtrat wird am Rotationsverdampfer von den flüchtigen Bestandteilen bei 20-600 mbar und 60-80°C befreit. Der ausgefallene Feststoff wird durch Filtration abgetrennt. Es werden 85,2 g einer farblosen Flüssigkeit erhalten. Die Rohproduktausbeute beträgt 57,4%.

Die Analyse mit Gaschromatographie (Dodekan als interner Standard) ergibt folgende Zusammensetzung des erhaltenen Rohproduktes in Gewichtsprozent (Gew.-%):

| | |
|---|---|
| 3-Chlorpropyl(triethoxysilan) (GC) | 1,8 |

(fortgesetzt)

| | |
|---|---|
| 3-Mercaptopropyl(triethoxysilan) (GC) | 52,2 |
| $(EtO)_3Si-(CH_2)_3-S-(CH_2)_3-Si(OEt)_3$ (GC) | 2,2 |

Beispiel 4 (X = SH):

In einem Autoklaven mit Glasdoppelmantel und Hastelloy C22 Deckel + Armaturen (Buechi AG) werden bei Raumtemperatur 60,9 g NaSH (70%ig mit 25 Gew.-% Wasser) und 750 ml Ethanol vorgelegt und für 15 min bei 50°C gerührt. Es wird eine Mischung von 7,5 g 3-Chlorpropyl(trichlorsilan) und 150 g 3-Chlorpropyl(triethoxysilan) mit einer Druckbürette zugegeben. Es werden weitere 150 ml Ethanol zu der Suspension gegeben. Die Mischung wird unter Rühren auf 105-110°C erwärmt und die Temperatur für 180 min gehalten. Die Mischung wird anschließend auf ungefähr 55°C abgekühlt und 1 g Ameisensäure zudosiert. Nach 15 min wird eine Probe entnommen und durch Gaschromatographie analysiert. Die GC-Analyse der Reaktionsmischung ergibt folgende Zusammensetzung in Flächenprozent:

| | |
|---|---|
| Ethanol | 84,203 |
| 3-Chlorpropyl(triethoxysilan) | 0,057 |
| 3-Mercaptopropyl(triethoxysilan) | 12,591 |
| Siloxandimere aus Edukt- und Produktsilan | 0,349 |
| $(EtO)_3Si-(cH_2)_3-S-(cH_2)_3-Si(OEt)_3$ | 0,232 |
| $(EtO)_3Si-(CH_2)_3-S_2-(CH_2)_3-Si(OEt)_3$ | 0,179 |

Basierend auf den oben genannten Werten beträgt der Umsatz >99% und die Selektivität der Reaktion 94%. Basierend auf den oben genannten Werten beträgt die GC-Rohproduktkonzentration 14,9%.

Die erhaltene Suspension wird filtriert. Das erhaltene Filtrat wird am Rotationsverdampfer von den flüchtigen Bestandteilen bei 20-600 mbar und 60-80°C befreit. Der ausgefallene Feststoff wird durch Filtration abgetrennt. Es werden 141,7 g einer farblosen Flüssigkeit erhalten. Die Rohproduktausbeute beträgt 90,3%. Die erhaltene Flüssigkeit hat einen Restwassergehalt von 0,3 Gew.-%.

Die Analyse mit Gaschromatographie (Dodekan als interner Standard) ergibt folgende Zusammensetzung des erhaltenen Rohproduktes in Gewichtsprozent (Gew.-%):

| | |
|---|---|
| 3-Chlorpropyl(triethoxysilan) (GC) | 0,4 |
| 3-Mercaptopropyl(triethoxysilan) (GC) | 77,6 |
| $(EtO)_3Si-(CH_2)_3-S-(CH_2)_3-Si(OEt)_3$ (GC) | 1,5 |

Beispiel 5 (X = S und m = 2,1):

In einem Autoklaven mit Glasdoppelmantel und Hastelloy C22 Deckel + Armaturen (Buechi AG) werden bei Raumtemperatur 300 g Ethanol, 96,7 g $K_2CO_3$, 33,6 g $NaHCO_3$, 37,1 g elementarer Schwefel sowie 63,3 g NaSH-Hydrat (71 %ig, enthält 25 Gew.-% Wasser) vorgelegt und auf 80 °C erwärmt. Nach 30 min werden langsam 500 g 3-Chlorpropyl(triethoxysilan) zugegeben. Der Druck im Reaktor steigt dabei auf 3,5 bar. Nach 20 min werden 13,15 g $Na_2S$-Hydrat (Wassergehalt von 36 Gew.-%) zugegeben. Diese Zugabe wird 3 mal wiederholt, so dass die Gesamtmege an $Na_2S$-Hydrat 52,6 g beträgt. Nach weiteren 30 min wird abgekühlt, das Salz abgetrennt und mit Ethanol gewaschen. Das Lösungsmittel wird im Unterdruck bei ca. 80 - 110 °C vom Produkt entfernt.

Es wird ein leicht gelbes, flüssiges Produkt mit einer Rohausbeute von 93 % erhalten.

Die GC-, HPLC- und 29-Si-NMR-Analysen ergeben folgende Werte:

| | |
|---|---|
| 3-Chlorpropyl(triethoxysilan)/GC | 2,9 Gew.-% |
| 3-Mercaptopropyl(triethoxysilan)/GC | 2,1 Gew.-% |
| $(EtO)_3Si-(CH_2)_3-S-(CH_2)_3-Si(OEt)_3$/GC | 0,1 Gew.-% |

(fortgesetzt)

| | |
|---|---|
| mittlere Schwefelkettenlänge $S_m$/ HPLC+GC | 2,2 |
| Monomergehalt / $^{29}$Si-NMR | 93,0 Gew.-% |

Beispiel 6 (S = X und m = 2,7):

In einem Autoklaven mit Glasdoppelmantel und Hastelloy C22 Deckel + Armaturen (Buechi AG) werden bei Raumtemperatur 300 g Ethanol, 37,0 g elementarer Schwefel sowie 63, 2 g NaSH-Hydrat (71 %ig, enthält 25 Gew.-% Wasser) vorgelegt und auf 80 °C erwärmt. Nach 30 min werden langsam 500 g 3-Chlorpropyl(triethoxysilan) zugegeben. Der Druck im Reaktor steigt dabei auf 3,5 bar. Nach 20 min werden 13,3 g $Na_2S$-Hydrat (Wassergehalt 36 Gew.-%) zugegeben. Diese Zugabe wird noch 3 mal wiederholt, so dass sich insgesamt 53,2 g $Na_2S$-Hydrat in der Reaktionsmischung befinden. Nach weiteren 30 min wird abgekühlt, das Salz abgetrennt und mit Ethanol gewaschen. Das Lösungsmittel wird im Unterdruck bei ca. 80 - 110 °C vom Produkt entfernt.

Es wird ein leicht gelbes, flüssiges Produkt mit einer Rohausbeute von 98 % erhalten.

Die GC-, HPLC- und 29-Si-NMR-Analysen ergeben folgende Werte:

| | |
|---|---|
| 3-Chlorpropyl(triezhoxysilan)/ GC | 14,6 Gew.-% |
| 3-Mercaptopropyl(triethoxysilan)/ GC | 7,8 Gew.-% |
| $(EtO)_3Si-(CH_2)_3-S-(CH_2)3-Si(OEt)_3$/GC | 0,1 Gew.-% |
| mittlere Schwefelkettenlänge $S_m$/HPLC+GC | 2,7 |
| Monomergehalt / $^{29}$Si-NMR | 100 Gew.-% |

Beispiel 7 (X=S mit m = 3,7):

In einem Autoklaven mit Glasdoppelmantel und Hastelloy C22 Deckel + Armaturen (Buechi AG) werden bei Raumtemperatur 300 g Ethanol, 100,0 g elementarer Schwefel sowie 33,7 g NaSH-Hydrat (71 %ig, enthält 25 Gew.-% Wasser) zusammen mit 96,7 g $K_2CO_3$ und 33,6 g $NaHCO_3$ vorgelegt und auf 80 °C erwärmt. Nach 30 min werden langsam 500 g 3-Chlorpropyl(triethoxysilan) zugegeben. Der Druck im Reaktor steigt dabei auf 3,5 bar. Nach 20 min werden 17,6 g $Na_2S$-Hydrat (Wassergehalt 36 Gew.-%) zugegeben. Diese Zugabe wird 3 mal wiederholt, so dass sich insgesamt 70,4 g $Na_2S$-Hydrat in der Reaktionsmischung befinden. Nach weiteren 30 min wird abgekühlt, das Salz abgetrennt und mit Ethanol gewaschen. Das Lösungsmittel wird im Unterdruck bei ca. 80 - 110 °C vom Produkt entfernt.

Es wird ein rotes, flüssiges Produkt mit einer Rohausbeute von 98 % erhalten.

Die GC-, HPLC- und 29-Si-NMR-Analysen ergeben folgende Werte:

| | |
|---|---|
| 3-Chlorpropyl(triethoxysilan)/GC | 3,4 Gew.-% |
| 3-Mercaptopropyl(triethoxysilan)/ GC | 1,6 Gew.-% |
| $(EtO)_3Si-(CH_2)_3-S-(CH_2)_3-Si(OEt)_3$/GC | 0,0 Gew.-% |
| mittlere Schwefelkettenlänge / HPLC+GC | 3,7 |
| Monomergehalt / $^{29}$Si-NMR | 98 Gew.-% |

Beispiel 8 (X = S und m = 2,67):

In einem 3-Hals-Kolben mit Rührer, Thermometer und Rückflusskühler werden bei Raumtemperatur 251 g Ethanol, 18,6 g elementarer Schwefel, 35,9 g NaSH-Hydrat (71 %ig, enthält 25 Gew.-% Wasser), 48,5 g $K_2CO_3$ sowie 16,9 g $NaHCO_3$ vorgelegt und auf 80 °C erwärmt. Nach 30 min werden langsam 250 g 3-Chlorpropyl(triethoxysilan) zugegeben. Nach 60 min wird abgekühlt, das Salz abgetrennt und mit Ethanol gewaschen. Das Lösungsmittel wird im Unterdruck bei ca. 80 - 110 °C vom Produkt entfernt.

Es wird ein gelbes, flüssiges Produkt mit einer Rohausbeute von 98 % erhalten.

Die $^1$H- und $^{29}$Si-NMR-Analysen ergeben folgende Werte:

| | |
|---|---|
| 3-Chlorpropyl(triethoxysilan) / GC | 35,9 Gew.-% |
| 3-Mercaptopropyl(triethoxysilan)/ GC | 0,0 Gew.-% |
| $(EtO)_3Si-(CH_2)_3-S-(CH_2)_3-Si(OEt)_3$ / GC | 0,0 Gew.-% |
| mittlere Schwefelkettenlänge $S_m$ / HPLC | 2,67 |
| Monomergehalt / $^{29}$Si-NMR | 92,1 Gew.-% |

Beispiel 9 (X=S und m=3,6):

481 g (2 Mol) DYNASYLAN CPTEO (CPTEO: 3-Chlopropyltriethoxysilan der Firma Degussa AG), 88 g (2,75 Mol) Schwefel, 120 ml Ethanol, 5 g $NaHCO_3$ und 5 g $Na_2CO_3$ werden vorgelegt und bei 65°C - 70°C gerührt. In 4 Portionen werden dem Ansatz innerhalb einer Stunde 132 g (2 Mol) $Na_2S$ x 3 $H_2O$ (Tessenderlo Chemie Belgien, Wassergehalt ca. 36 Gew.-%) zugefügt. Man beobachtet einen leichten Anstieg der Reaktionstemperatur nach Zugabe des $Na_2S$ x 3 $H_2O$, das zuvor fein zerkleinert wird. Der Ansatz wird tiefrot.

Eine Stunde, nachdem die letzte Portion $Na_2S$ x 3 $H_2O$ zugefügt wird, wird die erste Probe gezogen und per GC untersucht. Das Reaktionsgemisch enthält noch 12,2 Gew.-% CPTEO. Nach einer weiteren Stunde ist der CPTEO-Gehalt auf 5,6 Gew.-% und nach 3 Stunden auf 3,2 Gew.-% gesunken. Nach vier Stunden Reaktionszeit beträgt der CPTEO-Gehalt im Reaktionsgemisch noch 2,1 Gew.-% (insgesamt werden rund 20 g Reaktionsgemisch für GC-Analysen entnommen). Das Reaktionsgemisch hat nach vier Stunden eine gelb-orange Farbe.

Das Ethanol und Wasser wird am Rotationsverdampfer abdestilliert (Druck ca. 200 mbar bis <1 mbar, Badtemperatur 25°C bis 100°C). Man erhält 130 g Destillat (Wassergehalt 37 % = 48 g Wasser).

Das Salz wird durch Filtration abgetrennt und 2 mal mit Cyclohexan und 1 mal mit Ethanol gewaschen.

Nach der Entfernung des Lösungsmittels werden 497 g eines gelben Produktes mit den folgenden analytischen Daten erhalten:

| | |
|---|---|
| 3-Chlorpropyl(triethoxysilan)/GC | 1,5 Gew.-% |
| mittlere Schwefelkettenlänge $S_m$ / HPLC | 3,6 |
| Monomergehalt / $^{29}$Si-NMR | 98,4 Gew.-% |

Beispiel 10 (X=S und m= 3,73):

In einem 1 ltr.-Reaktor werden folgende Stoffe vorgelegt:

- 481 g (2 Mol) CPTEO,
- 91 g (2,85 Mol) Schwefelpulver,
- 120 ml Ethanol,
- 5 g $NaHCO_3$ und
- 5 g $NaCO_3$.

Anschließend wird der Reaktorinhalt bis 50 °C aufgeheizt. Dann werden dem Reaktionsgemisch unter Rühren 132 g (2 Mol) $Na_2S$ x 3 $H_2O$ (fein zerkleinert, Wassergehalt ca. 36 Gew.-%) in 4 Portionen innerhalb einer ½ Stunde zugegeben. Während dieser Zugabe wird ein leichter Temperaturanstieg im Reaktor festgestellt.

Nach beendeter Zugabe von $Na_2S$ x 3 $H_2O$ wird der Reaktorinhalt zur Vervollständigung der Umsetzung 3 Stunden bei 68°C gerührt.

Die GC Analysen des Reaktionsgemisches ergeben einen CPTEO-Gehalt von 2,3 %.

Ohne Abkühlen wird das Reaktionsgemisch in einen Rotationsverdampfer überführt und das Ethanol und Wasser abgetrennt. 80 % der Ethanol/Wasser Menge werden bei einem Druck von 400 mbar und einer Temperatur von 70 bis 96 °C abdestilliert. Die restlichen 20 % der Ethanol/Wasser Menge werden bei einem Druck von 400 mbar bis 1 mbar und einer Temperatur von 96 °C abdestilliert.

Anschließend wird das Si 69/NaCl Gemisch im Reaktor auf 50 °C gekühlt und dann innerhalb von 5 Minuten mit 330 ml gepuffertem VE Wasser (2 % $NaHCO_3$) versetzt, um das NaCl zu lösen.

Die Phasentrennung vollzieht sich unmittelbar nach Abstellen des Rührers.

Der Wassergehalt der organischen Phase (leichte Grünfärbung erkennbar) liegt bei 2800 ppm.

Anschließend wird die organische Phase im Rotationsverdampfer getrocknet (Druck 1 mbar, Temperatur 96 °C) und dann filtriert. Man erhält 488 g eines gelben Produktes.

Analysenwerte aus GC, HPLC und 29Si-NMR für das Endprodukt:

| | |
|---|---|
| 3-Chlorpropyl (triethoxysilan) / GC | 1,7 Gew.-% |
| mittlere Schwefelkettenlänge $S_m$ / HPLC | 3,73 |
| Monomergehalt / $^{29}$Si-NMR | 94,1 Gew.-% |

Beispiel 11 (X=S und m=3,74):

In einem 1 ltr.-Reaktor werden folgende Stoffe vorgelegt:

- 481 g (2 Mol) CPTEO
- 91 g (2,85 Mol) Schwefelpulver
- 120 ml Azeotropethanol (95 % Ethanol, 5% Wasser)
- 5 g $NaHCO_3$
- 5 g $Na_2CO_3$

Anschließend wird der Reaktorinhalt bis 50°C aufgeheizt. Dann werden dem Reaktionsgemisch unter Rühren 132 g 2 Mol $Na_2S$ x 3 $H_2O$ (fein zerkleinert, ca. 36 Gew.-% Wasser) in 4 Portionen innerhalb einer ½ Stunde zugegeben. Während dieser Zugabe wird ein leichter Temperaturanstieg im Reaktor festgestellt.

Nach beendeter Zugabe des $Na_2S$ x 3 $H_2O$ wird der Reaktorinhalt zur Vervollständigung der Umsetzung 3 Stunden bei 68°C gerührt.

Die GC Analysen des Reaktionsgemisches liefern einen CPTEO-Gehalt von 2,5 %.

Ohne Abkühlen wird dann das Reaktionsgemisch in einen Rotationsverdampfer überführt und das Ethanol und Wasser abgetrennt. 80 % der Ethanol/Wasser Menge werden bei einem Druck von 400 mbar und einer Temperatur von 70 bis 96 °C abdestilliert. Die restlichen 20 % der Ethanol/Wasser Menge werden bei einem Druck von 400 bis 1 mbar und einer Temperatur von 96 °C abdestilliert.

Anschließend wird das Si69/NaCl Gemisch im Reaktor auf 50°C gekühlt und dann innerhalb von 5 Minuten mit 330 ml gepuffertem VE Wasser (2 % $NaHCO_3$) versetzt, um das NaCl zu lösen.

Die Phasentrennung vollzieht sich unmittelbar nach Abstellen des Rührers.

Der Wassergehalt der organischen Phase (leichte Grünfärbung erkennbar) liegt um die 2800 ppm.

Anschließend wird die organische Phase im Rotationsverdampfer getrocknet (Druck 1 mbar, Temperatur 96 °C) und dann filtriert. Man erhält 489 g eines gelben Produktes.

Analysenwerte aus GC, HPLC und 29Si-NMR für das Endprodukt:

| | |
|---|---|
| 3-Chlorpropyl(triethoxysilan) / GC | 2,0 Gew.-% |
| mittlere Schwefelkettenlänge $S_m$ / HPLC | 3,74 |
| Monomergehalt / $^{29}$Si -NMR | 91,0 Gew.-% |

Beispiel 12 (X=S und m=2,16):

In einem Autoklaven mit Glasdoppelmantel und Hastelloy C22 Deckel + Armaturen (Buechi AG) werden bei Raumtemperatur 200 g Ethanol (enthält 7,5 % $H_2O$), 55,0 g $Na_2CO_3$, 5,0 g $NaHCO_3$, 25,0 g $Na_2S$-Hydrat (61 %ig, enthält 37 % $H_2O$), 26,4 g elementarer Schwefel sowie 66,05 g NaSH-Hydrat (71 %ig, enthält 29 % $H_2O$) vorgelegt und im geschlossenen System auf 68 °C erwärmt. Der Druck im Reaktor steigt. Nach 20 min wird das 3-Chlorpropyltriethoxysilan langsam zudosiert, damit die Reaktionstemperatur nicht über 70 °C steigt. Nach dem Ende der Dosierung wird 120 min auf 80 °C temperiert. Anschließend wird abgekühlt, der Überdruck abgelassen, das Salz abgetrennt und mit Ethanol gewaschen. Das Lösungsmittel wird im Unterdruck bei ca. 70 °C vom Produkt entfernt.

Es wird ein leicht gelbes Produkt mit einer Rohausbeute von 94 % erhalten.

Die GC-, HPLC- und 29-Si-NMR-Analysen ergeben fogende Werte:

| | |
|---|---|
| 3-Chlorpropyl (triethoxysilan) / GC | 1,9 Gew.-% |

(fortgesetzt)

| | |
|---|---|
| 3-Mercaptopropyl(triethoxysilan) / GC | 1,6 Gew.-% |
| (EtO)3Si-(CH2)3-S-(CH2)3-Si (OEt) 3 / GC | 0,3 Gew.-% |
| Mittlere Schwefelkettenlänge / HPLC + GC | 2,16 |
| Monomergehalt / $^{29}$Si-NMR | 100 Gew.-% |

Beispiel 13 (X=S und m=3,71):

In einem Autoklaven mit Glasdoppelmantel und Hastelloy C22 Deckel + Armaturen (Buechi AG) werden bei Raumtemperatur 150 g Ethanol (enthält 7,5 % $H_2O$), 34,0 g $Na_2CO_3$, 55,0 g $Na_2S$-Hydrat (61 %ig, enthält 37 % $H_2O$), 68,0 g elementarer Schwefel sowie 25,75 g NaSH-Hydrat (71 %ig, enthält 29 % $H_2O$) vorgelegt und im geschlossenen System auf 68 °C erwärmt. Der Druck im Reaktor steigt. Nach 20 min wird das 3-Chlorpropyltriethoxysilan langsam zudosiert, damit die Reaktionstemperatur nicht über 70 °C steigt. Nach dem Ende der Dosierung wird 120 min auf 74 °C temperiert. Anschließend wird abgekühlt, der Überdruck abgelassen, das Salz abgetrennt und mit Ethanol gewaschen. Das Lösungsmittel wird im Unterdruck bei ca. 70 °C vom Produkt entfernt.

Es wird ein leicht gelbes Produkt mit einer Rohausbeute von 94,5 % erhalten.

Die GC-, HPLC- und 29-Si-NMR-Analysen ergeben fogende Werte:

| | |
|---|---|
| 3-Chlorpropyl (triethoxysilan) / GC | 2,5 Gew.-% |
| 3-Mercaptopropyl(triethoxysilan) / GC | 0,2 Gew.-% |
| (EtO)3Si-(CH2)3-S-(CH2)3-Si (OEt)3 / GC | 0,1 Gew.-% |
| Mittlere Schwefelkettenlänge / HPLC + GC | 3,71 |
| Monomergehalt / $^{29}$Si -NMR | 97,2 Gew.-% |

Beispiel 14 (X=S und m=3,62):

In einem Autoklaven mit Glasdoppelmantel und Hastelloy C22 Deckel + Armaturen (Buechi AG) werden bei Raumtemperatur 150 g Ethanol (enthält 7,5 % $H_2O$), 34,0 g $Na_2CO_3$, 55,0 g $Na_2S$-Hydrat (61 %ig, enthält 37 % $H_2O$), 68,0 g elementarer Schwefel sowie 25,75 g NaSH-Hydrat (71 %ig, enthält 29 % $H_2O$) vorgelegt und im geschlossenen System auf 68 °C erwärmt. Der Druck im Reaktor steigt. Nach 20 min wird das 3-Chlorpropylmethyldiethoxysilan langsam zudosiert, damit die Reaktionstemperatur nicht über 70 °C steigt. Nach dem Ende der Dosierung wird 120 min auf 74 °C temperiert. Anschließend wird abgekühlt, der Überdruck abgelassen, das Salz abgetrennt und mit Ethanol gewaschen. Das Lösungsmittel wird im Unterdruck bei ca. 70 °C vom Produkt entfernt.

Es wird ein leicht gelbes Produkt mit einer Rohausbeute von 94 % erhalten.

Die GC-, HPLC- und 29-Si-NMR-Analysen ergeben fogende Werte:

| | |
|---|---|
| 3-Chlorpropyl(methyldiethoxysilan) / GC | 4,0 Gew.-% |
| Mittlere Schwefelkettenlänge / HPLC + GC | 3,62 |

Beispiel 15 (X = SH):

In einem Autoklaven mit Glasdoppelmantel und Hastelloy C22 Deckel + Armaturen (Buechi AG) werden bei Raumtemperatur 52 g NaSH (70%ig mit 25 Gew.-% Wasser) mit 500 ml Ethanol (Seccosolv-Qualität, max. 0,02% Wasser) vorgelegt und der Autoklav geschlossen. Die Suspension wird für 20 Minuten auf 55°C erwärmt. Es wird eine Mischung aus 100 g 3-Chlorpropyl(dimethylethoxysilan) und 5 g 3-Chlorpropyl(dimethylchlorsilan) mit einer Pumpe zu der Suspension dosiert. Anschließend werden weitere 300 ml Ethanol (Seccosolv-Qualität, max. 0,02% Wasser) mit einer Pumpe zu der Mischung gegeben. Die Mischung wird unter Rühren auf 93°C erwärmt und die Temperatur für 180 min gehalten. Die Mischung wird anschließend abgekühlt und der Autoklav geöffnet. Der Reaktorinhalt wird abgelassen und filtriert. Der Filterkuchen wird mit Toluol gewaschen. Die GC-Analyse des Rohproduktes ergibt folgende Bestandteile in Flächen-%:

| | |
|---|---|
| Ethanol | 79,1 |
| Toluol | 15,5 |
| 3-Chlorpropyl(dimethylethoxysilan) | 0,5 |
| 3-Mercaptopropyl(dimethylethoxysilan) | 3,5 |
| Siloxan-Dimer | 0,03 |
| $(EtO)_3Si-(CH_2)_3-S_x-(CH_2)_3-Si(OEt)_3$ | 0,2 |

Basierend auf den oben genannten Werten beträgt der Umsatz 88% und die Selektivität der Reaktion 94%.

Das Filtrat wird am Rotationsverdampfer vom Lösungsmittel befreit. Der Rückstand wird mit Toluol aufgenommen und filtriert. Der Filterkuchen wird gründlich mit Toluol gewaschen und das Filtrat am Rotationsverdampfer vom Lösungsmittel befreit. Es werden 82,5 g flüssiges Endprodukt erhalten.

Beispiel 16 (X = SH):

In einem Autoklaven mit Glasdoppelmantel und Hastelloy C22 Deckel + Armaturen (Buechi AG) werden bei Raumtemperatur 59,4 g NaSH (70%ig mit 25 Gew.-% Wasser) mit 500 ml Ethanol vorgelegt und der Autoklav geschlossen. Die Suspension wird für 15 Minuten auf 50°C erwärmt. Es wird eine Mischung aus 100 g 3-Chlorpropyl(dimethylethoxysilan) und 15 g 3-Chlorpropyl(dimethylchlorsilan) mit einer Pumpe zu der Suspension dosiert. Anschließend werden weitere 100 ml Ethanol mit einer Pumpe zu der Mischung gegeben. Die Mischung wird unter Rühren auf 95°C erwärmt und die Temperatur für 150 min gehalten. Die Mischung wird anschließend abgekühlt und der Autoklav geöffnet. Der Reaktorinhalt wird abgelassen, mit 1,4 g Ameisensäure versetzt, für 15 Minuten gerührt und anschließend filtriert. Der Filterkuchen wird mit Ethanol gewaschen und das Filtrat am Rotationsverdampfer vom Lösungsmittel befreit. Es werden 108,7 g flüssiges Endprodukt isoliert.

Beispiel 17 (X = SH):

In einem Autoklaven mit Glasdoppelmantel und Hastelloy C22 Deckel + Armaturen (Buechi AG) werden bei Raumtemperatur 180 g NaSH (70%ig mit 24 Gew.-% Wasser) mit 300 g Ethanol und 25 g Essigsäure vorgelegt und der Autoklav geschlossen. Die Suspension wird für 15 Minuten auf 50°C erwärmt. Es werden 317 g 3-Chlorpropyl (methyldiethoxysilan) mit einer Pumpe zu der Suspension dosiert. Die Mischung wird unter Rühren auf 73°C erwärmt und die Temperatur für 180 min gehalten. Die Mischung wird anschließend auf 50°C abgekühlt und der Autoklav geöffnet. Die GC-Analyse des Rohproduktes ergibt folgende Zusammensetzung in Flächenprozent:

| | |
|---|---|
| Ethanol | 38,1 |
| 3-Chlorpropyl(methyldiethoxysilan) | 0,9 |
| 3-Mercaptopropyl(methyldiethoxysilan) | 48,4 |

Basierend auf den oben genannten Werten beträgt der Umsatz 98%.

Der Reaktorinhalt wird abgelassen, mit 400 g Pentan vermischt und filtriert. Der Filterkuchen wird mit Pentan gewaschen. Es werden 1113 g Filtrat erhalten.

Das erhaltene Filtrat wird mit Essigsäure neutralisiert. Die erhaltene Produktlösung wird am Rotationsverdampfer von den flüchtigen Bestandteilen bei 20-600 mbar und 60-80°C befreit. Der ausgefallene Feststoff wird durch Filtration abgetrennt. Es werden 251,4 g einer farblosen Flüssigkeit erhalten.

Beispiel 18 (X = SH):

In einem Autoklaven mit Glasdoppelmantel und Hastelloy C22 Deckel + Armaturen (Buechi AG) werden bei Raumtemperatur 100 g NaSH (71%ig mit 24 Gew.-% Wasser) mit 400 g Ethanol (Wassergehalt 5 Gew.-%) und 18 g Essigsäure vorgelegt und der Autoklav geschlossen. Die Suspension wird für 15 Minuten auf 50°C erwärmt. Es werden 240 g 3-Chlorpropyl(triethoxysilan) mit einer Pumpe zu der Suspension dosiert. Die Mischung wird unter Rühren auf 80°C erwärmt und die Temperatur für 180 min gehalten. Die Mischung wird anschließend auf 51°C abgekühlt und der Autoklav geöffnet. Der Reaktorinhalt wird abgelassen und filtriert. Der Filterkuchen wird mit Ethanol (Wassergehalt 5

Gew.-%) gewaschen. Es werden 1049,9 g Filtrat erhalten. Die GC-Analyse des Filtrates ergibt folgende Bestandteile in Gew.-% (interner Standard ist Toluol):

| | |
|---|---|
| Ethanol | 55,1 |
| 3-Chlorpropyl(triethoxysilan) | 2,1 |
| 3-Mercaptopropyl(triethoxysilan) | 16,4 |
| $(EtO>_3si-(CH_2)_3-S-(CH_2)_3-Si(OEt)_3$ | 0,2 |
| $(EtO)_3Si-(CH_2)_3-S_2-(CH_2)_3-Si(OEt)_3$ | 2,1 |

Basierend auf den oben genannten Werten (Gew.-%) beträgt der Umsatz 90% und die Selektivität der Reaktion 88%. Die Rohproduktausbeute beträgt, basierend auf den oben genannten Werten, 95%.

Beispiel 19 (X = SH):

In einem Autoklaven mit Glasdoppelmantel und Hastelloy C22 Deckel + Armaturen (Buechi AG) werden bei Raumtemperatur 100 g NaSH (71%ig mit 24 Gew.-% Wasser) mit 400 g Ethanol (Wassergehalt 5 Gew.-%), 46 g $NaHCO_3$, 5,05 g $Na_2CO_3$ und 18 g Essigsäure vorgelegt und der Autoklav geschlossen. Die Suspension wird für 15 Minuten auf 51°C erwärmt. Es werden 240 g 3-Chlorpropyl(triethoxysilan) mit einer Pumpe zu der Suspension dosiert. Die Mischung wird unter Rühren auf 81°C erwärmt und die Temperatur für 90 min gehalten. Die Mischung wird anschließend auf 51°C abgekühlt und der Autoklav geöffnet. Der Reaktorinhalt wird abgelassen und filtriert. Der Filterkuchen wird mit Ethanol (Wassergehalt 5 Gew.-%) gewaschen. Es werden 1081,2 g Filtrat erhalten. Die GC-Analyse des Filtrates ergibt folgende Bestandteile in Gew.-% (interner Standard ist Toluol):

| | |
|---|---|
| Ethanol | 54 |
| 3-Chlorpropyl(triethoxysilan) | 2,2 |
| 3-Mercaptopropyl(triethoxysilan) | 15,7 |
| $(EtO)_3Si-(CH_2)_3-S-(CH_2)_3-Si(OEt)_3$ | 0, 2 |
| $(EtO)_3Si-(CH_2)_3-S_2-(CH_2)_3-Si(OEt)_3$ | 2, 9 |

Basierend auf den oben genannten Werten (Gew.-%) beträgt der Umsatz 89% und die Selektivität der Reaktion 83,5%. Die Rohproduktausbeute beträgt, basierend auf den oben genannten Werten, 95%.

Beispiel 20 (X = SH):

In einem Autoklaven mit Glasdoppelmantel und Hastelloy C22 Deckel + Armaturen (Buechi AG) werden bei Raumtemperatur 100 g NaSH (71%ig mit 24 Gew.-% Wasser) mit 400 g Ethanol (Wassergehalt 5 Gew.-%), 46 g $NaHCO_3$, 5,05 g $Na_2CO_3$ und 18 g Essigsäure vorgelegt und der Autoklav geschlossen. Die Suspension wird für 15 Minuten auf 51°C erwärmt. Es werden 240 g 3-Chlorpropyl(triethoxysilan) mit einer Pumpe zu der Suspension dosiert. Die Mischung wird unter Rühren auf 81°C erwärmt und die Temperatur für 120 min gehalten. Die Mischung wird anschließend auf 44°C abgekühlt und der Autoklav geöffnet. Der Reaktorinhalt wird abgelassen und filtriert. Der Filterkuchen wird mit Ethanol (Wassergehalt 5 Gew.-%) gewaschen. Es werden 1052,9 g Filtrat erhalten. Die GC-Analyse des Filtrates ergibt folgende Bestandteile in Gew.-% (interner Standard ist Toluol):

| | |
|---|---|
| Ethanol | 52,4 |
| 3-Chlorpropyl(triethoxysilan) | 1 |
| 3-Mercaptopropyl(triethoxysilan) | 16,8 |
| $(EtO)_3Si-(CH_2)_3-S-(CH_2)_3-Si(OEt)_3$ | 0,2 |
| $(EtO)_3Si-(CH_2)_3-S_2-(CH_2)_3-Si(OEt)_3$ | 0,9 |

Basierend auf den oben genannten Werten (Gew.-%) beträgt der Umsatz 95% und die Selektivität der Reaktion

94%.

Beispiel 21 (X = SH):

In einem Autoklaven mit Glasdoppelmantel und Hastelloy C22 Deckel + Armaturen (Buechi AG) werden bei Raumtemperatur 100 g NaSH (71%ig mit 24 Gew.-% Wasser) mit 400 g Ethanol, 23 g $Na_2HPO_4$ x 2 $H_2O$, 17 g $KH_2PO_4$ und 18 g Essigsäure vorgelegt und der Autoklav geschlossen. Die Suspension wird für 15 Minuten erwärmt. Es werden zwischen 40-50°C 240 g 3-Chlorpropyl(triethoxysilan) mit einer Pumpe zu der Suspension dosiert. Die Mischung wird unter Rühren auf 89°C erwärmt und die Temperatur für 90 min gehalten. Die Mischung wird anschließend auf 50°C abgekühlt und der Autoklav geöffnet. Der Reaktorinhalt wird abgelassen und filtriert. Der Filterkuchen wird mit Ethanol gewaschen. Es werden 1109,2 g Filtrat erhalten. Die GC-Analyse der filtrierten Rohproduktlösung ergibt in Gew.-% (interner Standard ist Toluol):

| | |
|---|---|
| Ethanol | 57,4 |
| 3-Chlorpropyl (triethoxysilan) | 2,2 |
| 3-Mercaptopropyl(triethoxysilan) | 14,3 |
| $(EtO)_3Si-(CH_2)_3-S-(CH_2)_3-Si(OEt)_3$ | 0,3 |
| $(EtO)_3Si-(CH_2)_3-S_2-(CH_2)_3-Si(OEt)_3$ | 2,8 |

Im Rohprodukt der Reaktion sind >90 Gew.-% des eingesetzten Silans in unhydrolisierter Form enthalten.

Basierend auf den in der Tabelle genannten Werten (Gew.-%) beträgt der Umsatz 89% und die Selektivität der Reaktion 82%.

## Patentansprüche

**1.** Verfahren zur Herstellung von Organosilanen der allgemeinen Formel I,

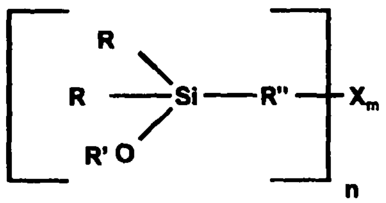

I

wobei

R gleich oder verschieden und eine $C_1$-$C_8$-Alkyl-, $C_1$-$C_8$-Alkenyl-, $C_1$-$C_8$-Aryl-, $C_1$-$C_8$-Aralkylgruppe oder eine OR' Gruppe ist,

R' gleich oder verschieden und eine $C_1$-$C_{24}$-verzweigte oder unverzweigte einbindige Alkyl- oder Alkenyl-Gruppe, eine Arylgruppe, eine Aralkylgruppe, ein Wasserstoff, eine Alkylethergruppe O-$(CR^{III}_2)$-O-Alk oder O-$(CR^{III}_2)_y$-O-Alk oder eine Alkylpolyethergruppe O-$(CR^{III}_2O)_y$-Alk oder O-$(CR^{III}_2$-$CR^{III}_2$-$O)_y$-Alk, mit y = 2-20, $R^{III}$ unabhängig voneinander H oder eine Alkylgruppe ist und Alk eine verzweigte oder unverzweigte, gesättigte oder ungesättigte, aliphatische, aromatische oder gemischt aliphatische /aromatische einbindige $C_1$-$C_{30}$ - Kohlenwasserstoffgruppe ist, ist,

R" eine verzweigte oder unverzweigte, gesättigte oder ungesättigte, aliphatische, aromatische oder gemischt aliphatische /aromatische zweibindige $C_1$-$C_{30}$ Kohlenwasserstoffgruppe, die gegebenenfalls mit F-, Cl-, Br-, I-, HS-, $NH_2$-, oder NHR' substituiert ist, ist,

X = S wenn n=2 und m eine mittlere Schwefelkettenlänge von 1,5 bis 4,5 ist und

X = SH wenn n=1 und m=1 ist,

durch Umsetzung von (Halogenorganyl)alkoxysilan der Formel II,

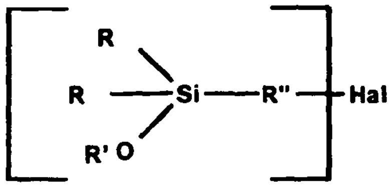

II

wobei R, R' und R " die oben angegebenen Bedeutungen haben und Hal Chlor, Brom, Fluor oder Iod ist, mit einem Schwefelungsreagenz, ausgewählt aus der Gruppe Alkalihydrogensulfid, Metallsulfid $Me_2S$, Metallpolysulfid $Me_2Sg$ und beliebige Kombinationen hiervon, mit Me=Alkalimetall, $NH_4$ oder (Erdalkalimetall) $_{1/2}$, und g=1,5-8,0, und gegebenenfalls zusätzlich mit Schwefel und/oder mit $H_2S$ in Alkohol, **dadurch gekennzeichnet, daß** das $Me_2S$ oder $Me_2S_g$ mehr als 10 Gew.-% Wasser und das Alkalihydrogensulfid mehr als 3 Gew.-% Wasser enthält und man vor oder während der Reaktion Additive, ausgewählt aus der Gruppe nichtalkoholische Lösungsmittel, polare, protische, aprotische, basische oder saure Additive, zugibt.

2. Verfahren zur Herstellung von Organosilanen nach Anspruch 1, **dadurch gekennzeichnet, daß** man aus der Rohproduktsuspension das Lösungsmittel/Wasser-Gemisch entfernt und das gebildete Organosilan der allgemeinen Formel I von dem Feststoff abtrennt.

3. Verfahren zur Herstellung von Organosilanen nach Anspruch 1, **dadurch gekennzeichnet, daß** man aus der Rohproduktsuspension das Lösungsmittel entfernt, das Gemisch, enthaltend die Organosilan der allgemeinen Formel (I) und den Feststoff Me(Hal), mit Wasser, enthaltend mindestens einen Puffer, mischt und die sich bildenden Phasen trennt.

4. Verfahren zur Herstellung von Organosilanen nach Anspruch 1, **dadurch gekennzeichnet, daß** man bei Organosilanen der allgemeinen Formel I mit X=SH, m=1 und n=1 als wasserhaltiges Schwefelungsreagenz ein Alkalihydrogensulfid einsetzt.

5. Verfahren zur Herstellung von Organosilanen nach Anspruch 1, **dadurch gekennzeichnet, daß** man bei Organosilanen der allgemeinen Formel I mit X=S und m = 3,5-4,5 als wasserhaltiges Schwefelungsreagenz $Me_2S$ und Schwefel einsetzt.

6. Verfahren zur Herstellung von Organosilanen nach Anspruch 1, **dadurch gekennzeichnet, daß** man bei Organosilanen der allgemeinen Formel I mit X=S und m = 1,5-4,5 als wasserhaltige Schwefelungsreagenzien Alkalihydrogensulfide, $Me_2S$, $Me_2Sg$ und beliebige Kombinationen hiervon, und gegebenenfalls zusätzlich Schwefel und/oder $H_2S$ einsetzt und die Reaktion in einem geschlossenen Gefäß unter Luftabschluß durchführt.

## Claims

1. Process for the preparation of organosilanes of the general formula I,

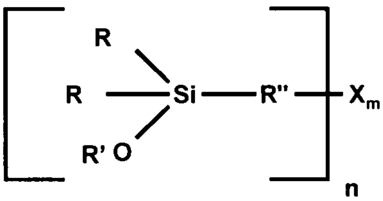

I

in which R are identical or different and are a $C_1$-$C_8$-alkyl, $C_1$-$C_8$-alkenyl, $C_1$-$C_8$-aryl or $C_1$-$C_8$-aralkyl group or an OR' group,
R' are identical or different and are a branched or straight-chain monovalent $C_1$-$C_{24}$-alkyl or -alkenyl group, an aryl group, an aralkyl group, a hydrogen, an alkyl ether group O- $(CR^{III}_2)$ -O-Alk or O-$(CR^{III}_2)_y$-O-Alk or an alkyl polyether group O-$(CR^{III}_2O)_y$-Alk or 0- $(CR^{III}_2$-$CR^{III}_2$-$O)_y$-Alk, where y = 2-20, $R^{III}$, independently of one another, are H or an

alkyl group, and Alk is a branched or straight-chain, saturated or unsaturated, aliphatic, aromatic or mixed aliphatic/aromatic monovalent $C_1$-$C_{30}$-hydrocarbon group,
R" is a branched or straight-chain, saturated or unsaturated, aliphatic, aromatic or mixed aliphatic/aromatic divalent $C_1$-$C_{30}$-hydrocarbon group which is optionally substituted by F, Cl, Br, I, HS, $NH_2$ or NHR',
X = S if n=2 and m is an average sulphur chain length of from 1.5 to 4.5, and
X = SH if n=1 and m=1,
by reacting a (haloorganyl)alkoxysilane of the formula II

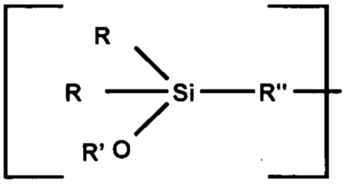

II

in which R, R' and R" have the abovementioned meanings and Hal is chlorine, bromine, fluorine or iodine,
with a sulphurization reagent selected from the group consisting of alkali metal hydrogen sulphide, metal sulphide $Me_2S$, metal polysulphide $Me_2Sg$ and any desired combinations thereof, where Me=alkali metal, $NH_4$ or (alkaline earth metal)$_{1/2}$, and g=1.5-8.0, and optionally additionally with sulphur and/or with $H_2S$ in alcohol, **characterized in that** the $Me_2S$ or $Me_2S_g$ contains more than 10% by weight of water and the alkali metal hydrogen sulphide contains more than 3% by weight of water and additives selected from the group consisting of non-alcoholic solvents, polar, protic, aprotic, basic or acidic additives are added before or during the reaction.

2. Process for the preparation of organosilanes according to Claim 1, **characterized in that** the solvent/water mixture is removed from the crude product suspension and the resulting organosilane of the general formula I is separated off from the solid.

3. Process for the preparation of organosilanes according to Claim 1, **characterized in that** the solvent is removed from the crude product suspension, the mixture containing the organosilanes of the general formula (I) and the solid Me(Hal) is mixed with water containing at least one buffer, and the phases forming are separated.

4. Process for the preparation of organosilanes according to Claim 1, **characterized in that** an alkali metal hydrogen sulphide is used as the water-containing sulphurization reagent in the case of organosilanes of the general formula I where X=SH, m=1 and n=1.

5. Process for the preparation of organosilanes according to Claim 1, **characterized in that** $Me_2S$ and sulphur are used as the water-containing sulphurization reagent in the case of organosilanes of the general formula I where X=S and m = 3.5-4.5.

6. Process for the preparation of organosilanes according to Claim 1, **characterized in that** alkali metal hydrogen sulphides, $Me_2S$, $Me_2Sg$ and any desired combinations thereof, and optionally additionally sulphur and/or $H_2S$, are used as water-containing sulphurization reagents in the case of organosilanes of the general formula I where X=S and m = 1.5-4.5, and the reaction is carried out in a closed vessel in the absence of air.

**Revendications**

1. Procédé de préparation d'organosilanes de formule générale I

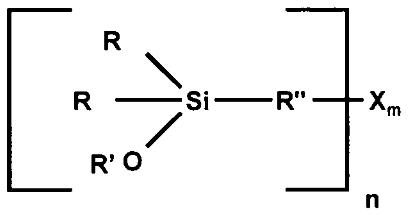

I

dans laquelle :

R est identique ou différent et représente un groupe alkyle en $C_1$-$C_8$, un groupe alcényle en $C_1$-$C_8$, un groupe aryle en $C_1$-$C_8$, un groupe $C_1$-$C_8$-aralkyle ou un groupe OR',
R' est identique ou différent et représente un groupe alkyle ou alcényle en $C_1$-$C_{24}$ monovalent, ramifié ou non ramifié, un groupe aryle, un groupe aralkyle, un atome d'hydrogène, un groupe alkyléther O-($CR^{III}_2$)-O-Alk ou O-$(CR^{III}_2)_y$-O-Alk, ou un groupe alkyl-polyéther O-$(CR^{III}_2O)_y$-Alk ou O-$(CR^{III}_2$-$CR^{III}_2$-$O)_y$-Alk, dans lequel y vaut de 2 à 20, $R^{III}$ représente indépendamment un atome d'hydrogène ou un groupe alkyle, et Alk représente un groupe hydrocarboné en $C_1$-$C_{30}$ monovalent, ramifié ou non ramifié, saturé ou insaturé, aliphatique, aromatique ou mixte aliphatique/aromatique,
R" représente un groupe hydrocarboné en $C_1$-$C_{30}$ bivalent, ramifié ou non ramifié, saturé ou insaturé, aliphatique, aromatique ou mixte aliphatique/aromatique, qui est éventuellement substitué par un groupe F-, un groupe Cl-, un groupe Br-, un groupe I-, un groupe HS-, un groupe $NH_2$- ou un groupe NHR',
X représente un atome de soufre si n vaut 2 et m est une longueur de chaîne soufrée moyenne de 1,5 à 4,5, et X représente un groupe SH si n vaut 1 et m vaut 1,

par réaction d'un (halogéno-organyl)alcoxysilane de formule II

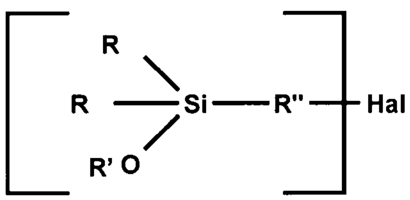

II

dans laquelle R, R' et R'' présentent les significations indiquées ci-dessus et Hal représente un atome de chlore, un atome de brome, un atome de fluor ou un atome d'iode,
avec un réactif de sulfuration choisi parmi le groupe constitué d'un hydrogénosulfure de métal alcalin, d'un sulfure de métal $Me_2S$, d'un polysulfure de métal $Me_2S_g$ et de combinaisons quelconques de ceux-ci, où Me représente un métal alcalin, un groupe $NH_4$ ou un (métal alcalino-terreux) $_{1/2}$, et g vaut de 1,5 à 8,0, et éventuellement en outre avec du soufre et/ou avec du $H_2S$ dans un alcool, **caractérisé en ce que** le $Me_2S$ ou le $Me_2Sg$ contient plus de 10 % en poids d'eau et l'hydrogénosulfure de métal alcalin contient plus de 3 % en poids d'eau, et on ajoute, avant ou durant la réaction, des additifs choisis parmi le groupe constitué de solvants non-alcooliques, et d'additifs polaires, protiques, aprotiques, basiques ou acides.

2. Procédé de préparation d'organosilanes selon la revendication 1, **caractérisé en ce que** le mélange de solvant/eau est éliminé de la suspension du produit brut et l'organosilane formé de formule générale I est séparé du solide.

3. Procédé de préparation d'organosilanes selon la revendication 1, **caractérisé en ce que** le solvant est éliminé de la suspension du produit brut, le mélange contenant l'organosilane de formule générale I et le solide Me(Hal) est mélangé avec de l'eau contenant au moins un tampon, et les phases qui se forment sont séparées.

4. Procédé de préparation d'organosilanes selon la revendication 1, **caractérisé en ce qu'**un hydrogénosulfure de métal alcalin est utilisé en tant que réactif de sulfuration contenant de l'eau dans le cas d'organosilanes de formule générale I dans laquelle X représente un groupe SH, m vaut 1 et n vaut 1.

5. Procédé de préparation d'organosilanes selon la revendication 1, **caractérisé en ce que** du $Me_2S$ et du soufre

sont utilisés en tant que réactif de sulfuration contenant de l'eau dans le cas d'organosilanes de formule générale I dans laquelle X représente un atome de soufre et m vaut de 3,5 à 4,5.

**6.** Procédé de préparation d'organosilanes selon la revendication 1, **caractérisé en ce que** des hydrogénosulfures de métaux alcalins, du $Me_2S$, du $Me_2Sg$ et des combinaisons quelconques de ceux-ci, et éventuellement en outre du soufre et/ou du $H_2S$, sont utilisés en tant que réactifs de sulfuration contenant de l'eau dans le cas d'organosilanes de formule générale I dans laquelle X représente un atome de soufre et m vaut de 1,5 à 4,5, et la réaction est effectuée dans un vase fermé à l'abri de l'air.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- GB 1102251 A
- US 5840952 A
- EP 0471164 A
- DE 10351735
- EP 1130023 A